# EUROPEAN PATENT SPECIFICATION

(11) **EP 4 123 967 B1**
(45) Date of publication and mention of the grant of the patent: **12.06.2024**
(21) Application number: 22186332.7
(22) Date of filing: 21.07.2022
(51) Int. Cl.: H04L 12/18, H04L 69/04, H04L 69/22, H04W 28/06

(54) **METHOD AND APPARATUS FOR PROCESSING MULTICAST SIGNAL**
VERFAHREN UND VORRICHTUNG ZUR VERARBEITUNG EINES MULTICAST-SIGNALS
PROCÉDÉ ET APPAREIL DE TRAITEMENT DE SIGNAL DE MULTIDIFFUSION

(30) Priority: 22.07.2021 US 202163224817 P; 04.11.2021 KR 20210150481
(43) Date of publication of application: 25.01.2023
(73) Proprietor: LG Electronics Inc., Seoul 07336 (KR)
(72) Inventor: KWON, Woosuk, 06772 SEOUL (KR); YOON, Joonhee, 06772 SEOUL (KR)
(74) Representative: Plasseraud IP

(56) References cited:
- US-A1- 2018 041 556
- US-A1- 2020 021 895
- US-A1- 2020 186 624

## Description

### [Technical Field]

The present disclosure relates to an apparatus and method for processing a multicast signal.

### [Background Art]

With the development of digital technology and communication technology, distribution and demand of audio/video-oriented multimedia contents are rapidly expanding in various areas such as broadcasting, movies, Internet and personal media. In addition, as the size of TV screens at home increases with the development of display technology, ultra high definition (UHD) broadcasting services are increasingly discussed.

Regarding a broadcast service, a multicast transmission scheme for transmitting the same content to a plurality of users is effective because it may take advantage of both unicast and broadcast. However, the conventional multicast transmission scheme is available within a single network, and cannot support a multicast service between heterogeneous networks. As a result, when a multicast reception device establishes and releases connection to different access networks, a new multicast service is required to start after the existing multicast service is terminated. In addition, when a plurality of delivery protocols are used, a protocol constituting payload on IP/UDP (Internet Protocol/User Datagram Protocol) or IP/TCP (Internet Protocol/Transmission Control Protocol) cannot be identified with a port number if it is not registered in IANA (Internet Assigned Numbers Authority)._Patent document US2020186624A1 discloses a "Broadcast Signal Transmission Apparatus, Broadcast Signal Transmission Method, Broadcast Signal Reception Apparatus and Broadcast Signal Reception Method" and patent document US2020021895A1 discloses a "Method and Device For Transmitting/Receiving Broadcast Signal".

### [Disclosure]

### [Technical Problem]

An object of the embodiments devised to solve above-described problems is to provide a transmission device, a transmission method, a reception device, and a reception method for efficiently transmitting/receiving a multicast signal.

Another object of the embodiments is to provide a transmission device, a transmission method, a reception device, and a reception method for effectively providing a multicast service between multiple networks.

Another object of the embodiments is to provide a transmission device, a transmission method, a reception device, and a reception method for efficiently transmitting/receiving media in an adaptive bitrate multicast (ABM) network based on unidirectional transmission.

Another object of the embodiments is to provide a transmission device, a transmission method, a reception device, and a reception method for efficiently transmitting/receiving signaling information for media transmission in an ABM network based on unidirectional transmission.

The technical scope of the embodiments is not limited to the aforementioned technical objects, and may be extended to other technical objects that may be inferred by those skilled in the art based on the entire contents disclosed herein.

### [Technical Solution]

The invention is defined by the appended independent claims. Dependent claims constitute embodiments of the invention.

### [Advantageous Effects]

According to embodiments, a multicast service may be provided between multiple networks.

According to an embodiment, the network control data includes at least identification information for identifying a multicast stream including the multicast service data, information for indicating whether the header compression is performed on the IP stream, and address and port information for identifying the IP stream.

According to an embodiment, the method further comprises generating third signaling information including information related to system operation. According to an embodiment, the third signaling information includes a plurality of signaling files and the third signaling information is included in at least one IP packet having a fixed IP address and a fixed port number.

According to an embodiment, a header of the at least one IP packet including the third signaling information further includes a signaling header and the signaling header includes information for identifying each of the plurality of signaling files.

According to an embodiment, the transmitting step comprises encapsulating the IP stream on which the header compression is selectively performed into a first GSE (Generic Stream Encapsulation) stream, encapsulating the first signaling information and the second signaling information into a second GSE stream, and transmitting the first GSE stream and the second GSE stream.

According to an embodiment, the first GSE stream and the second GSE stream through a different physical link.

According to embodiments, an apparatus for transmitting a multicast signal may include a header compressor configured to perform selectively header compression on an IP stream made up of IP packets including multicast service data for a multicast service, a first generator configured to generate first signaling information including information related to the header compression when the header compression is performed on the IP stream, a second generator configured to generate second signaling information including information related to the multicast service, and a transmitter configured to transmit the IP stream on which the header compression is selectively performed, the first signaling information, and the second signaling information.

According to an embodiment, the apparatus further comprises a context information extractor configured to extract context information from the header-compressed IP stream which is generated by performing the header compression on the IP stream. According to an embodiment, the first signaling information further includes the extracted context information.

According to an embodiment, the header-compressed IP stream includes at least one IR packet, at least one IR-DYN packet, and compressed packets and the context information is static chain information included in a header of the at least one IR packet.

According to an embodiment, the second signaling information includes the first signaling information and the second signaling information further includes link control data and network control data and the network control data includes at least identification information for identifying a multicast stream including the multicast service data, information for indicating whether the header compression is performed on the IP stream, and address and port information for identifying the IP stream.

According to an embodiment, the apparatus further comprises a third generator configured to generate third signaling information including information related to system operation. According to an embodiment, the third signaling information includes a plurality of signaling files and wherein the third signaling information is included in at least one IP packet having a fixed IP address and a fixed port number.

According to an embodiment, a header of the at least one IP packet including the third signaling information further includes a signaling header and the signaling header includes information for identifying each of the plurality of signaling files.

### [Advantageous Effects]

According to embodiments, a multicast service may be provided between multiple networks.

According to embodiments, a media architecture for multicast media streaming based on multiple networks may be provided, thereby enabling the same level of media service over multiple networks to which the DVB multicast ABR structure may be applied.

According to embodiments, multicast content may be received through various access methods without depending on a network to which a reception device is connected during multicast streaming.

According to embodiments, even when various devices are connected to separate networks, the same level of ABR multicast service may be provided.

According to embodiments, a transmission device, a transmission method, a reception device, and a reception method may present a media architecture for multicast media streaming based on a plurality of networks, thereby enabling the same level of media service in various networks to which a DVB multicast ABR structure is applicable. In particular, when multicast streaming is performed, multimedia content may be received using various access methods without relying on a network to which a reception device is connected. Accordingly, even when various devices are connected to separate networks, the same level of ABR multicast service may be provided.

According to embodiments, in a unidirectional delivery network such as a terrestrial or satellite broadcast network, a transmission device, a transmission method, a reception device, and a reception method may support adaptive bitrate multicast media transmission configured for application to an existing ISP network by mapping a multicast transmission session to a resource of the unidirectional delivery network. In addition, transparent transmission may be supported when the unidirectional delivery network is applied to an interface between a multicast server and a multicast gateway.

According to embodiments, in a unidirectional delivery network such as a terrestrial or satellite broadcast network, a transmission device, a transmission method, a reception device, and a reception method may transmit signaling information to support adaptive bit rate multicast media transmission configured for application to an existing ISP network. In particular, the transmission device, transmission method, reception device, and reception method according to the embodiments may provide an identification method for signaling, thereby allowing the signaling to be filtered at a gateway.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:
FIG. 1 illustrates a multicast Adaptive Bitrate (ABR) structure according to embodiments;
FIG. 2 illustrates a multicast rendezvous service-based presentation manifest acquisition process according to embodiments;
FIG. 3 shows a structure for a multicast rendezvous service according to embodiments;
FIG. 4 shows a structure for a multicast rendezvous service according to embodiments;
FIG. 5a and FIG. 5b show a flow diagram of multicast-based media reception according to embodiments;
FIG. 6 shows elements included in a URL according to embodiments;
FIG. 7 shows elements included in a URL according to embodiments;
FIG. 8 shows a multicast application scheme for 5G media streaming according to embodiments;
FIG. 9 shows a multicast streaming structure for both multicast network streaming and communication network streaming according to embodiments;
FIG. 10 shows an architecture for wireless media transmission based on multicast and broadcast in a communication network according to embodiments;
FIG. 11a and FIG. 11b illustrate an example of a multicast server configuration in each network according to the embodiments;
FIG. 12a and FIG. 12b illustrate an example of a multicast server configuration for all networks according to embodiments;
FIG. 13 illustrates an example of multiple networks to which an apparatus connects according to embodiments;
FIG. 14 illustrates an example in which a multicast server and a multicast gateway are configured in each network according to embodiments;
FIG. 15 illustrates another example in which a multicast server and a multicast gateway are configured in each network according to embodiments;
FIG. 16 illustrates an example in which the service of a single multicast server is provided for multiple heterogeneous networks, and a multicast gateway therefor is configured in each network according to the embodiments;
FIG. 17 illustrates an example in which the service of a single multicast server is provided for a plurality of heterogeneous networks, and a multicast gateway therefor configures each network according to the embodiments;
FIG. 18 illustrates an example in which all multicast rendezvous services are configured in co-located deployment when a multicast server and a multicast gateway are configured in each network according to the embodiments;
FIG. 19a and FIG. 19b illustrate an embodiment in which a device accesses various serviceable networks when a multicast server and a multicast gateway are configured in each network according to the embodiments;
FIG. 20a and FIG. 20b illustrate a structure in which a single multicast server provides a service to a plurality of heterogeneous networks, and a multicast gateway therefor is configured in each network according to the embodiments;
FIG. 21 illustrates a protocol configuration for ABR multicast according to embodiments;
FIG. 22 illustrates an embodiment of a protocol that may be configured in a reception device to access a plurality of networks according to the embodiments;
FIG. 23 illustrates a protocol according to embodiments;
FIG. 24 illustrates a configuration of services and service-related information according to embodiments;
FIG. 25 illustrates a method of generating and transmitting a service list and presentation manifest for ABR multicast according to embodiments;
FIG. 26 illustrates service list and presentation manifest management according to embodiments;
FIG. 27 shows a service list according to embodiments;
FIG. 28 shows a multicast session according to embodiments;
FIG. 29 shows elements included in a Request URL of an HTTP message according to embodiments;
FIG. 30 shows information included in a Redirect URL of a Location response header according to embodiments;
FIG. 31a and FIG. 31b illustrate multiple content providers according to embodiments;
FIG. 32a and FIG. 32b illustrate multiple service providers according to embodiments;
FIG. 33 illustrates an MABR network configuration for unidirectional delivery according to embodiments;
FIG. 34 illustrates another MABR network configuration for unidirectional delivery according to embodiments;
FIG. 35 illustrates an interface configuration according to embodiments;
FIG. 36 illustrates an interface configuration according to embodiments;
FIG. 37 illustrates a link control data (LCD) configuration according to embodiments;
FIG. 38 illustrates a link related descriptor according to embodiments;
FIG. 39 illustrates network control data (NCD) according to embodiments;
FIG. 40 illustrates a multicast transport session according to embodiments;
FIG. 41 illustrates a mABR IPv6 transport session descriptor according to embodiments;
FIG. 42 illustrates a mABR IPv4 transport session descriptor according to embodiments;
FIG. 43 illustrates a GSE packet structure according to embodiments;
FIG. 44 shows an exemplary syntax structure of IP_multicast_list_descriptor() according to embodiments;
FIG. 45 illustrates an example of a syntax structure of IPv6_multicast_list_descriptor() according to embodiments;
FIG. 46 illustrates an example of a mapping structure of NCD and an LCD according to embodiments;
FIG. 47a and FIG. 47b is a block diagram illustrating a configuration of an entire system for multicast transmission/reception according to embodiments;
FIG. 48a and FIG. 48b is a block diagram illustrating a configuration of an entire system for multicast transmission/reception according to other embodiments;
FIG. 49 shows an exemplary syntax structure of an ROHC-U descriptor according to embodiments;
FIG. 50a and FIG. 50b are a configuration block diagram illustrating a GSE system according to embodiments;
FIG. 51 is a table showing examples of ROHC profiles for DVB-GSE according to embodiments;
FIG. 52 illustrates an example of an IP packet containing signaling information according to embodiments;
FIG. 53 shows an exemplary syntax structure of a binary signaling header according to embodiments;
FIG. 54 is a table showing a definition of values allocated to a table ID of a binary signaling header according to embodiments;
FIGS. 55 and 56 show an exemplary syntax structure of a multicast gateway configuration transport session according to embodiments;
FIG. 57 is a diagram illustrating an exemplary logical session configuration in an M interface according to embodiments;
FIG. 58 is a diagram illustrating another exemplary logical session configuration in an M interface according to embodiments;
FIG. 59 is a diagram illustrating another exemplary logical session configuration in an M interface according to embodiments;
FIG. 60 illustrates a multicast transmission method according to embodiments; and
FIG. 61 illustrates a multicast reception method according to embodiments.

### [Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

A multicast signal processing method and apparatus according to the embodiments may include a multicast signal transmission method, a multicast signal reception method, a multicast signal transmission device, and a multicast signal reception device, and may be referred to simply as a method/apparatus according to the embodiments.

The method/apparatus according to the embodiments relates to a method of media delivery in an adaptive bitrate multicast network based on unidirectional delivery.

The method/device according to embodiments relates to a method of signaling for media delivery in an adaptive bitrate multicast network based on unidirectional delivery.

The method/device according to embodiments relates to a configuration of signaling for adaptive bit rate multicast media transmission in a unidirectional delivery network and an identification method thereof.

Media according to embodiments may be referred to as a media signal, media data, or the like, and may be construed as a term corresponding to a service or service data or including a service.

Embodiments propose an architecture for media streaming in an Internet Protocol (IP)-based media delivery system.

Embodiments propose a media streaming architecture for multicast application when an IP-based media delivery system is configured with a plurality of networks.

Embodiments propose an ABR multicast method used when an IP-based media delivery system is configured with a plurality of networks.

Embodiments propose a service list reception method (flow) and an operation of a device (multicast signal processing apparatus according to embodiments) when an IP-based media delivery system is configured with a plurality of networks.

Embodiments propose signaling information necessary for a receiver (device) on a plurality of networks.

Embodiments propose a multicast ABR architecture according to the configuration of a content provider and a service provider corresponding to a multicast signal processing apparatus.

Embodiments provide a media architecture for multicast media streaming based on a plurality of networks. Thus, the DVB multicast ABR structure may be applied and the same level of media service is available in multiple networks. In particular, during multicast streaming, multicast content may be received by various access methods without depending on the network to which the reception device is connected.

Therefore, when various devices are connected to separate networks, the same level of ABR multicast service may be provided.

The method/device according to the embodiments may provide a multicast transport session mapping method for adaptive bitrate multicast media delivery in a unidirectional delivery network.

The method/device according to the embodiments may map a multicast transport session to a resource of a unidirectional delivery network in order to support adaptive bitrate multicast media delivery configured for application to an existing Internet service provider (ISP) network in a unidirectional delivery network such as terrestrial broadcast or satellite broadcast.

When the unidirectional delivery network is applied to an interface between the multicast server and the multicast gateway, the method/device according to the embodiments may support transparent transmission.

The method/device according to embodiments may transmit signaling information to support adaptive bitrate multicast media transmission configured for application to an existing ISP network in a unidirectional delivery network such as terrestrial broadcast or satellite broadcast network.

The method/device according to embodiments may provide an identification method for signaling to filter signaling at the gateway.

With the diversity of networks, as various devices access a network, it is necessary to provide media streaming to various devices and multiple users. In such an environment, if transmission is performed only in a unicast manner for all streaming sessions, the quality of the media streaming service as well as other services using the network may deteriorate due to an increase in the load on the network. Therefore, multicast-efficient multicast streaming transmission is needed. Currently, the ABR multicast structure defined in DVB is mainly defined when the multicast providing network is a single network. In order to provide the same service over various networks including the 5G network (wireless network), it is necessary for the device to operate smoothly over each network. To this end, it may be necessary to update the interface and architecture. In addition, if excessively many network changes are made for the existing service provider to support ABR multicast, the actual ABR multicast service may not be provided due to implementation difficulties and cost issues.

Multicast technology is providing services in various network environments for universal media streaming, and transmission is possible in most IP-based networks. In addition, in order to provide the ABR multicast service using the same function for a plurality of heterogeneous networks, a function and architecture adapted to each network are required. When the ABR multicast service is provided over multiple networks, it is necessary to define the transmission of the service list and the management plan therefor in order to provide continuity of the service from the user perspective.

In the present disclosure, a description will be given of an architecture allowing the DVB ABR multicast structure to be provided over various networks, and an interface therefor. Also, a description will be given of a method of providing a service list over a plurality of networks and an interface and flow for processing the service list in a device.

In addition, the method/apparatus according to the embodiments may provide an interface and signaling flow for linking a multicast transport session to a broadcast stream in order to transmit a media object of DVB ABR multicast in a unidirectional delivery network, such as terrestrial broadcast and satellite broadcast links defined in the DVB standard.

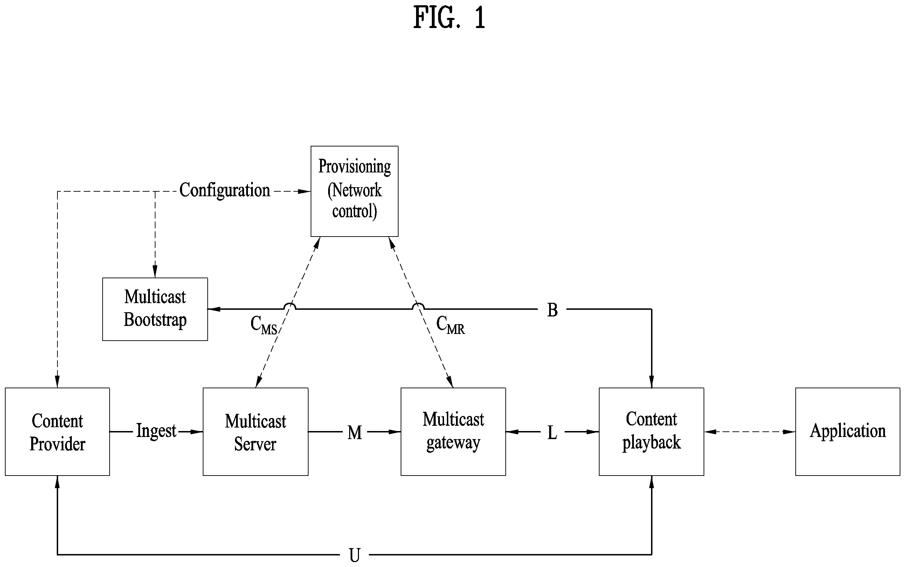

FIG. 1 illustrates a multicast Adaptive Bitrate (ABR) structure according to embodiments.

The multicast signal processing method/apparatus according to the embodiments may transmit media contents by multicast based on the structure shown in FIG. 1. The media contents may be referred to as multicast media, multicast media data, service data, or the like. Each component in FIG. 1 corresponds to hardware, software, a processor, and/or a combination thereof.

The interfaces in FIG. 1 may be defined as follows.

L: A unicast HTTP(S) interface between a content playback function and a multicast gateway.

B: A bootstrap unicast HTTP(S) interface between the content playback function and a multicast bootstrap function. It may be used to request an initial presentation manifest.

M: An interface for the multicast server to transmit multicast IP contents and for the multicast gateway to receive the contents.

U: An interface for the content playback function to receive media content directly from the content provider by unicast.

Ingest: An interface to provide media contents to the multicast server.

CMS: A control interface for configuration of the multicast server.

CMR: A control interface for configuration of the multicast gateway.

Configuration: A control interface for exchange of configuration information between the content provider, the provisioning, and the multicast bootstrap function.

The modules in FIG. 1 may be defined as disclosed below. Each module may correspond to hardware, software, a processor, and/or a combination thereof.

Content Provider: Creates media content or stores created media content, and delivers the content to users over a network. It may use transmission schemes such as multicast and unicast to transmit media content to users, and provides media content data and control information to the multicast server via the ingest interface for multicast transmission. The media content data may be packaged in a format such as DASH (Dynamic Adaptive Streaming over HTTP) or HLS (HTTP Live Streaming), and may configure a presentation manifest according to the packaging format.

Multicast Server: receives media content from the content provider and transmits the same to the multicast gateway via the interface M using the IP multicast transport scheme. In this case, some control information may be transmitted as well. As the multicast protocol, ROUTE (Real-time Object delivery over Unidirectional Transport), FLUTE (File Delivery over Unidirectional Transport), QUIC (Quick UDP Internet Connections), RTP (Real Time Protocol), and the like may be considered.

Multicast Gateway: Receives a packaged content segment transmitted by multicast, and provides the same to the content playback function via the interface L in a manner of HTTP(S) or the like. To this end, the content segment is cached. The content segment may represent segmented media data. The segmented media data may be stored (cached).

Provisioning (Network Control): Provides configuration information about a network and a multicast streaming session to the multicast server and the multicast gateway.

Multicast Bootstrap: May target and process address information (url or address) for the content playback function to access first via the interface B. It processes an initial request for the presentation manifest received from the content playback function via the reference point B. In the case of multicast, redirection information for receiving the manifest via the interface L is provided. In the case of unicast, redirection information for receiving the manifest via the interface U is provided. A multicast rendezvous service function may be performed in the DVB ABR multicast structure.

Content Playback: The content playback function manages content request, reception, decoding, presentation, and the like. Unicast transport via the interface L may be considered.

Application: The application controls the content playback function based on user input. For example, it may be a built-in control application (EPG application) of a TV or set-top box, or a third-party application provided by the content provider. The interface used by the application to control the content playback may be implemented as a separate API or the like according to each device.

The multicast signal processing method/apparatus according to the embodiments may include a multicast server and a multicast gateway, and further include a content provider, provisioning and a multicast bootstrap function, in terms of an operation of transmitting media.

The multicast signal processing method/apparatus according to the embodiments may include a content playback function and an application in terms of an operation of receiving media.

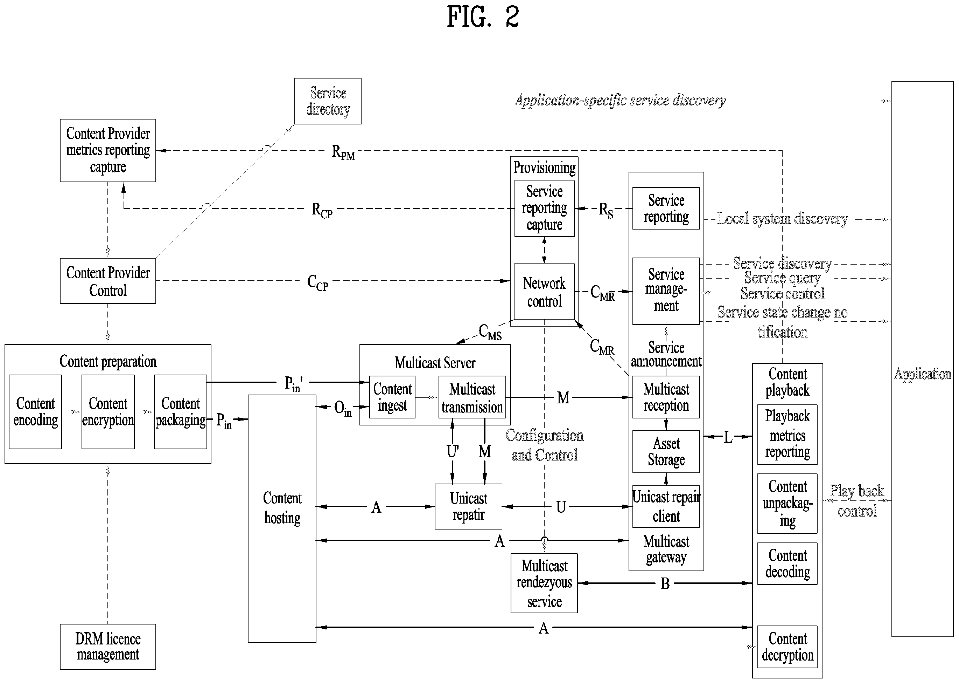

FIG. 2 illustrates a multicast rendezvous service-based presentation manifest acquisition process according to embodiments.

The multicast signal processing method/apparatus according to the embodiments of FIG. 1 may carry out a multicast rendezvous service as shown in FIG. 2. Each component in FIG. 2 corresponds to hardware, software, a processor, and/or a combination thereof.

The content playback function makes a request for contents to the multicast gateway when receiving multicast. In the case of unicast reception, the content playback function receives content from content hosting. To this end, in order to acquire a presentation manifest for receiving media contents, the initial content playback function may access a multicast rendezvous service first via a reference point B. The multicast rendezvous service may provide the content playback function with a URL from which a presentation manifest may be appropriately acquired according to multicast and unicast.

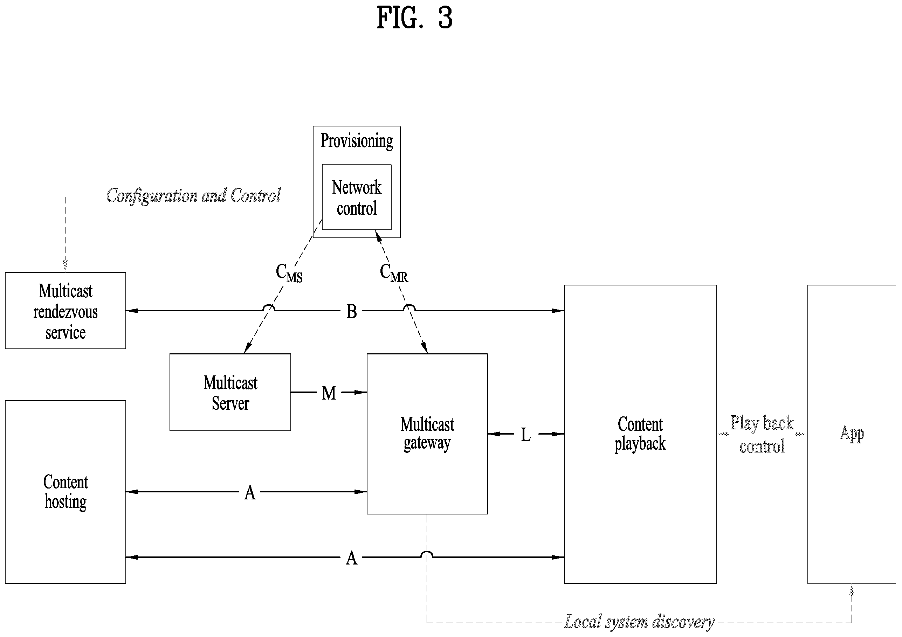

FIG. 3 shows a structure for a multicast rendezvous service according to embodiments.

In the structure of FIGS. 1 and 2, the multicast method/apparatus according to the embodiments may execute a rendezvous service as shown in FIG. 3. Each component in FIG. 3 corresponds to hardware, software, a processor, and/or a combination thereof.

Deployment of Multicast Rendezvous Service:
The multicast rendezvous service may be divided into regular deployment and co-located deployment depending on whether HTTP(s) and unidirectional transmission are supported.

The content playback function of the multicast signal processing apparatus according to the embodiments may acquire manifest url information and perform configuration for media reception through the following operations.

Regular deployment: The multicast rendezvous service is configured in a network and managed by a system operator.

Co-located deployment: The multicast rendezvous service is implemented in the same device as the multicast gateway

### Regular deployment

Referring to FIG. 3, the multicast rendezvous service corresponds to an element positioned in a network and managed and controlled by a system operator.

The content playback function may acquire manifest url information for reception of contents from the multicast rendezvous service via the reference point B when making an initial access to the contents to be received. To this end, the following configuration may be implemented.

A configuration for a set of basic parameters (e.g., the endpoint address of a multicast gateway configuration transport session) may be applied to the multicast gateway. For this configuration, an in-band multicast gateway configuration method may be used.

A configuration for a set of currently provisioned multicast sessions may be applied to the multicast gateway via a reference point CMR or a reference point CMS and M. For this configuration, out-of-band pushed configuration, out-of-band pulled configuration, and Just-in-time configuration methods as well as the in-band multicast gateway configuration method may be applied.

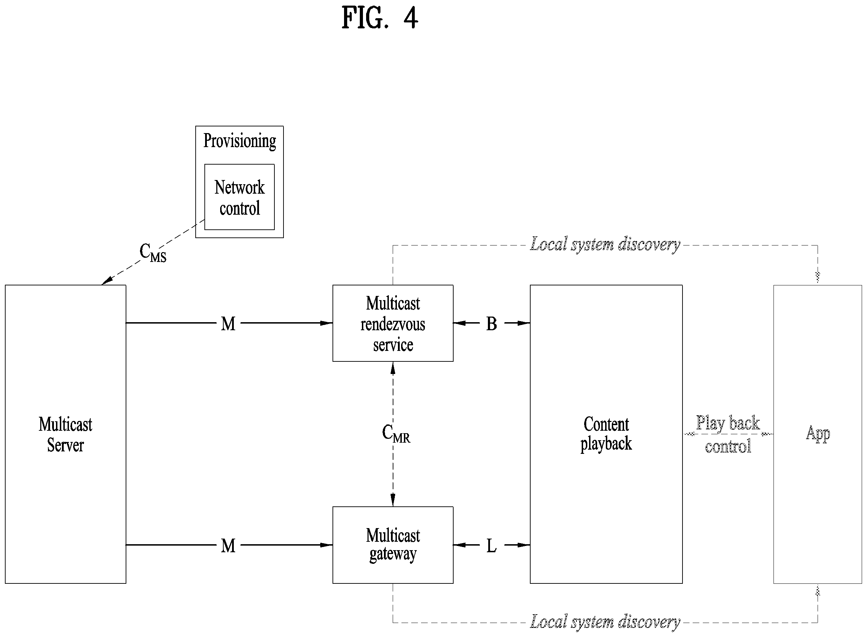

FIG. 4 shows a structure for a multicast rendezvous service according to embodiments.

FIG. 4 illustrates co-located deployment in FIG. 3.

### Co-located deployment:

As shown in FIG. 4, a multicast rendezvous service may be configured in the same device as the multicast gateway (the multicast processing apparatus according to embodiments). It may be mainly used when the multicast ABR network is configured in unidirectional deployment. Each component in FIG. 4 corresponds to hardware, software, a processor, and/or a combination thereof.

The content playback function may acquire manifest url information for reception of contents from the multicast rendezvous service via the reference point B when making an initial access to the contents to be received. To this end, the following configuration may be implemented.

A configuration for a set of basic parameters (e.g., the endpoint address of a multicast gateway configuration transport session) may be applied to the multicast rendezvous service.

A configuration for a set of currently provisioned multicast sessions may be applied to the multicast gateway via the reference point M.

In this case, an in-band multicast gateway configuration method may be used for each configuration.

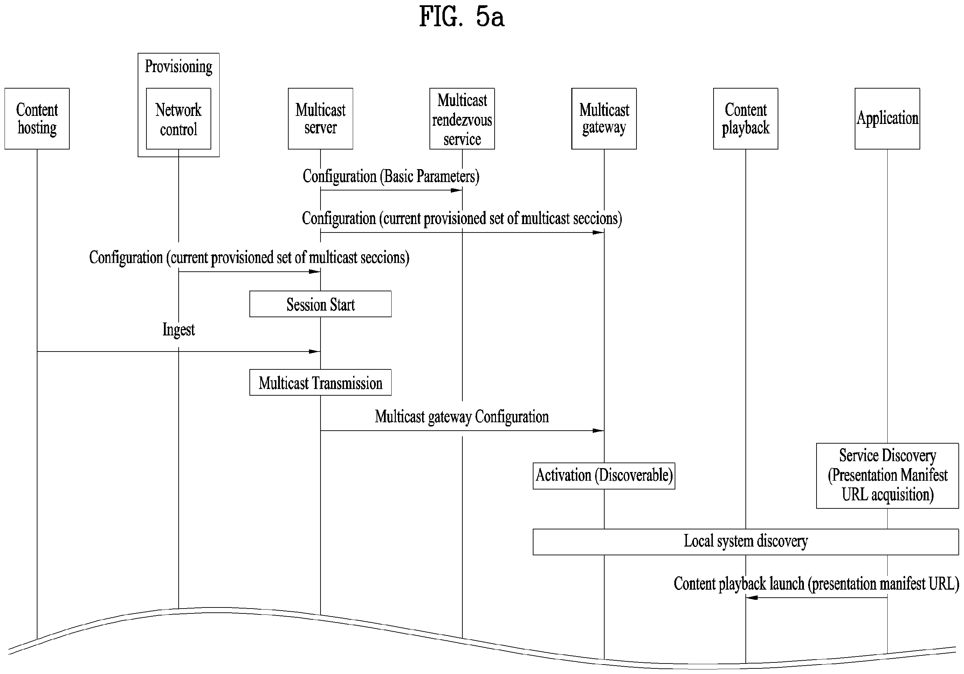

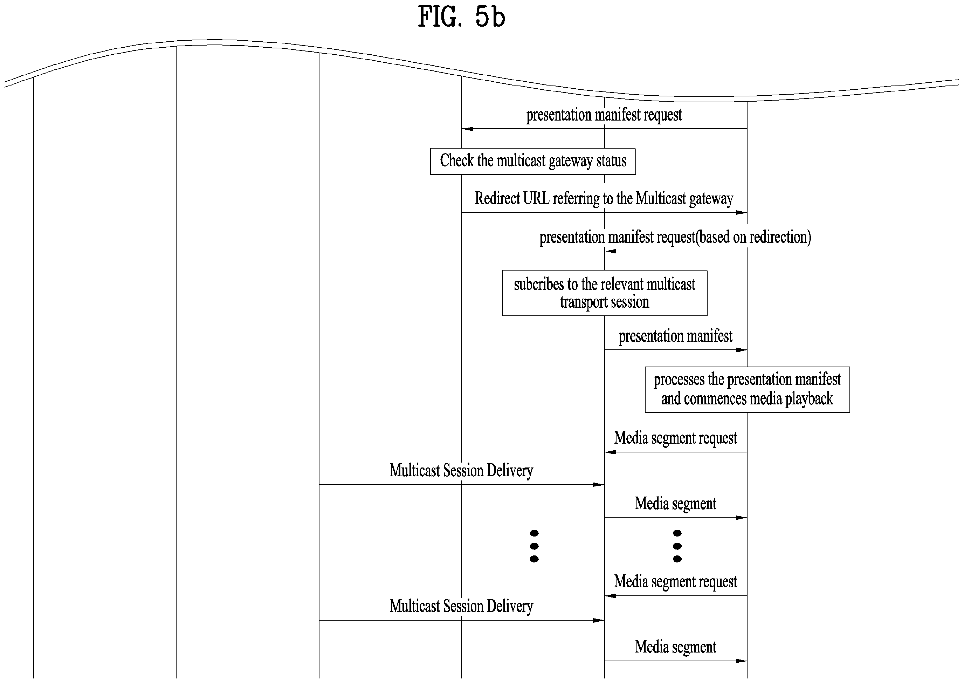

FIG. 5a and FIG. 5b show a flow diagram of multicast-based media reception according to embodiments.

The multicast signal processing method/apparatus (FIGS. 1 to 4) according to the embodiments may receive multicast media based on the following flow diagram.

Multicast operation according to embodiments:
When a user or the multicast signal processing apparatus selects multicast contents to be received, the application may acquire a URL for requesting an initial presentation manifest through a service directory, or the like. Here, the URL indicates a multicast rendezvous service.

The application controls the content playback function to start an operation for content reception. In this case, it may deliver the URL for the multicast rendezvous service.

The content playback function makes a request for a presentation manifest to the multicast rendezvous service via the reference point B using the URL acquired from the application.

The multicast rendezvous service checks the status of the multicast gateway and transmits, when the service for the requested presentation manifest is defined in the multicast configuration, the redirection URL for the multicast gateway to the content playback function. In this case, a multicast session configuration may be contained in the transmitted redirection message.

Upon receiving the redirection message, the content playback function makes a request for a presentation manifest to the multicast gateway according to the redirection.

When the multicast gateway has a pre-cached presentation manifest, it transmits the presentation manifest to the content playback function.

When the multicast gateway has no cached presentation manifest, it may obtain a presentation manifest from the content hosting function via reference point A, and transmit the same to the content playback function.

The content playback function may receive a media segment for the contents via the multicast gateway based on the received presentation manifest.

In this operation, the syntax of the Request URL of the HTTP message sent by the content playback function to the multicast rendezvous service is configured as follows:
http[s]://<Host>/<ManifestPath>[?<field>=<value>[&<field>=<value>]*]

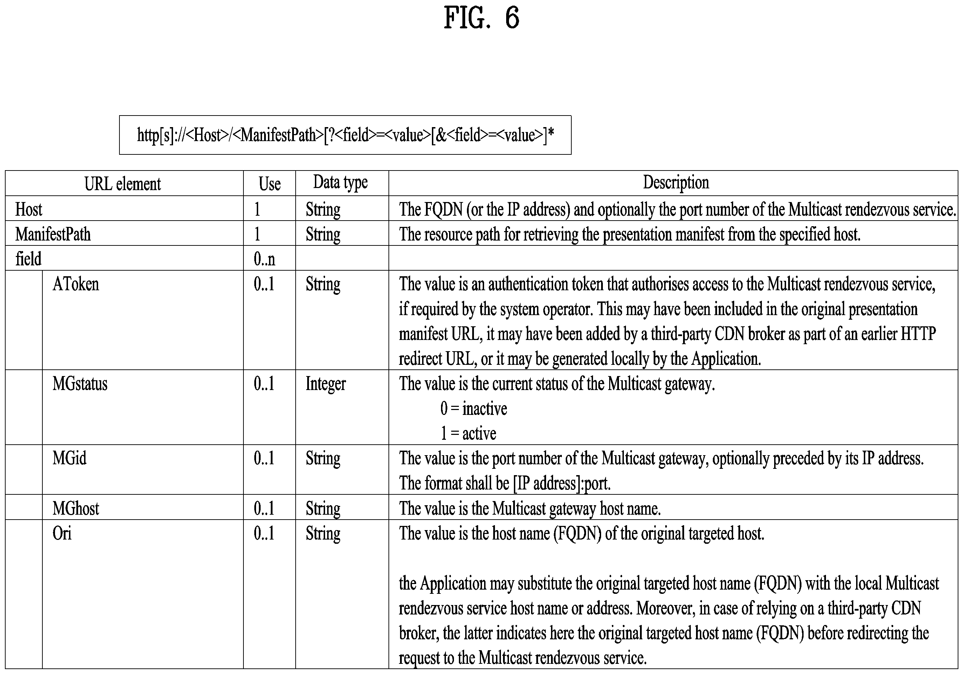

FIG. 6 shows elements included in a URL according to embodiments.

The elements included in the URL are shown in FIG. 6.

Host: FQDN (Fully Qualified Domain Name or IP address) and optionally the port number of the multicast rendezvous service.

ManifestPath: The resource path for retrieving the presentation manifest from the specified host.

AToken: The value is an authentication token that authorizes access to the multicast rendezvous service, if required by the system operator. This may have been included in the original presentation manifest URL, or it may have been added by a third-party CDN broker as part of an earlier HTTP redirect URL, or it may be generated locally by the application.

MGstatus: The value is the current status of the multicast gateway: 0 = inactive; 1 = active.

MGid: The value is the port number of the multicast gateway, optionally preceded by its IP address. The format is [IP address]:port.

MGhost: The value is the multicast gateway host name.

Ori: The value is the host name (FQDN) of the original targeted host.

The application may substitute the original targeted host (FQDN) with the local multicast rendezvous service host name or address. Moreover, in case of relying on a third-party CDN broker, the latter may indicate here the original targeted host name (FQDN) before redirecting the request to the multicast rendezvous service.

When the multicast rendezvous service receives this request URL, it may send a 307 Temporary Redirect response. Here, the syntax of the Redirect URL in the Location response header is configured as follows:
http[s]://<Host>[/session ID]/<ManifestPath> [?conf=<multicast session.

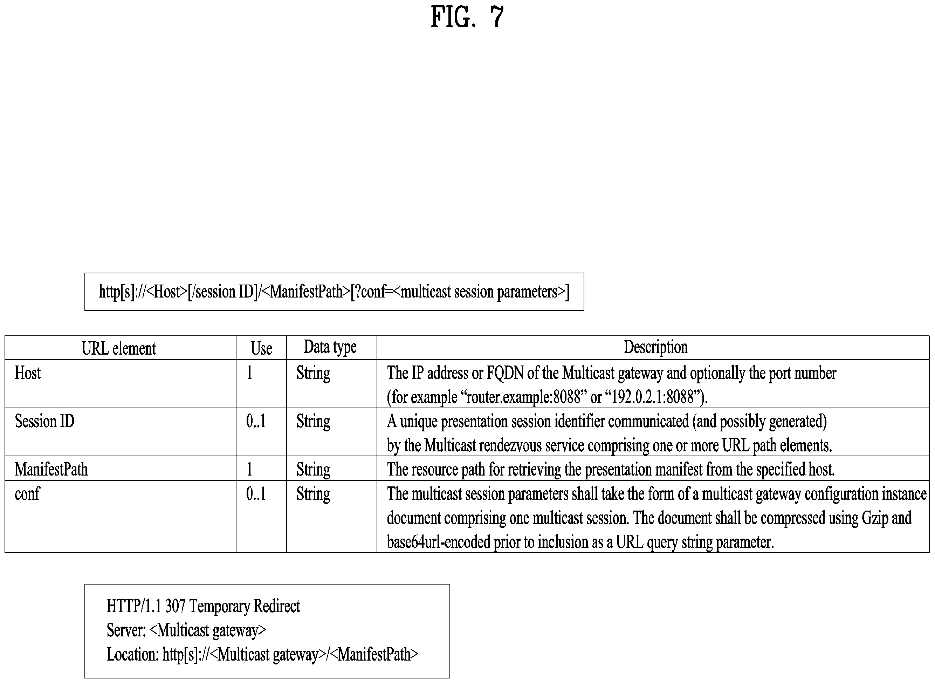

FIG. 7 shows elements included in a URL according to embodiments.

Elements included in the URL are shown in FIG. 7.

Host: The IP address or FQDN of the multicast gateway and optionally the port number (e.g., "router.example:8088" or "192.0.2.1:8088").

Session ID: A unique presentation session identifier communicated and possibly generated by the multicast rendezvous service including one or more URL path elements.

ManifestPath: The resource path for retrieving the presentation manifest from the specified host.

conf: The multicast session parameters shall take the form of a multicast gateway configuration instance document comprising one multicast session.

The document may be compressed using Gzip and base64url-encoded prior to inclusion as a URL query string parameter.

When the presentation manifest is related to the multicast session in the multicast session configuration (the service is transmittable by multicast), the multicast rendezvous service may redirect the request to the multicast gateway as follows:
HTTP/1.1 307 Temporary Redirect
Server: <Multicast gateway>
Location: http[s]://<Multicast gateway>/<ManifestPath>

The URL corresponding to the Location field in the HTTP header may include a query parameter for piggybacking a multicast gateway configuration instance document including a session identifier and a multicast session corresponding to the requested presentation manifest.

The multicast ABR according to the embodiments may be connected to a 5G network (communication network).

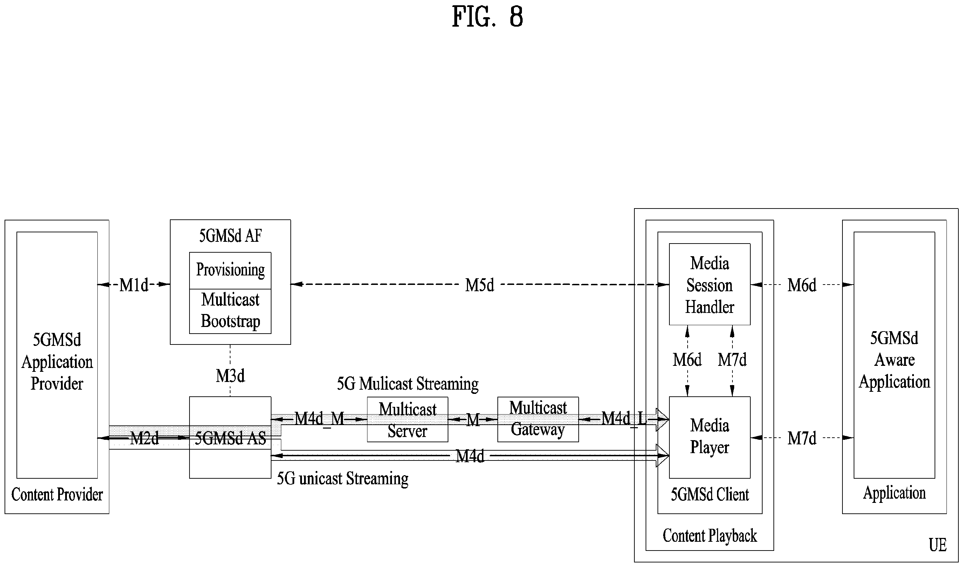

FIG. 8 shows a multicast application scheme for 5G media streaming according to embodiments.

The multicast signal processing method/apparatus according to the embodiments may support multicast in a 5G media streaming structure (Multicast ABR architecture).

FIG. 8 shows an embodiment of a 5G media streaming architecture to which the multicast ABR architecture is applied. That is, the 5G structure and the DVB structure may be combined with each other.

The 5G application provider (5GMSd Application Provider) may be the same as the content provider of the multicast ABR shown in FIGS. 1 to 6, or may be a part of the content provider. The application for receiving 5G media streaming (i.e., 5GMSd Aware Application) may be the same as the Multicast ABR Application of FIGS. 1 to 6, or may be a part of the Application. The client (5GMSd Client) may be the same as the content playback function of the multicast ABR of FIGS. 1 to 5, or may be a part of the content playback function. A controller (5GMSd AF) may include a provisioning function including a network control sub function of the multicast ABR shown in FIGS. 1-6, and a multicast bootstrap function including a multicast rendezvous service.

Access information (presentation manifest url) for initial multicast transmission may be requested and received by the 5GMSd client via the interface M5d, which may correspond to the interface B of the multicast ABR shown in FIGS. 1 to 6.

Unicast streaming may be transmitted from the 5GMSd AS to the media player via the interface M4d. In this operation, HTTP(s) may be used.

The multicast server and multicast gateway may be configured for multicast transmission between the 5GMSd AS and the media player. Since data is communicated between the multicast gateway and the media player through 5G RAN, only unicast may be supported.

For multicast transmission, interfaces M4d_M and M4d_L may be defined as follows.

M4d_M - Multicast streaming may be transmitted from 5GMSd AS to the multicast server via the interface M4d_M, and the interface M defined in the multicast ABR may be used between the multicast server and the multicast gateway. As another embodiment, the multicast server function may be included in the 5GMS AS. In this case, the interface M4d_M may be omitted. As the multicast protocol, a protocol defined in the interface M may be used.

M4d_L - The M4d_L interface may be used between the multicast gateway and the media player. Here, M4d_M and M4d_L may use a protocol based on HTTP(s). From the perspective of DVB Multicast ABR, M4d_M may correspond to the ingest interface, and M4d_L may correspond to the interface L.

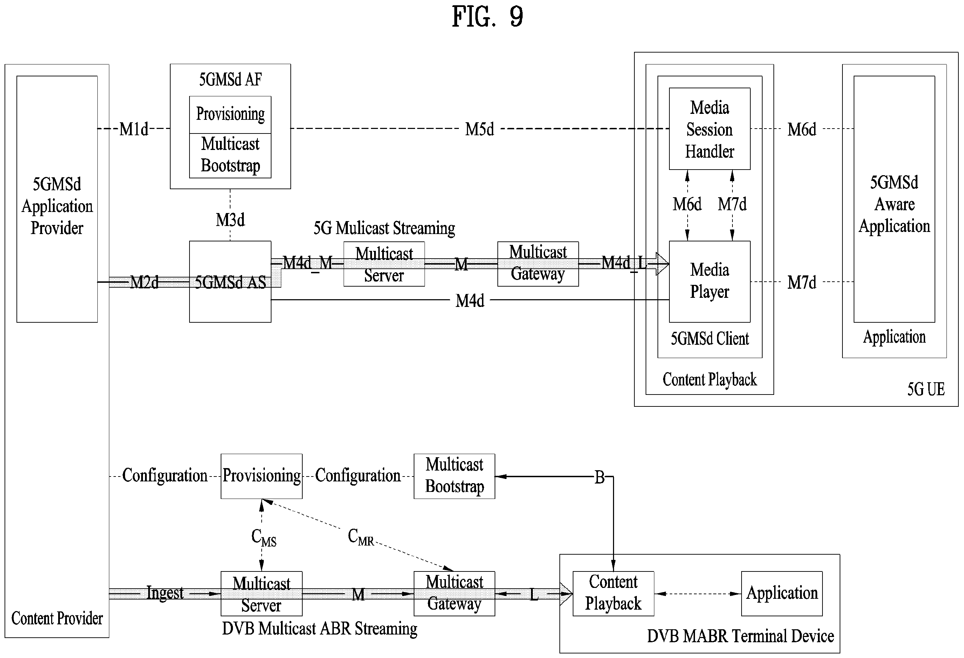

FIG. 9 shows a multicast streaming structure for both multicast network streaming and communication network streaming according to embodiments.

The multicast signal processing method/apparatus according to the embodiments may transmit/receive and process media contents when multicast streaming is simultaneously provided in the DVB multicast ABR network and 5G media streaming. Each component in FIG. 9 corresponds to hardware, software, a processor, and/or a combination thereof.

There may be a plurality of networks in which multicast streaming is provided. When a 5G network is one of such networks, a use case of simultaneous provision of a multicast service through the 5G mobile network and another other IP network from the same content provider according to the embodiments may be considered. FIG. 9 illustrates an embodiment in which multicast streaming is provided through the 5G network and the DVB multicast ABR network simultaneously.

Provisioning for multicast session configuration may be separately defined according to characteristics of each network. The multicast interface M via which media is delivered from the multicast server to the multicast gateway may be configured in the same way.

In this case, the interfaces M2d and M4d_M defined in the 5G network may be the same as the Ingest interface. For this reason, the content provider may maintain the same protocol for transmission over each network.

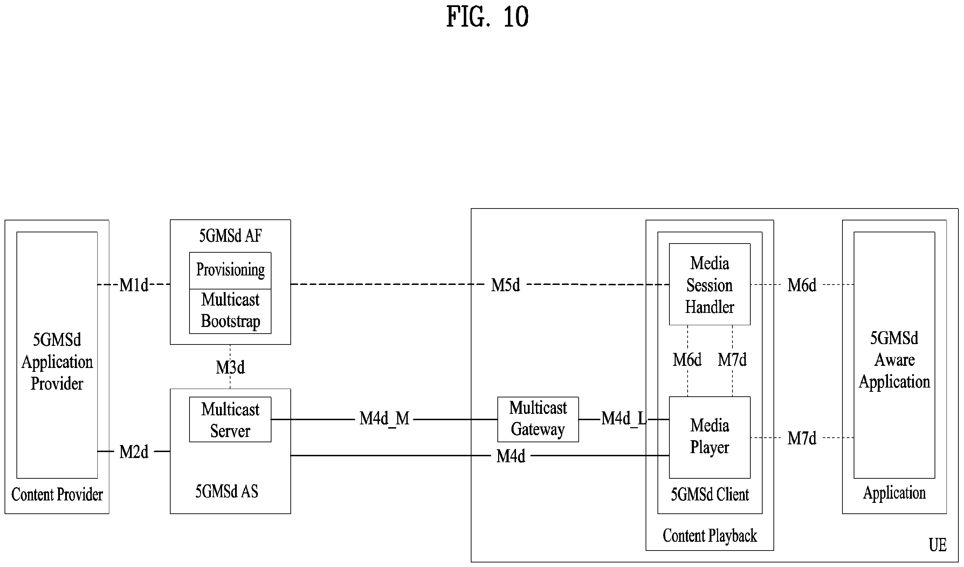

FIG. 10 shows an architecture for wireless media transmission based on multicast and broadcast in a communication network according to embodiments.

When wireless multicast and broadcast transmissions are supported in the 5G RAN, a multicast gateway may be configured inside the 5G UE. Each component in FIG. 10 corresponds to hardware, software, a processor, and/or a combination thereof.

The 5GMSd application provider may be the same as the content provider of the multicast ABR or may be a part of the content provider. The 5GMSd aware application for receiving the 5G media streaming may be the same as the multicast ABR application or may be a part of the application. The 5GMSd client may be the same as the content playback function of Multicast ABR, or may be a part of the content playback function. The 5GMSd AF may include a provisioning function including a network control sub function of the multicast ABR, and a multicast bootstrap function including a multicast rendezvous service.

Access information (presentation manifest url) for initial multicast transmission may be requested and received by the 5GMSd client via the interface M5d, which may correspond to the interface B of the multicast ABR.

Unicast streaming may be transmitted from the 5GMSd AS to the media player via the interface M4d. In this operation, HTTP(s) may be used.

The multicast server and multicast gateway may be configured for multicast transmission between the 5GMSd AS and the media player. In this case, the interface M4d_L between the multicast gateway and the media player may be implemented as an interface inside the UE.

The interface M4d_M between the multicast server and the multicast gateway may be defined as the same interface as the interface M defined in the multicast ABR. Therefore, as the multicast protocol, the protocol defined in the interface M may be used.

The method/apparatus/processor (multicast signal processing method/apparatus) according to the embodiments may perform the above-described network control operations, and provides a media architecture for 5G network-based multicast media streaming based on the related signaling information. With the operations according to the embodiments, multicast content may be received by various access methods without depending on a network to which a reception device is connected during multicast streaming. In addition, by presenting a multicast transmission structure, network resources may be efficiently used in transmitting the same content to multiple receivers.

Embodiments include a MABR (Multicast Adaptive Bit Rate) architecture based on multiple IP networks.

The multiple IP networks according to the embodiments may include various networks such as communication and broadcasting networks.

In order for the ABR multicast structure and interfaces according to the embodiments to be applied to each network in order to be actually provided, an additional architecture configuration and an application method for corresponding interfaces will be described. Each component included in the architecture according to the embodiments may correspond to hardware, software, a processor, and/or a combination thereof.

FIGS. 8 to 10 correspond to the multicast signal processing method/apparatus according to the embodiments shown in FIGS. 1 to 6.

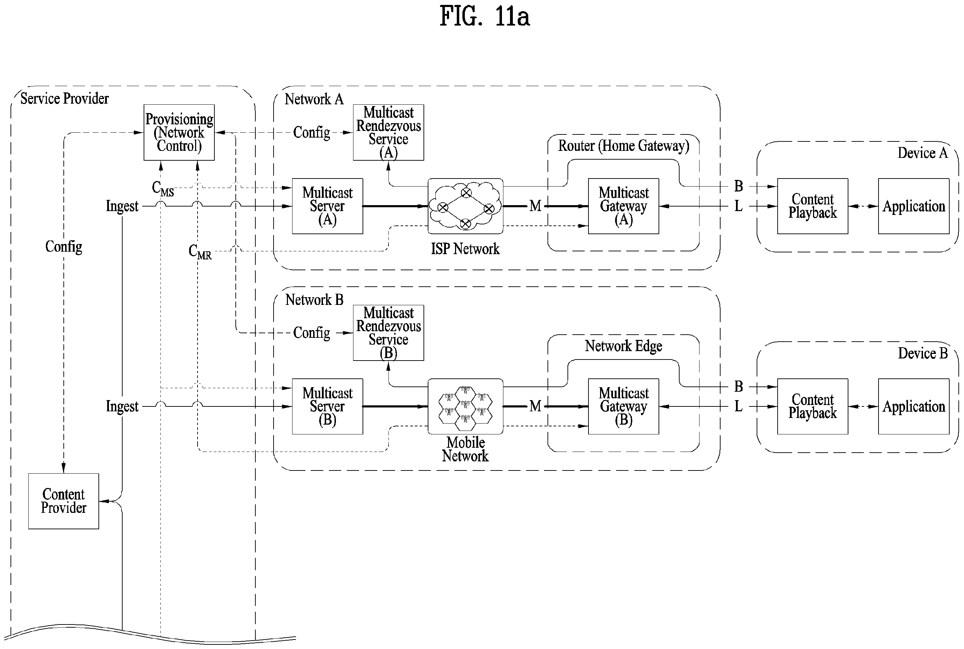

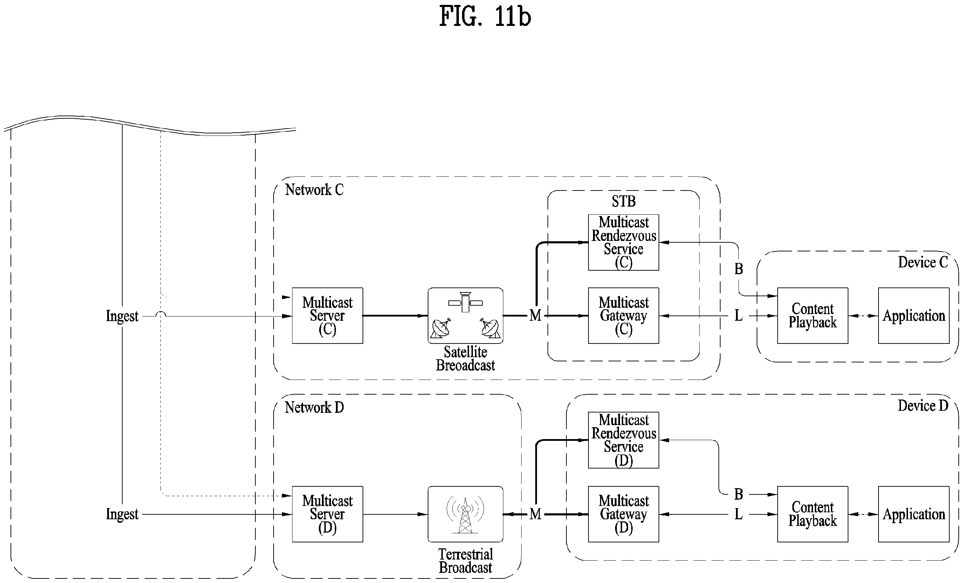

FIG. 11a and FIG. 11b illustrate an example of a multicast server configuration in each network according to the embodiments.

FIG. 11a and FIG. 11b show an embodiment of a structure in which a multicast server is configured for each network to provide an ABR multicast service. This embodiment corresponds to a case where the multicast service server is mainly deployed by the network operator. The transmission/reception device according to the embodiments may provide an ABR multicast service based on the multicast server structure shown in the figure. Each component in FIG. 11a and FIG. 11b correspond to hardware, software, a processor, and/or a combination thereof.

When the ABR multicast service is provided through multiple heterogeneous networks, deployment of a multicast gateway to receive the ABR multicast may be implemented separately.

Multicast gateway (A) - When a multicast gateway is configured for the ABR multicast service in the ISP network, it may be configured within a router or home gateway provided by the ISP operator.

Multicast gateway (B) - When a multicast gateway is configured for the ABR multicast service in a mobile network such as a 5G system, it may be configured within the edge of the mobile network.

Multicast gateway (C) - When a multicast gateway is configured for the ABR multicast service in the satellite broadcasting network, it may be configured within an STB (Setop box) capable of receiving satellite broadcasting.

Multicast gateway (D) - When a multicast gateway is configured for the ABR multicast service in terrestrial broadcast network, it may be configured within a broadcast receiver.

Even when the ABR multicast service is provided over multiple heterogeneous networks, the ABR multicast function may be configured independently for each network.

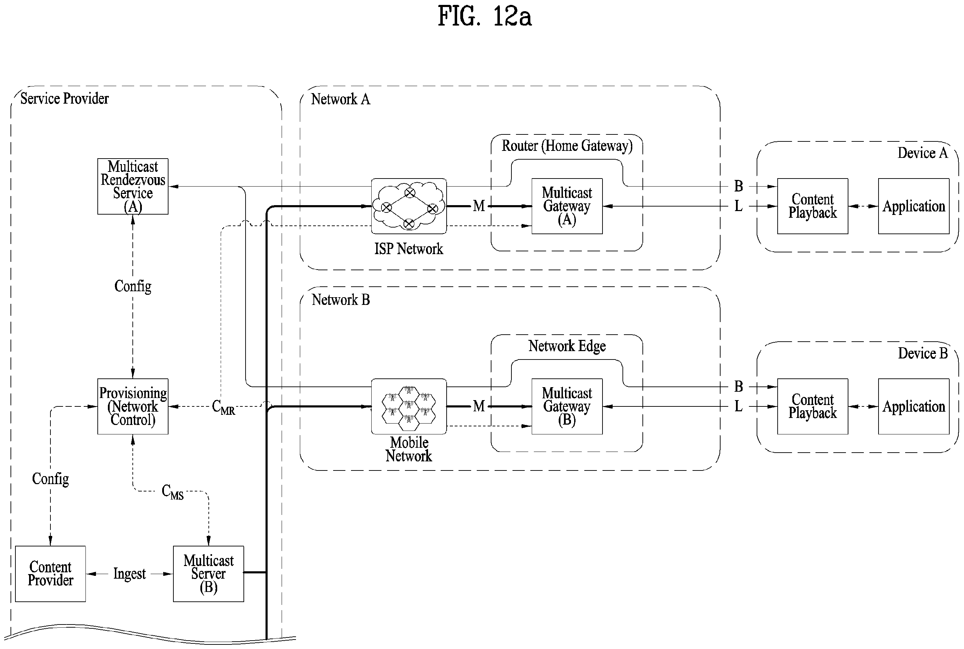

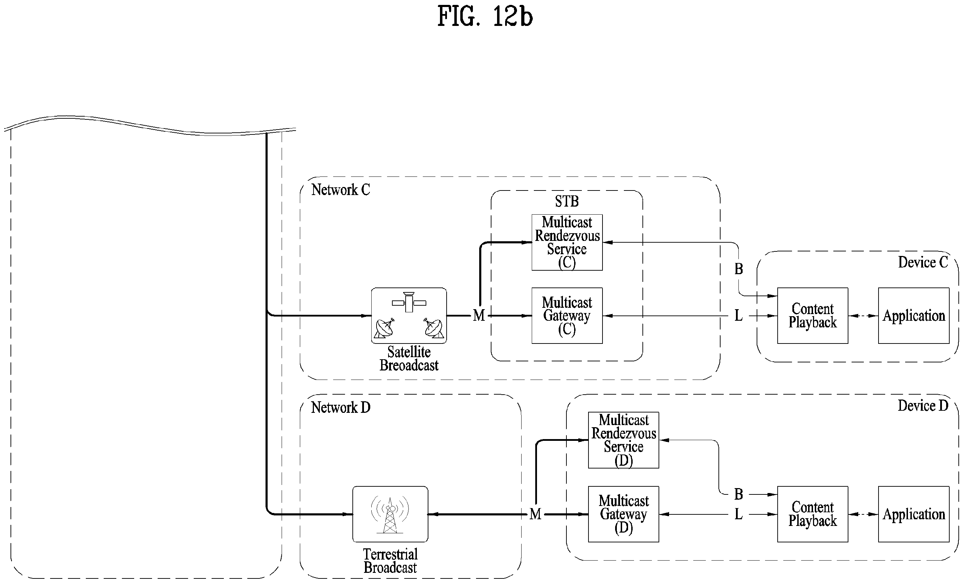

FIG. 12a and FIG. 12b illustrate an example of a multicast server configuration for all networks according to embodiments.

The figure illustrates an embodiment of a structure in which a single multicast server provides an ABR multicast service over multiple heterogeneous networks. The embodiment corresponds to a case where the multicast service server is mainly deployed by the content provider. The transmission/reception device according to the embodiments may provide an ABR multicast service based on the multicast server structure shown in the figure.

Each component in FIG. 12a and FIG. 12b corresponds to hardware, software, a processor, and/or a combination thereof.

When the ABR multicast service is provided through multiple heterogeneous networks, deployment of a multicast gateway to receive the ABR multicast may be implemented separately.

Multicast gateway (A) - When a multicast gateway is configured for the ABR multicast service in the ISP network, it may be configured within a router or home gateway provided by the ISP operator.

Multicast gateway (B) - When a multicast gateway is configured for the ABR multicast service in a mobile network such as a 5G system, it may be configured within the edge of the mobile network.

Multicast gateway (C) - When a multicast gateway is configured for the ABR multicast service in the satellite broadcasting network, it may be configured within an STB capable of receiving satellite broadcasting.

Multicast gateway (D) - When a multicast gateway is configured for the ABR multicast service in terrestrial broadcast network, it may be configured within a broadcast receiver.

Even when the ABR multicast service is provided over multiple heterogeneous networks, the ABR multicast function may be configured independently for each network.

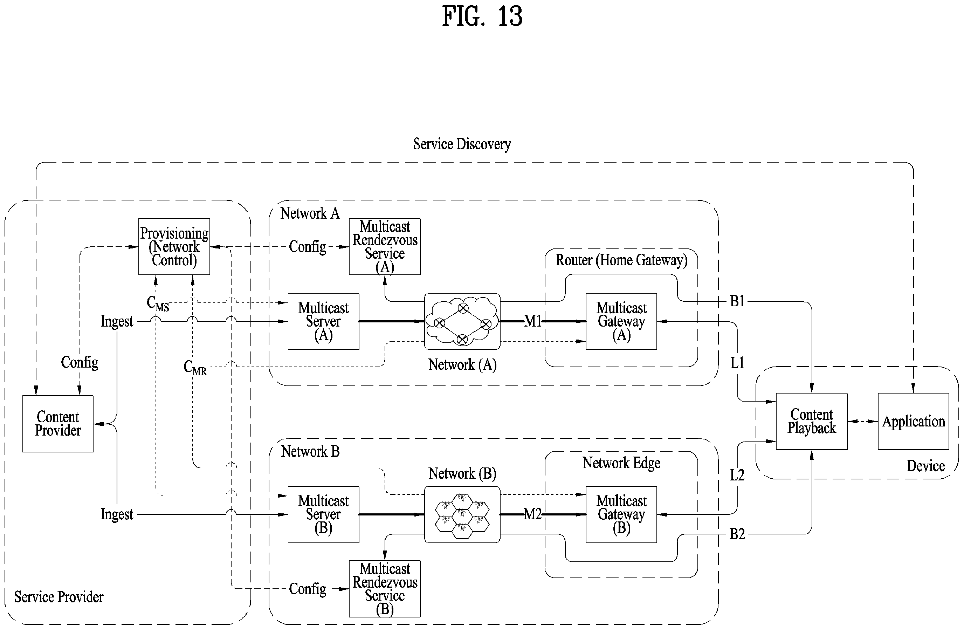

FIG. 13 illustrates an example of multiple networks to which an apparatus connects according to embodiments.

In the network structure according to the embodiments, a multicast signal processing method/apparatus for receiving the same multicast media service by accessing multiple networks according to embodiments may be considered. An embodiment of an architecture and an ABR multicast interface for the multicast signal processing method/apparatus according to embodiments for receiving the same multicast streaming service by accessing a multiple networks will be described. Embodiments may be implemented in various architectures.

The figure illustrates an embodiment of a case where all multicast rendezvous services are configured in regular deployment when multicast servers and multicast gateways are configured in corresponding networks. The system according to the embodiments may include a service provider, network(s), and a device. The service provider, network(s), and device are configured as shown in FIG. 13. Each component in FIG. 13 corresponds to hardware, software, a processor, and/or a combination thereof.

In the architecture according to the embodiments, a multicast server, a multicast gateway, and a multicast rendezvous service for each network provide a service to the content playback function connected to the respective networks. For example, the device may access the mobile network, while accessing Wi-Fi over the ISP network at the same time.

The content playback function in the device may be composed of two L interfaces L1 and L2 and two B interfaces B1 and B2. Media streaming may be received through the multicast gateway (A) via the interface L1, and initial access information about the initial multicast gateway (A) may be received via the interface B 1. Media streaming may be received through the multicast gateway (B) via the interface L2, and initial access information about the multicast gateway (B) may be received via the interface B2.

The application acquires a list of multicast services and access information about the corresponding multicast rendezvous service via the service discovery interface. The service discovery interface may conform to a method defined separately between the service provider and the application. In addition, each network may support transmission and reception of data for the service discovery interface.

FIGS. 11 to 13 show an example in which the multicast signal processing apparatus according to the embodiments as shown in FIGS. 1 to 6, 9 and 10 is configured according to the types of networks according to embodiments.

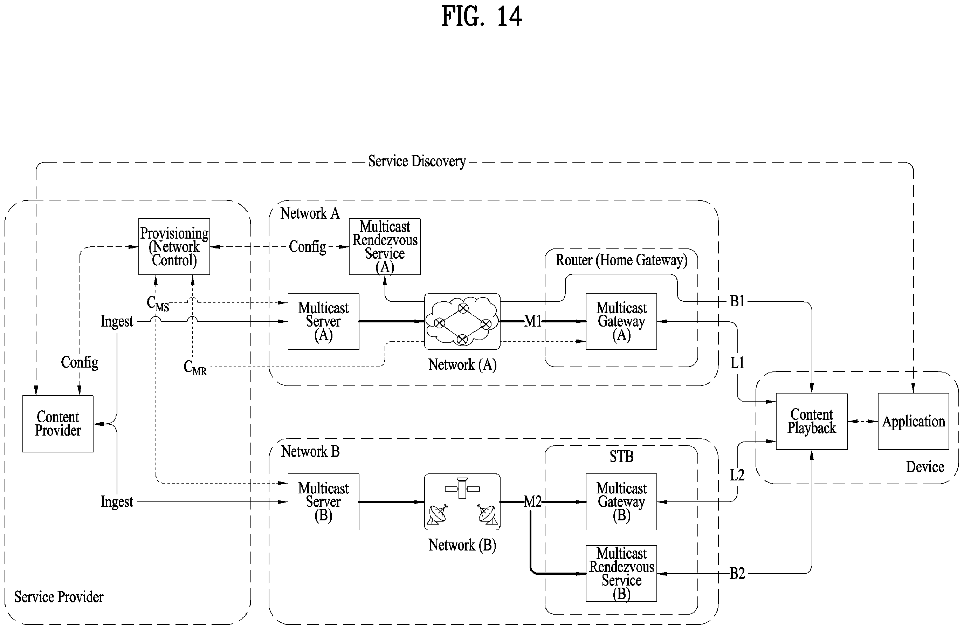

FIG. 14 illustrates an example in which a multicast server and a multicast gateway are configured in each network according to embodiments.

Embodiments may further include a network server and a gateway, as shown in FIG. 14, in addition to the configuration of FIG. 13.

The figure illustrates an embodiment of a case where multicast rendezvous services are configured in regular deployment and co-located deployment when multicast servers and multicast gateways are configured in corresponding networks. The system according to the embodiments may include a service provider, network(s), and a device. The service provider, network(s), and device are configured as shown in FIG. 14. Each component in FIG. 14 corresponds to hardware, software, a processor, and/or a combination thereof.

In the above-described architecture, for each network, a multicast server, a multicast gateway, and a multicast rendezvous service for each network provide a service to the content playback function connected to the respective networks. For example, the device may access a set-top box over a satellite broadcast network, while accessing Wi-Fi over the ISP network at the same time.

The content playback function in the device may be composed of two L interfaces L1 and L2 and two B interfaces B1 and B2. Media streaming may be received through the multicast gateway (A) via the interface L1, and initial access information about the initial multicast gateway (A) may be received via the interface B 1. Media streaming may be received through the multicast gateway (B) via the interface L2, and initial access information about the multicast gateway (B) may be received via the interface B2.

The application acquires a list of multicast services and access information about the corresponding multicast rendezvous service via the service discovery interface. The service discovery interface may conform to a method defined separately between the service provider and the application. In addition, each network may support transmission and reception of data for the service discovery interface.

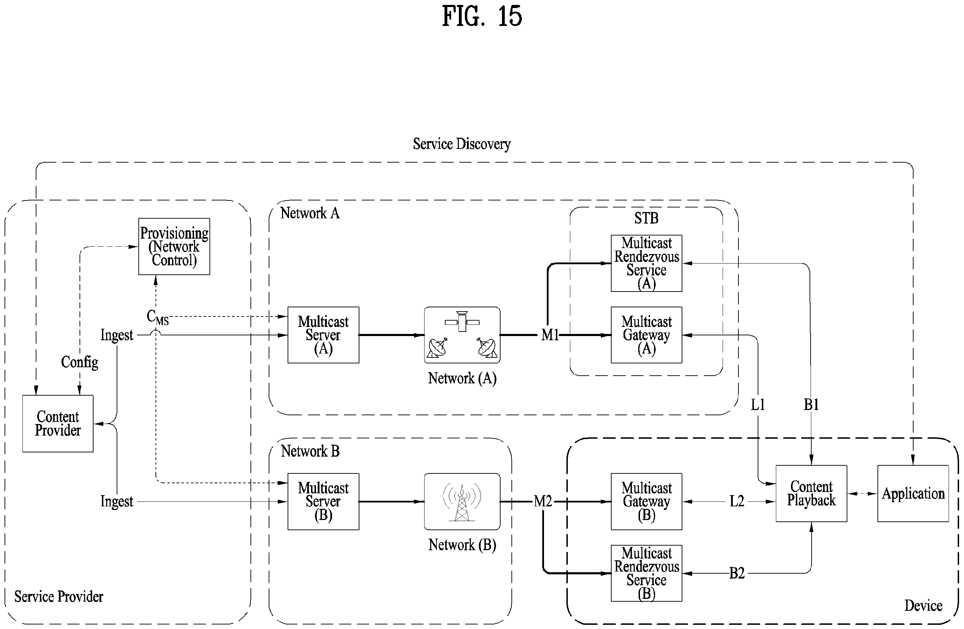

FIG. 15 illustrates an example in which a multicast server and a multicast gateway are configured in each network according to embodiments.

The figure illustrates an embodiment of a case where all multicast rendezvous services are configured in co-located deployment when multicast servers and multicast gateways are configured in corresponding networks. The system according to the embodiments may include a service provider, network(s), and a device. The service provider, network(s), and device are configured as shown in FIG. 15. Each component in FIG. 15 corresponds to hardware, software, a processor, and/or a combination thereof.

In the architecture according to the embodiments, a multicast server, a multicast gateway, and a multicast rendezvous service for each network provide a service to the content playback function connected to the respective networks. For example, the device may receive a broadcast over a terrestrial broadcast network, while accessing a set-top box over a satellite broadcast network. The types of the networks according to the embodiments may be different. Both networks may be unidirectional networks.

The content playback function in the device may be composed of two L interfaces L1 and L2 and two B interfaces B1 and B2. Media streaming may be received through the multicast gateway (A) via the interface L1, and initial access information about the initial multicast gateway (A) may be received via the interface B 1. Media streaming may be received through the multicast gateway (B) via the interface L2, and initial access information about the multicast gateway (B) may be received via the interface B2. Here, the multicast gateway (B) and the multicast rendezvous service (B) are configured in the device, and therefore the interfaces L2 and B2 may be replaced with internal interfaces of the device.

The application acquires a list of multicast services and access information about the corresponding multicast rendezvous service via the service discovery interface. The service discovery interface may conform to a method defined separately between the service provider and the application. In addition, each network may support transmission and reception of data for the service discovery interface.

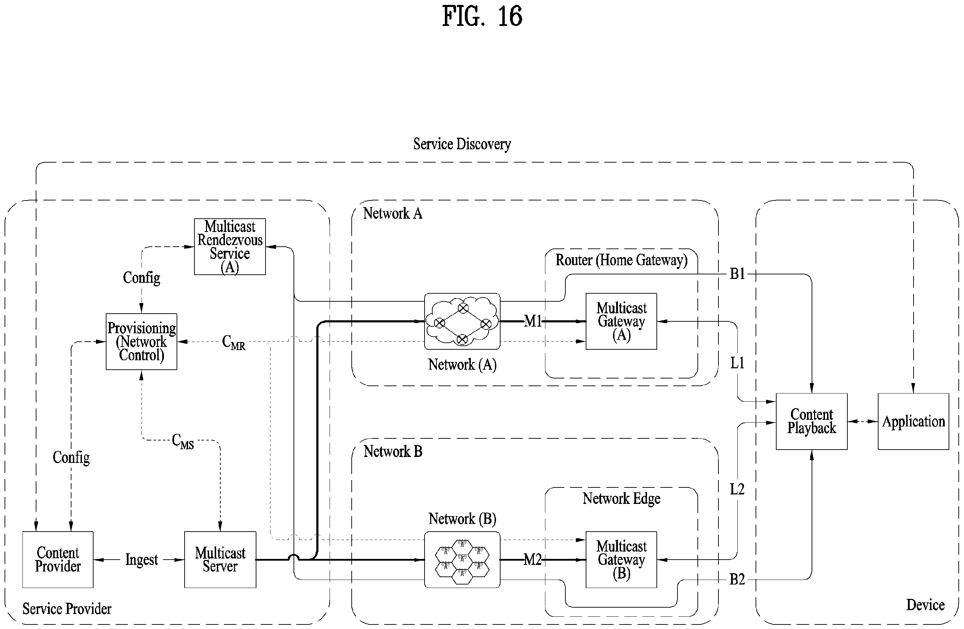

FIG. 16 illustrates an example in which the service of a single multicast server is provided for multiple heterogeneous networks, and a multicast gateway therefor is configured in each network according to the embodiments.

The figure illustrates an embodiment in which all multicast rendezvous services are configured in regular deployment when the service of a single multicast server is provided for multiple heterogeneous networks, and a multicast gateway therefor is configured in each network. The system according to the embodiments may include a service provider, network(s), and a device. The service provider, network(s), and device are configured as shown in FIG. 16. Each component in FIG. 16 corresponds to hardware, software, a processor, and/or a combination thereof.

In the architecture according to the embodiments, a multicast server, a multicast gateway, and a multicast rendezvous service for each network provide a service to the content playback function connected to the respective networks. For example, the device may access the mobile network, while accessing Wi-Fi over the ISP network at the same time.

The content playback function in the device may be composed of two L interfaces L1 and L2 and two B interfaces B1 and B2. Media streaming may be received through the multicast gateway (A) via the interface L1, and initial access information about the initial multicast gateway (A) may be received via the interface B 1. Media streaming may be received through the multicast gateway (B) via the interface L2, and initial access information about the multicast gateway (B) may be received via the interface B2.

The application acquires a list of multicast services and access information about the corresponding multicast rendezvous service via the service discovery interface. The service discovery interface may conform to a method defined separately between the service provider and the application. In addition, each network may support transmission and reception of data for the service discovery interface.

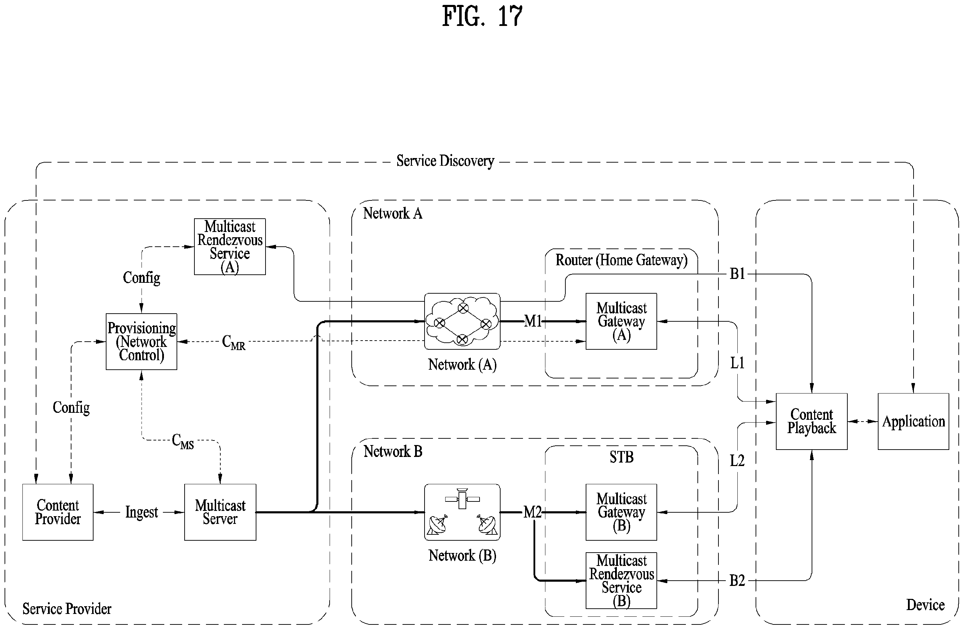

FIG. 17 illustrates an example in which the service of a single multicast server is provided for a plurality of heterogeneous networks, and a multicast gateway therefor configures each network according to the embodiments.

The figure illustrates an embodiment in which multicast rendezvous services are configured in regular deployment and co-located deployment when the service of a single multicast server is provided for multiple heterogeneous networks, and a multicast gateway therefor is configured in each network. The system according to the embodiments may include a service provider, network(s), and a device. The service provider, network(s), and device are configured as shown in FIG. 17. Each component in FIG. 17 corresponds to hardware, software, a processor, and/or a combination thereof.

In the architecture according to the embodiments, a multicast server, a multicast gateway, and a multicast rendezvous service for each network provide a service to the content playback function connected to the respective networks. For example, the device may access a set-top box over a satellite broadcast network, while accessing Wi-Fi over the ISP network at the same time.

The content playback function in the device may be composed of two L interfaces L1 and L2 and two B interfaces B1 and B2. Media streaming may be received through the multicast gateway (A) via the interface L1, and initial access information about the initial multicast gateway (A) may be received via the interface B 1. Media streaming may be received through the multicast gateway (B) via the interface L2, and initial access information about the multicast gateway (B) may be received via the interface B2.

The application acquires a list of multicast services and access information about the corresponding multicast rendezvous service via the service discovery interface. The service discovery interface may conform to a method defined separately between the service provider and the application. In addition, each network may support transmission and reception of data for the service discovery interface.

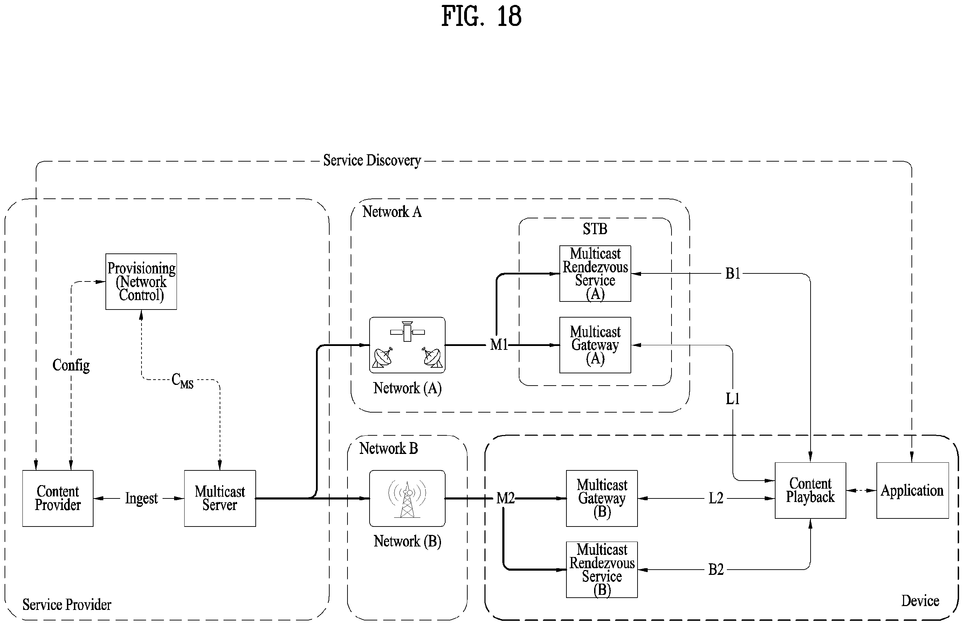

FIG. 18 illustrates an example in which all multicast rendezvous services are configured in co-located deployment when a multicast server and a multicast gateway are configured in each network according to the embodiments.

The figure illustrates an embodiment in which all multicast rendezvous services are configured in co-located deployment when a multicast server and a multicast gateway are configured in each network. The system according to the embodiments may include a service provider, network(s), and a device. The service provider, network(s), and device are configured as shown in FIG. 18. Each component in FIG. 18 corresponds to hardware, software, a processor, and/or a combination thereof. The server may be located outside the network.

In the architecture according to the embodiments, a multicast server, a multicast gateway, and a multicast rendezvous service for each network provide a service to the content playback function connected to the respective networks. For example, the device may receive a broadcast over a terrestrial broadcast network, while accessing a set-top box over a satellite broadcast network.

The content playback function in the device may be composed of two L interfaces L1 and L2 and two B interfaces B1 and B2. Media streaming may be received through the multicast gateway (A) via the interface L1, and initial access information about the initial multicast gateway (A) may be received via the interface B 1. Media streaming may be received through the multicast gateway (B) via the interface L2, and initial access information about the multicast gateway (B) may be received via the interface B2. Here, the multicast gateway (B) and the multicast rendezvous service (B) are configured in the device, and therefore the interfaces L2 and B2 may be replaced with an interface inside the device.

The application acquires a list of multicast services and access information about the corresponding multicast rendezvous service via the service discovery interface. The service discovery interface may conform to a method defined separately between the service provider and the application. In addition, each network may support transmission and reception of data for the service discovery interface.

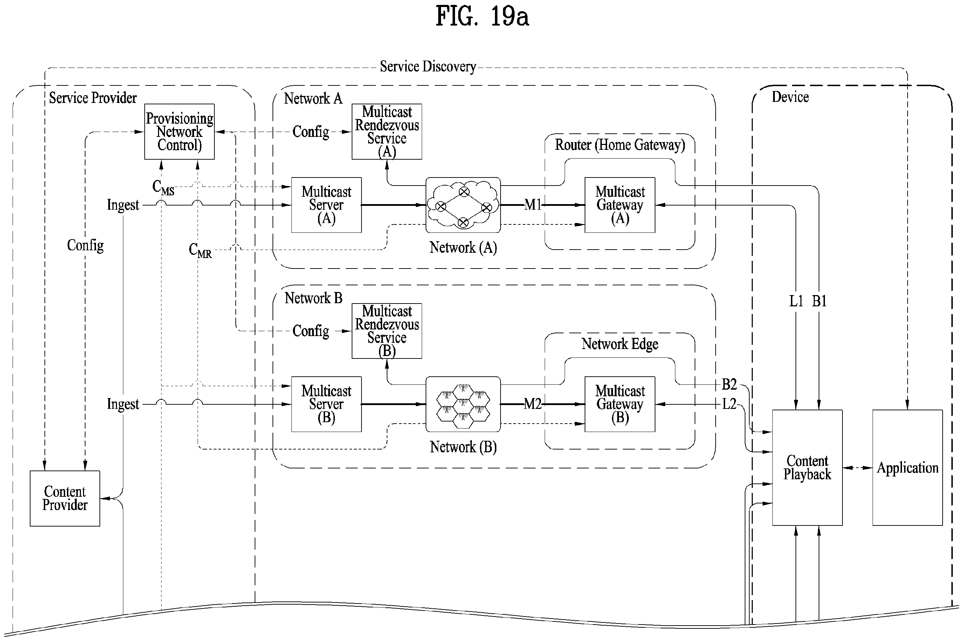

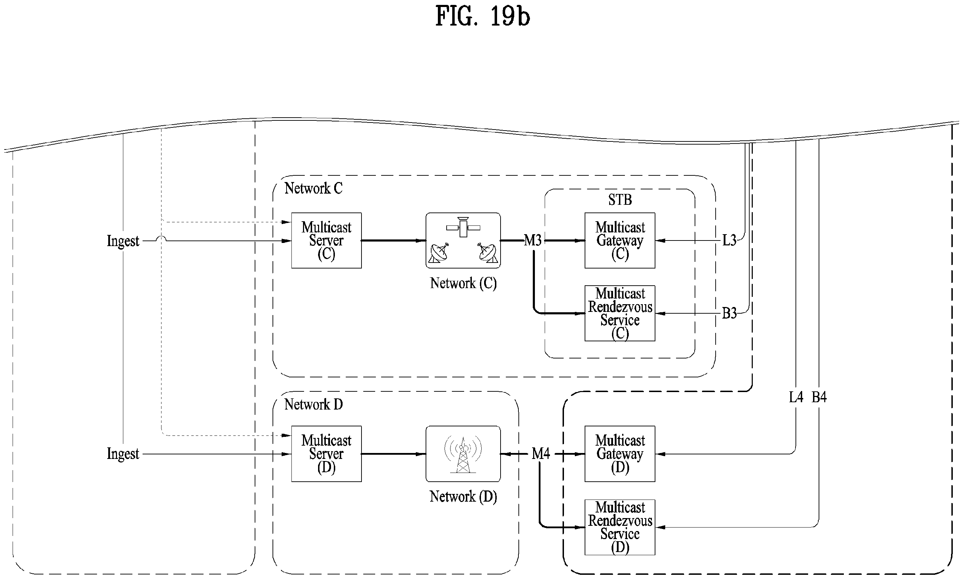

FIG. 19a and FIG. 19b illustrate an embodiment in which a device accesses various serviceable networks when a multicast server and a multicast gateway are configured in each network according to the embodiments.

Each component constituting the embodiments corresponds to hardware, software, a processor, and/or a combination thereof.

The figure illustrates an embodiment in which a device accesses various serviceable networks when a multicast server and a multicast gateway are configured in each network based on the above description. The system according to the embodiments may include a service provider, network(s), and a device. The service provider, network(s), and device according to the embodiments are configured as described below.

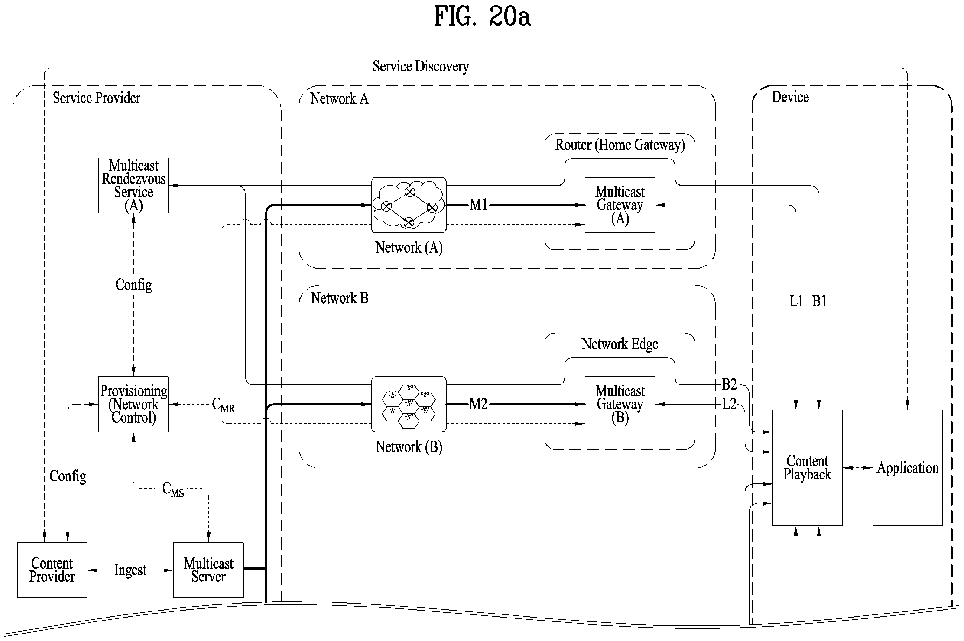

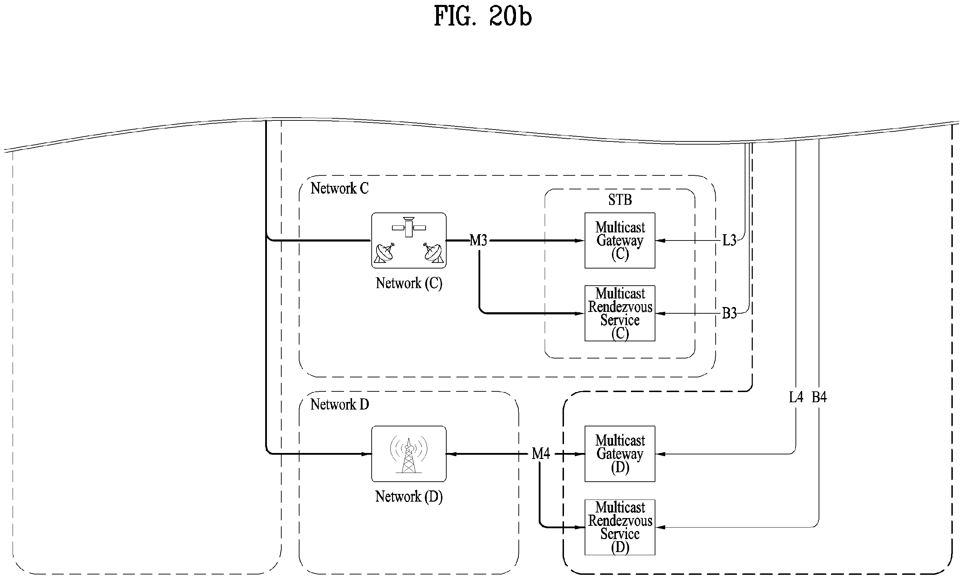

FIG. 20 and FIG. 20b illustrate a structure in which a single multicast server provides a service to a plurality of heterogeneous networks, and a multicast gateway therefor is configured in each network according to the embodiments.

The figure illustrates an embodiment in which a device accesses various serviceable networks when the service of a single multicast server is provided for multiple heterogeneous networks, and a multicast gateway therefor is configured in each network, as described above. The system according to the embodiments may include a service provider, network(s), and a device. The service provider, network(s), and device are configured as follows.

Each component constituting the embodiments corresponds to hardware, software, a processor, and/or a combination thereof.

The transmission/reception device according to the embodiments may efficiently control and provide DVB multicast ABR and 5G media streaming in various network environments based on the operations according to the embodiments.

Hereinafter, a reception operation and an operation for a reception device according to embodiments will be described.

For the architectures according to the above-described embodiments, the following protocol may be implemented.

Based on the described architecture according to the embodiments, elements and attributes necessary for a device capable of receiving ABR multicast streaming by accessing multiple transport networks are defined.

The receiver according to the embodiments may perform a reverse process of the operation of the transmitter. The receiver may perform ABR multicast streaming based on the following operation. The receiver may perform ABR multicast streaming based on the following network structure.

The following is an example of protocol stacks in reception devices.

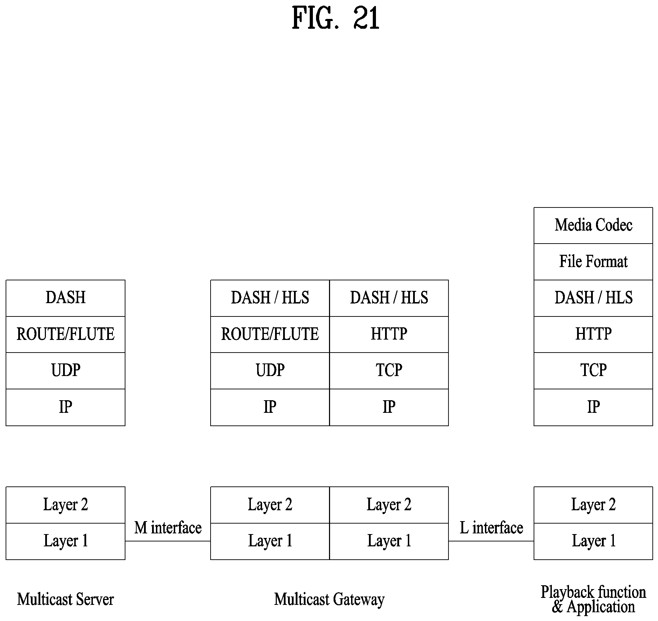

FIG. 21 illustrates a protocol configuration for ABR multicast according to 21 embodiments.

For multicast ABR transmission, multicast streaming may be transmitted from the multicast server via the interface M. In this case, ROUTE or FLUTE may be used as a multicast transmission protocol. The multicast gateway may use DASH or HLS for HTTP-based adaptive media streaming to the playback function via the interface L. In the playback function, a protocol for reception of HTTP-based adaptive media streaming from the multicast gateway, and a file format and a media codec for the received adaptive streaming may be configured. Here, the Layer 1 and Layer 2 protocols may be configured as optimal protocols for the respective networks.

In order to access multiple networks, embodiments may include the protocols described below.

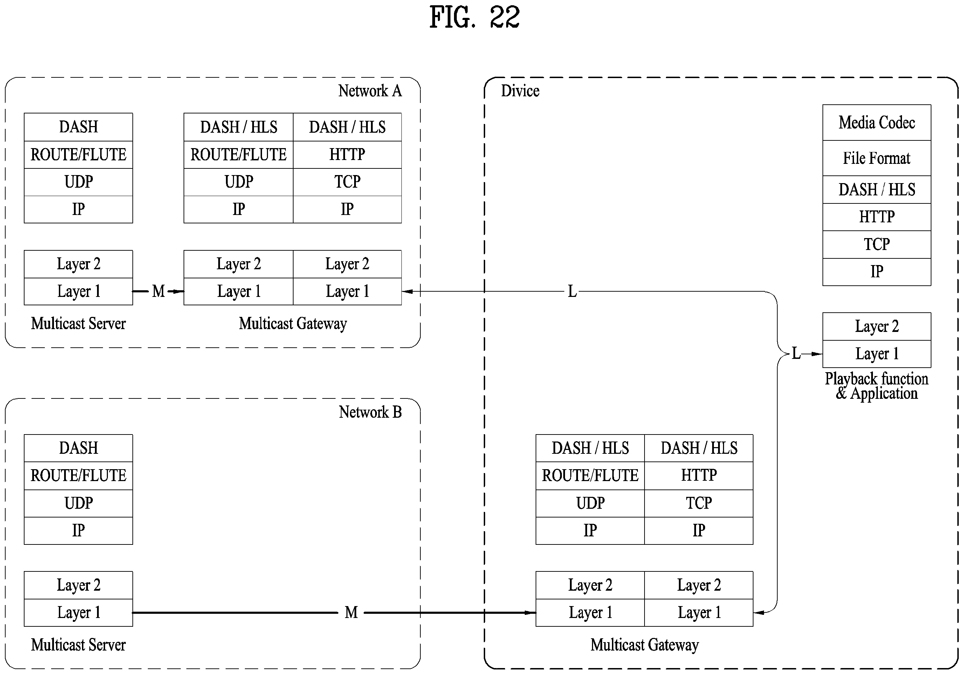

FIG. 22 illustrates an embodiment of a protocol that may be configured in a reception device to access a plurality of networks according to the embodiments.

The figure shows a protocol implemented on the architectures according to the above-described embodiments when the multicast signal processing apparatus according to the embodiments is implemented as a reception device.

According to the embodiments, it is assumed that a multicast gateway for network A is configured on the network and a multicast gateway for network B is configured in the device.

According to the embodiments, the multicast gateway configured on the network to provide the service of ABR multicast streaming over network A receives multicast streaming from the multicast server, and transmits the same to the device via the interface L in a manner of HTTP-based adaptive media streaming. Therefore, in the device, a protocol stack for receiving adaptive media streaming via the interface L may be configured.

Also, in order to receive ABR multicast streaming over network B, a multicast gateway may be configured in the device. Thus, in the device, a protocol stack for receiving adaptive media streaming via the interface M for network B may be configured.

Accordingly, the protocols for the interface M and the interface L may be simultaneously configured in the receiver device for accessing multiple networks to receive the ABR multicast service. In this case, the multicast gateway function in the device may convert multicast streaming to HTTP-based adaptive media streaming in the same way as the multicast gateway configured on the network and deliver the converted streaming to the interface L in the device.

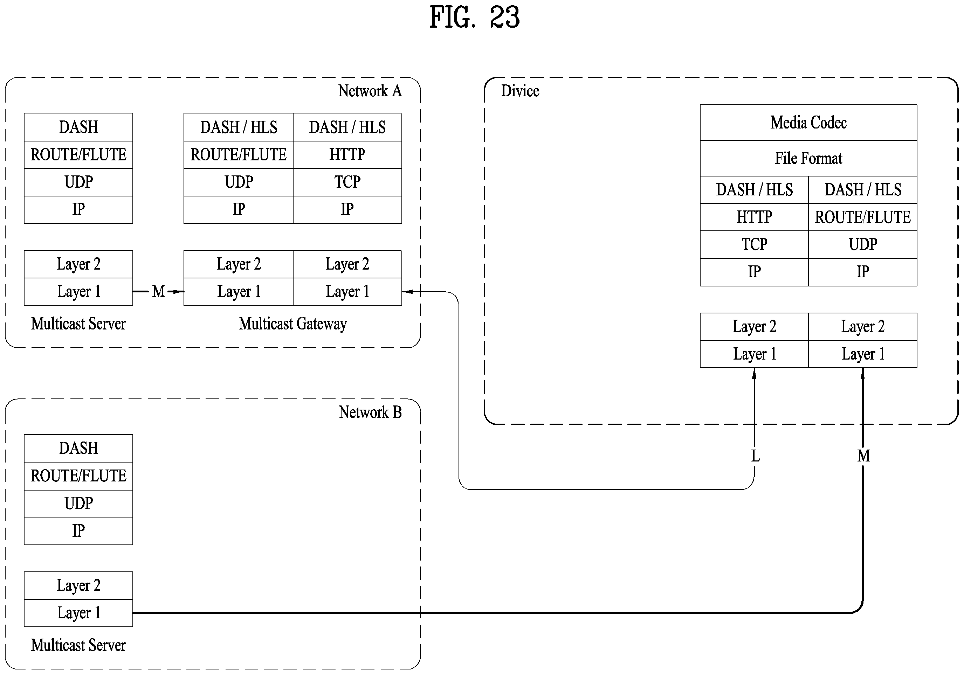

FIG. 23 illustrates a protocol according to embodiments.

In the embodiments, it is assumed that a multicast gateway for network A is configured on the network and a multicast gateway for network B is configured in the device.

In the embodiments, the multicast gateway configured on the network to provide the service of ABR multicast streaming over network A receives multicast streaming from the multicast server, and transmits the same to the device via the interface L in a manner of HTTP-based adaptive media streaming. Therefore, in the device, a protocol stack for receiving adaptive media streaming via the interface L may be configured.

Also, in order to receive ABR multicast streaming over network B, a multicast gateway may be configured in the device. Thus, in the device, a protocol stack for receiving adaptive media streaming via the interface M for network B may be configured.

Accordingly, the protocols for the interface M and the interface L may be simultaneously configured in the receiver device for accessing multiple networks to receive the ABR multicast service. In this case, unlike the multicast gateway configured on the network, the multicast gateway function in the device may have an interface L configured in the device. The interface L may be configured directly as a protocol stack without a separate interface. For streaming received over network A, the device may operate as a playback function may be operated. For streaming received over network B, the device may operate as a multicast gateway. When operating as a multicast gateway, the interface L may be omitted, and the payload of the multicast protocol may be adaptive media streaming data.

Next, an operation of generating and transmitting/receiving a service list and a presentation manifest according to embodiments will be described.

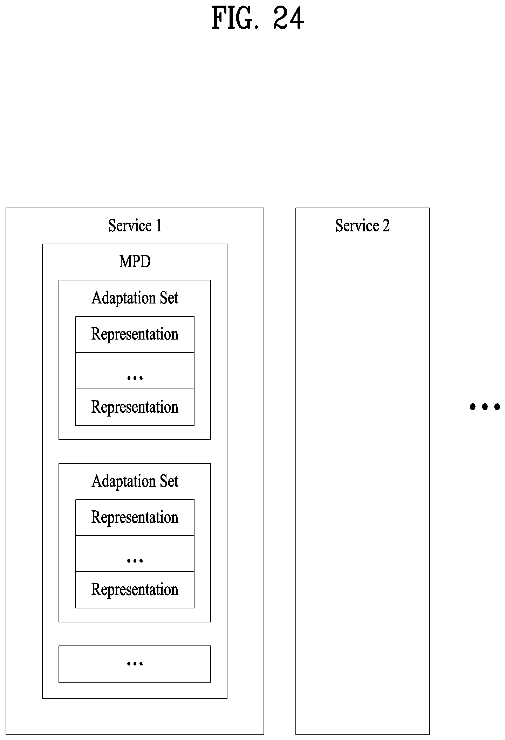

FIG. 24 illustrates a configuration of services and service-related information according to embodiments.

For the DASH-based ABR multicast service, a service provider according to the embodiments may configure a presentation manifest (e.g., MPD (Media Presentation Description)) along with a service list as follows. In terms of service provision, the service list and presentation manifest may not be redundantly configured for the same contents.

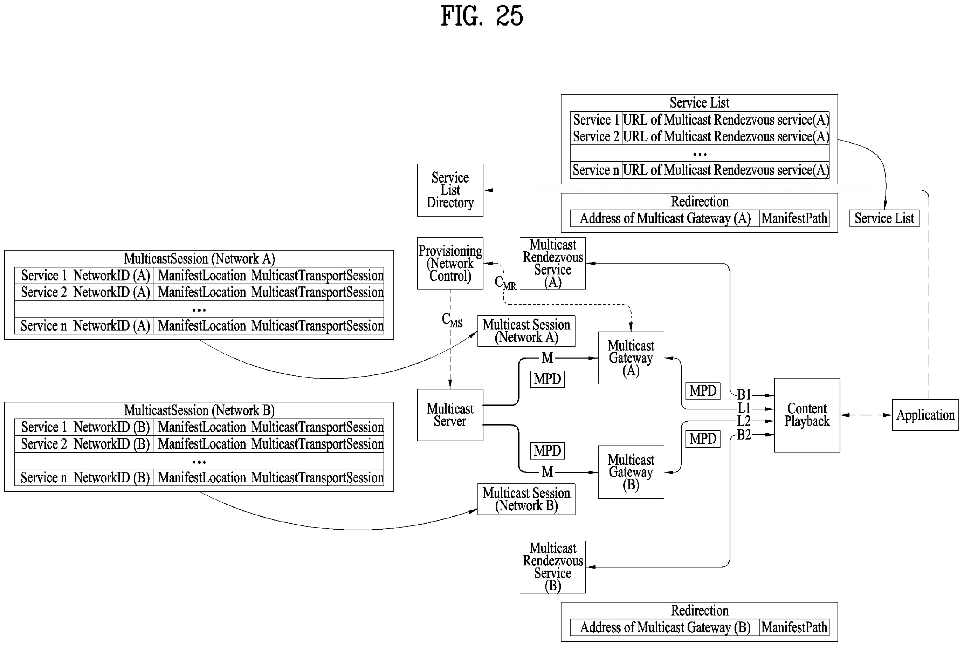

FIG. 25 illustrates a method of generating and transmitting a service list and presentation manifest for ABR multicast according to embodiments.

In order to support ABR multicast, the multicast signal processing method/apparatus according to the embodiments may generate and transmit/receive a service list and a presentation manifest as illustrated in FIG. 25.

Elements that may be transmitted may be determined according to the interface defined in the ABR multicast architecture. The application of the receiver device may receive a service list from the service list directory. The list may include a service id and a url for the multicast rendezvous service. When the content playback function makes a request for a manifest to the multicast rendezvous service through the url, it may acquire the address of the multicast gateway and the path for the manifest through the redirection message of the multicast rendezvous service, and receive a presentation manifest via the interface L. The multicast gateway may receive the presentation manifest (e.g., MPD) from the multicast server. To this end, it may acquire multicast session configuration information.

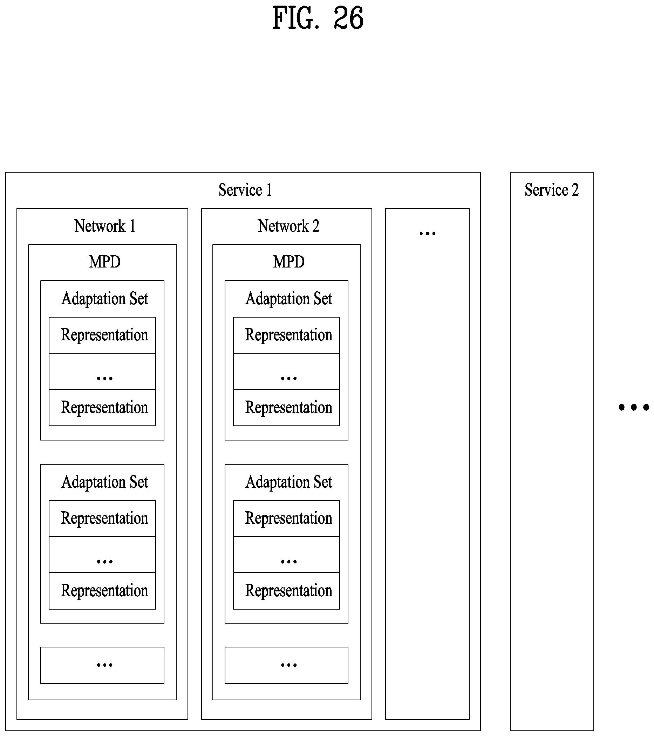

FIG. 26 illustrates service list and presentation manifest management according to embodiments.

The reception device according to the embodiments may manage the service list and the presentation manifest as shown in FIG. 26. For the service list and presentation manifest (e.g., MPD) configured in the structure according to the embodiments, the service list may be managed in the receiver capable of receiving the ABR multicast service over multiple networks as follows.

That is, MPDs for multiple networks such as network 1 and network 2 may be generated and transmitted/received for the same service.

In an embodiment, the adaptation sets provided over the respective networks may be different from each other in the device receiving the ABR multicast service using multiple networks. Accordingly, a presentation manifest is separately configured and managed for each network.

When the ABR multicast service reception function is configured in a TV or the like and broadcast contents are received simultaneously by a corresponding receiver, the service list according to the embodiments may be managed like a channel map.

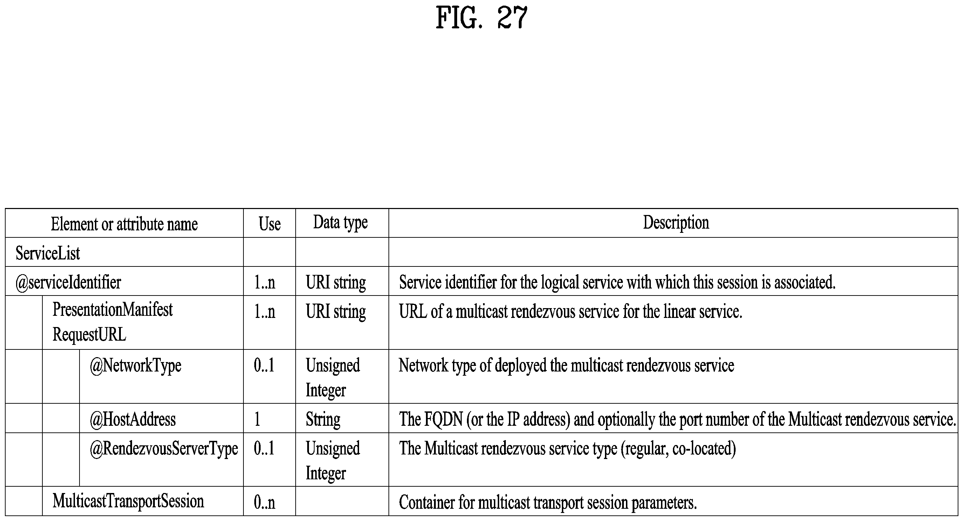

FIG. 27 shows the syntax of a service list according to embodiments.

ServiceList - This is a root element that includes configuration information about a service.

@ serviceIdentifier - An identifier for identifying the service.

PresentationManifestRequestURL - An element for information about a multicast rendezvous service when configured for one service through multiple multicast rendezvous services.

@NetworkType - The network type of the deployed multicast rendezvous service. It may be used to set priority when a device accesses networks at the same time.

@HostAddress -The address of the multicast rendezvous service.

@RendezvousServerType - An attribute for deployment of the multicast rendezvous service. For example, 0 is for regular deployment, and 1 is for co-located deployment.

MulticastTransportSession - The element for a multicast transport session may be optionally transmitted when the device includes a multicast gateway. When the MulticastTransportSession element is not sent, information may be provided through multicast gateway configuration.

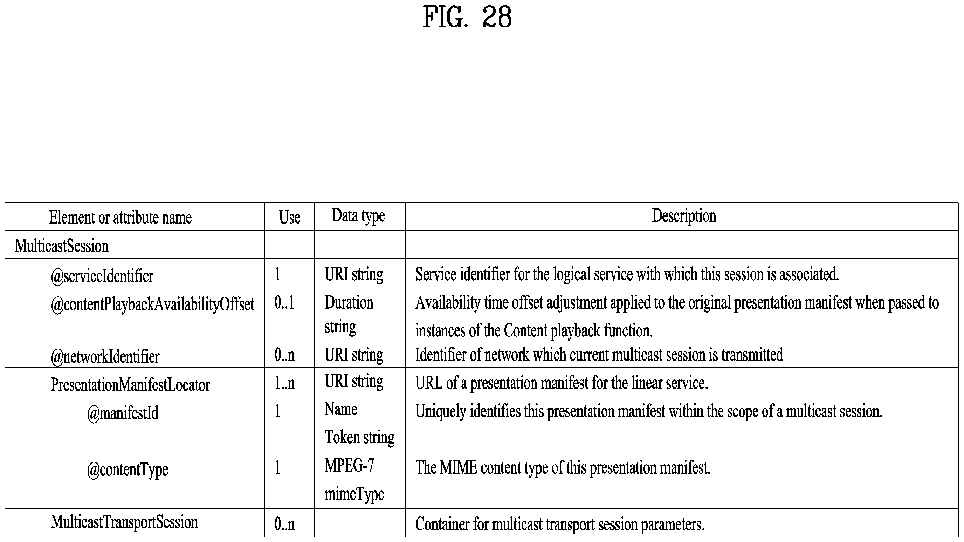

FIG. 28 shows an embodiment of the configuration of a multicast session element. The multicast session element is transmitted from the provisioning function to the multicast server and the multicast gateway. Accordingly, the CMS and CMR interfaces may be used, respectively. When the network supports only unidirectional transmission, the element may be delivered to the multicast server via the CMS interface, and then delivered from the multicast server to the multicast gateway via the interface M.

@serviceIdentifier: The service identifier for the logical service with which this session is associated.

@contentPlaybackAvailabilityOffset: Duration string. Availability time offset adjustment applied to the original presentation manifest when passed to instances of the content playback function.

@networkIdentifier: The identifier of the network over which the current multicast session is transmitted.

PresentationManifestLocator: The URL of a presentation manifest for the linear service.

@manifestId: Uniquely identifies this presentation manifest within the scope of a multicast session.

@contentType: The MIME content type of this presentation manifest.

MulticastTransportSession: A container for multicast transport session parameters.

@networkIdentifier - An identifier of the network over which the current multicast session is provided. The receiver may identify a network over which the same multicast service is received.

### Manifest request and redirection according to embodiments

In the above architecture, the syntax of the request URL of the HTTP message sent by the content playback function to the multicast rendezvous service is configured as follows.
http[s]://<Host>/<ManifestPath>[?<field>=<value>[&<field>=<value>]*]

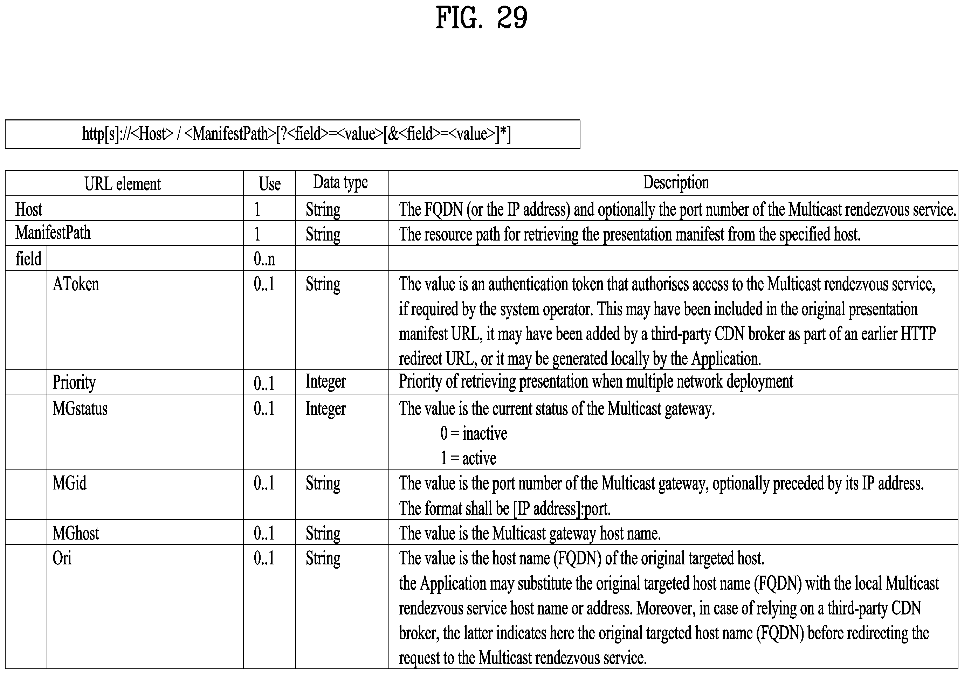

Elements included in the URL according to the embodiments are shown in FIG. 29.

FIG. 29 shows elements included in a Request URL of an HTTP message according to embodiments.

Host: FQDN (or IP address) and optionally the port number of the multicast rendezvous service.

ManifestPath: The resource path for retrieving the presentation manifest from the specified host.

AToken: The value is an authentication token that authorizes access to the multicast rendezvous service, if required by the system operator. This may have been included in the original presentation manifest URL, or it may have been added by a third-party CDN broker as part of an earlier HTTP redirect URL, or it may be generated locally by the application.

Priority: Priority of retrieving presentation when deploying multiple networks.

MGstatus: The value is the current status of the multicast gateway. For example, 0 = inactive, and 1 = active.

MGid: The value is the port number of the multicast gateway, optionally preceded by its IP address. The format is [IP address]:port.

MGhost: The value is the multicast gateway host name.

Ori: The value is the host name (FQDN) of the original targeted host.

The application may substitute the original targeted host (FQDN) with the local multicast rendezvous service host name or address. Moreover, in case of relying on a third-party CDN broker, the latter indicates here the original targeted host name (FQDN) before redirecting the request to the multicast rendezvous service.

Priority - When the playback function makes a request for the manifest to the multicast rendezvous service, and the multicast rendezvous service is capable of redirecting the same to multiple multicast gateways, different priorities may be assigned to the networks in which the multicast gateways are configured, such that priority of multicast reception may be determined.

Upon receiving the request URL according to the embodiments, the multicast rendezvous service may send a 307 Temporary Redirect response. Here, the syntax of the Redirect URL in the Location response header is configured as follows:

http[s]://<Host>[/session ID]/<ManifestPath> [?conf=<multicast session.

Elements included in the URL according to the embodiments are disclosed below.

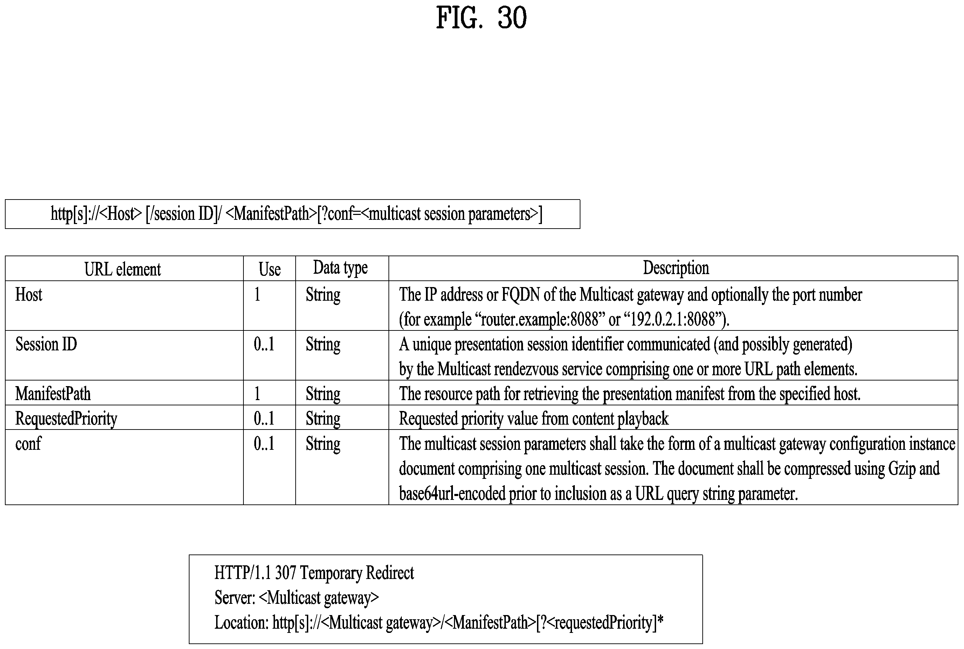

FIG. 30 shows information included in a Redirect URL of a Location response header according to embodiments.

Host: The IP address or FQDN of the multicast gateway and optionally the port number (e.g., "router.example:8088" or "192.0.2.1:8088").

Session ID: A unique presentation session identifier communicated and possibly generated by the multicast rendezvous service including one or more URL path elements.

ManifestPath: The resource path for retrieving the presentation manifest from the specified host.

RequestedPriority: Priority value requested from content playback.

conf: The multicast session parameters may take the form of a multicast gateway configuration instance document comprising one multicast session.

The document may be compressed using Gzip and base64url-encoded prior to inclusion as a URL query string parameter.

RequestedPriority - When the playback function makes a request for the manifest to the multicast rendezvous service, and the priorities for multiple multicast gateways are configured, the priority transmitted at the time of redirection transmission may be returned. The multicast rendezvous service may redirect the same to a multicast gateway having the highest possible priority that may be redirected.

When the presentation manifest is related to the multicast session in the multicast session configuration (the service is transmittable by multicast), the multicast rendezvous service may redirect the request to the multicast gateway as follows:
HTTP/1.1 307 Temporary Redirect
Server: <Multicast gateway>
Location: http[s]:H<Multicast gateway >/<ManifestPath> [?<requestedPriority] *

The URL corresponding to the Location field in the HTTP header may include a query parameter for piggybacking a multicast gateway configuration instance document including a session identifier and a multicast session corresponding to the requested presentation manifest.

Hereinafter, operations of the content provider and the service provider according to the embodiments will be described.

The architecture according to the embodiments may include a content provider, a service provider, a network, and a device. Each component may correspond to hardware, software, a processor, and/or a combination thereof. The processor according to the embodiments may perform the operations according to the embodiments and may be connected to a memory to store information about the operations.

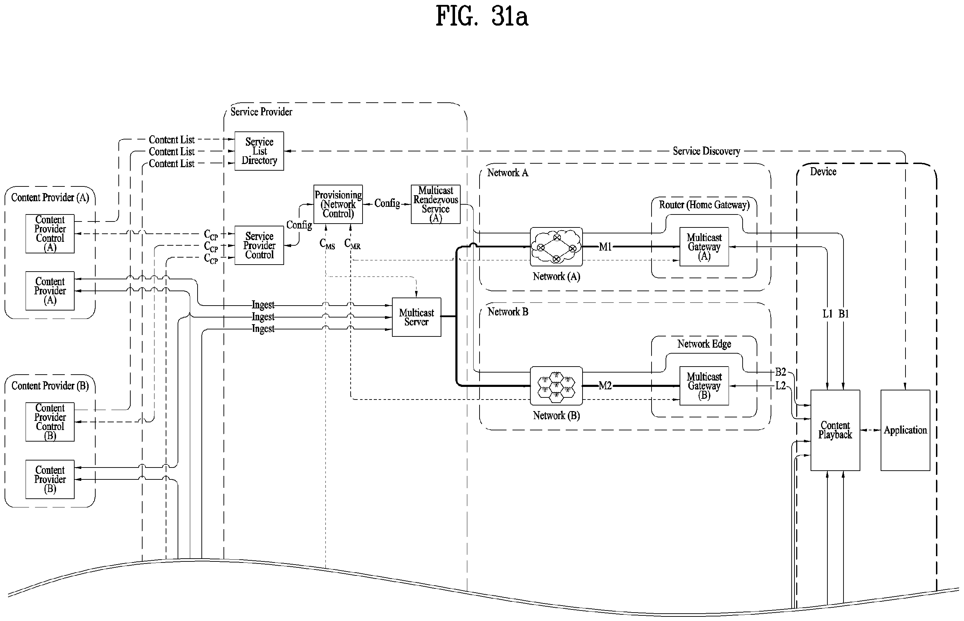

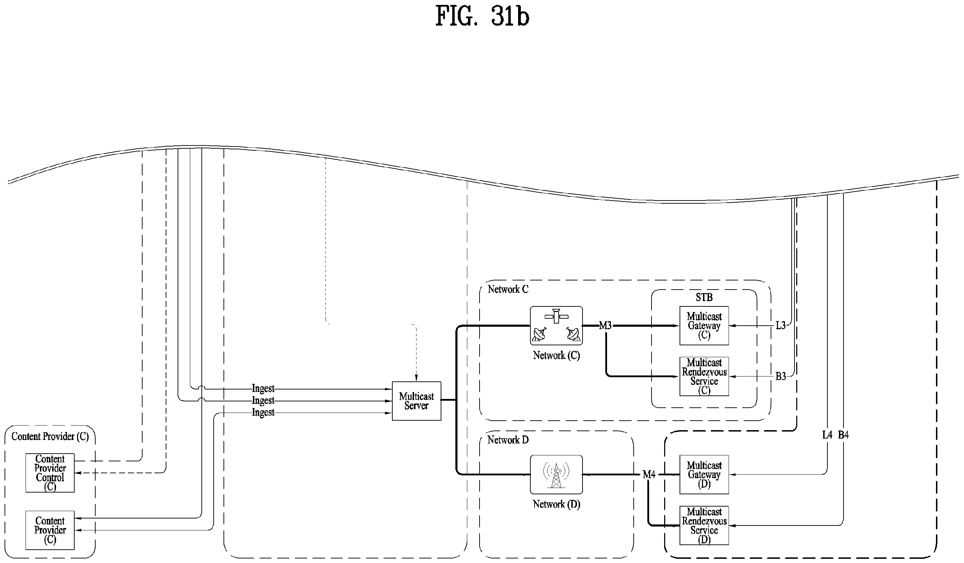

FIG. 31a and FIG. 31b illustrate multiple content providers according to embodiments.

The architecture according to the embodiments shows a structure in which a service is provided using content created by multiple content providers. In the architecture according to the embodiments, a multicast server, a multicast gateway, and a multicast rendezvous service for each network provide a service to the content playback function connected to the respective networks.

In this case, the service provider may provide a service to the receiver device using multiple networks. The service provider may configure a service list directory, and may acquire the content list to be provided through the content provider control function configured in each content provider. The received content list may configure the service list in a form suitable for the service. The service list is provided to the application.

The application acquires a list of multicast services and access information about the corresponding multicast rendezvous service via the service discovery interface. The service discovery interface may conform to a method defined separately between the service provider and the application. In addition, each network may support transmission and reception of data for the service discovery interface.

Content provider server provides content to multicast server configured in the service provider (ingest). In this case, information on the ingested content may be transmitted from each content provider control function to the service provider control function. Based on this information, the service provider control function may configure multicast session configuration information and deliver the same to the multicast server and the multicast gateway.

Interfaces Land B may be configured for each network in the content playback function in the device. Media streaming may be received through multicast gateway (A), multicast gateway (B), multicast gateway (C), and multicast gateway (D) via the interfaces L1, L2, L3, and L4, and receive initial access information for the multicast gateway via the interfaces B 1, B2, B3, and B4. Since the multicast gateway (D) and the multicast rendezvous service (D) are configured in the device, the interfaces L4 and B4 may be replaced with internal interfaces of the device.

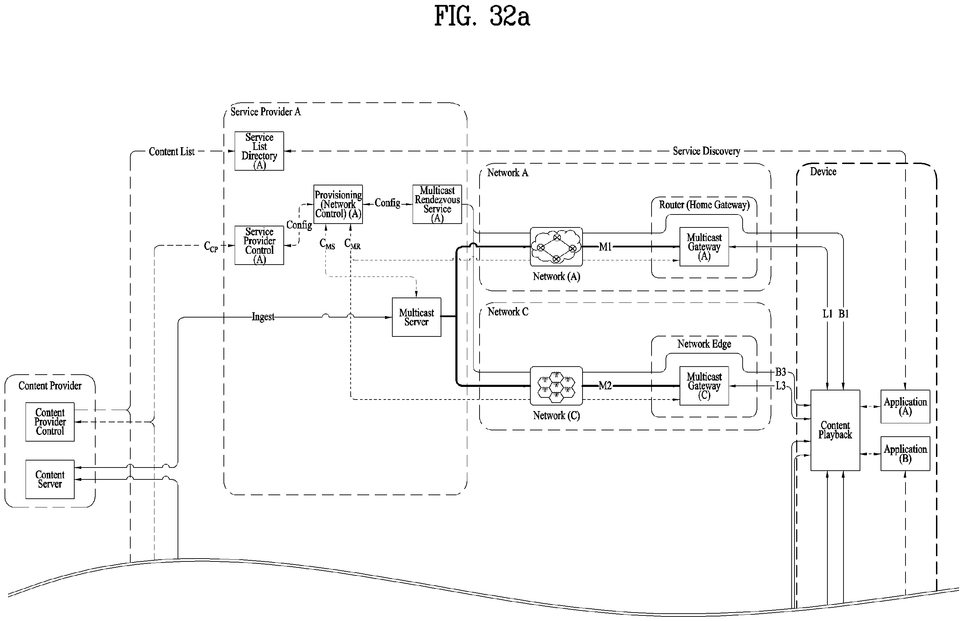

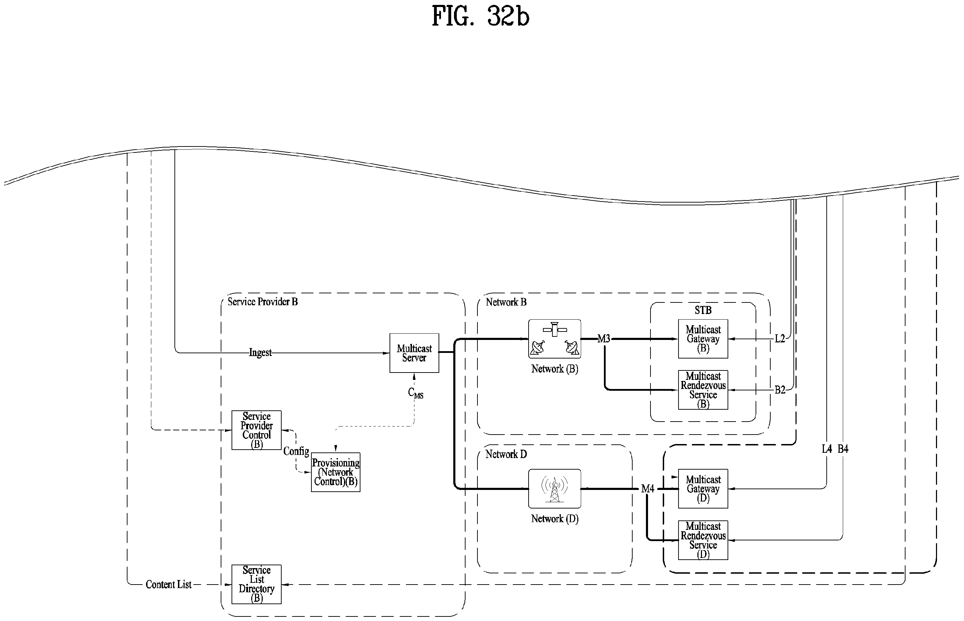

FIG. 32a and FIG. 32b illustrate multiple service providers according to embodiments.

The architecture according to the embodiments shows a structure in which a content provider is serviced through multiple service providers. In the architecture according to the embodiments, a multicast server, a multicast gateway, and a multicast rendezvous service for each network provide a service to the content playback function connected to the respective networks.

In this case, each service provider may provide a service to the receiver device using multiple networks. Each service provider may configure a service list directory, and may acquire a content list to be serviced through the content provider control function of the content provider. The received content list may configure the service list in a form suitable for the service. The service list is provided to the application.

The application acquires a list of multicast services and access information about the corresponding multicast rendezvous service via the service discovery interface. The service discovery interface may conform to a method defined separately between the service provider and the application. In addition, each network may support transmission and reception of data for the service discovery interface.

Content provider server provides content to multicast server configured in the service provider (ingest). In this case, information on the ingested content may be transmitted from the content provider control function to the service provider control function. Based on this information, the service provider control function may configure multicast session configuration information and deliver the same to the multicast server and the multicast gateway.

Interfaces L and B may be configured for each network in the content playback function in the device. Media streaming may be received through multicast gateway (A), multicast gateway (B), multicast gateway (C), and multicast gateway (D) via the interfaces L1, L2, L3, and L4, and receive initial access information for the multicast gateway via the interfaces B 1, B2, B3, and B4. Since the multicast gateway (D) and the multicast rendezvous service (D) are configured in the device, the interfaces L4 and B4 may be replaced with internal interfaces of the device.

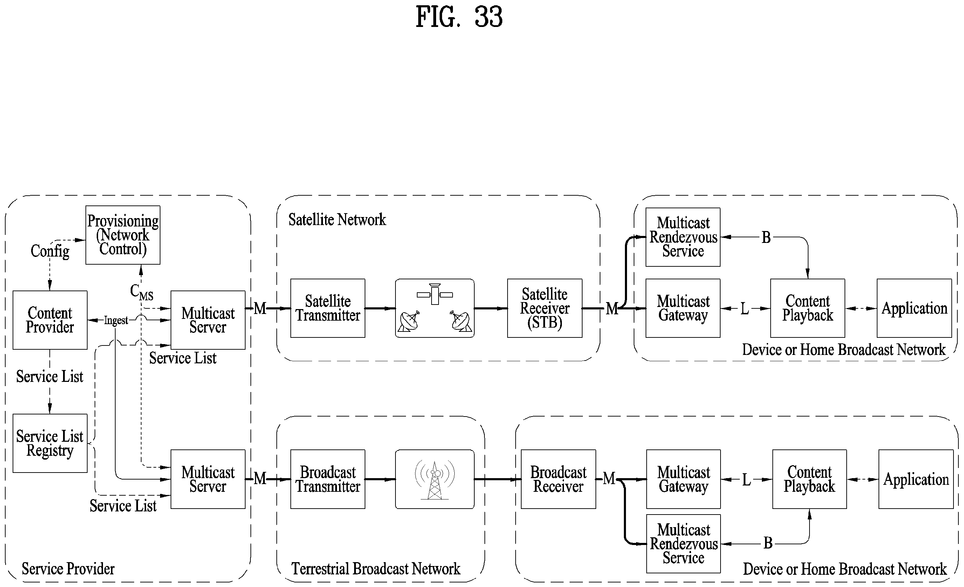

FIG. 33 illustrates an MABR network configuration for unidirectional delivery according to embodiments.

The method/apparatus according to the embodiments may support unidirectional delivery over the network of the MABR architecture according to the above-described embodiments. An example of multicast transport session mapping for the unidirectional delivery will be described.

In the architecture according to the embodiments, a multicast ABR service provider configures a multicast server for each network, and transmits multicast contents and configuration information to a multicast gateway and a multicast rendezvous service using a multicast interface (M). Here, the interface M may be configured over a unidirectional network that has no uplink channel. As this unidirectional network, a satellite (broadcast) network or a terrestrial broadcast network may be considered.

The multicast ABR contents and configuration information received by the multicast gateway and multicast rendezvous service may be passed to the content playback function using HTTP, or the like provided by the interface L, and the multicast gateway may operate as a server of the Home Broadcasting (HB) network.

Interfaces L and B may be configured in the content playback function in the device or HB network. Media streaming may be received through the multicast gateway via the interface L, and receive initial access information for the multicast gateway via the interface B. Here, when the multicast gateway and the multicast rendezvous service are configured in the same device, the interfaces L and the B may be replaced with internal interfaces of the device.

After the service list that may provide service access information (URI, etc.) is delivered from the content provider to a service list registry, the service list information managed by the service list registry may be delivered to the multicast service, and the multicast server may deliver the same to the multicast gateway via the interface M.

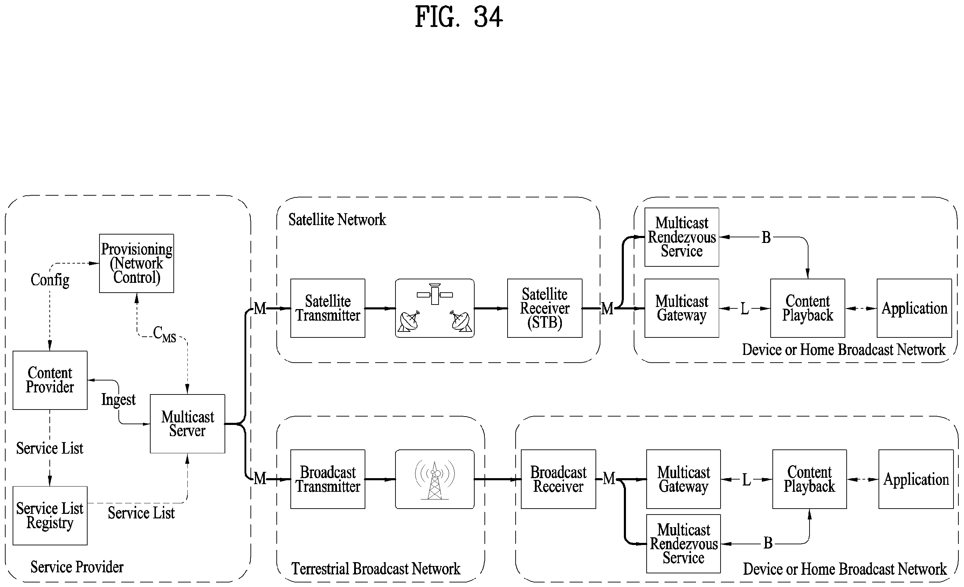

FIG. 34 illustrates an MABR network configuration for unidirectional delivery according to embodiments.

In the architecture according to the embodiments, a multicast ABR service provider configures a single multicast server, and transmits the same multicast contents and configuration information to a multicast gateway and a multicast rendezvous service using the same multicast interface (M). Here, the interface M may be configured over a unidirectional network that has no uplink channel. As this unidirectional network, a satellite (broadcast) network or a terrestrial broadcast network may be considered.

The multicast ABR contents and configuration information received by the multicast gateway and multicast rendezvous service may be passed to the content playback function using HTTP, or the like provided by the interface L, and the multicast gateway may operate as a server of the Home Broadcasting (HB) network.

Interfaces L and B may be configured in the content playback function in the device or HB network. Media streaming may be received through the multicast gateway via the interface L, and receive initial access information for the multicast gateway via the interface B. Here, when the multicast gateway and the multicast rendezvous service are configured in the same device, the interfaces L and the B may be replaced with internal interfaces of the device.

After the service list that may provide service access information (URI, etc.) is delivered from the content provider to a service list registry, the service list information managed by the service list registry may be delivered to the multicast service, and the multicast server may deliver the same to the multicast gateway via the interface M.

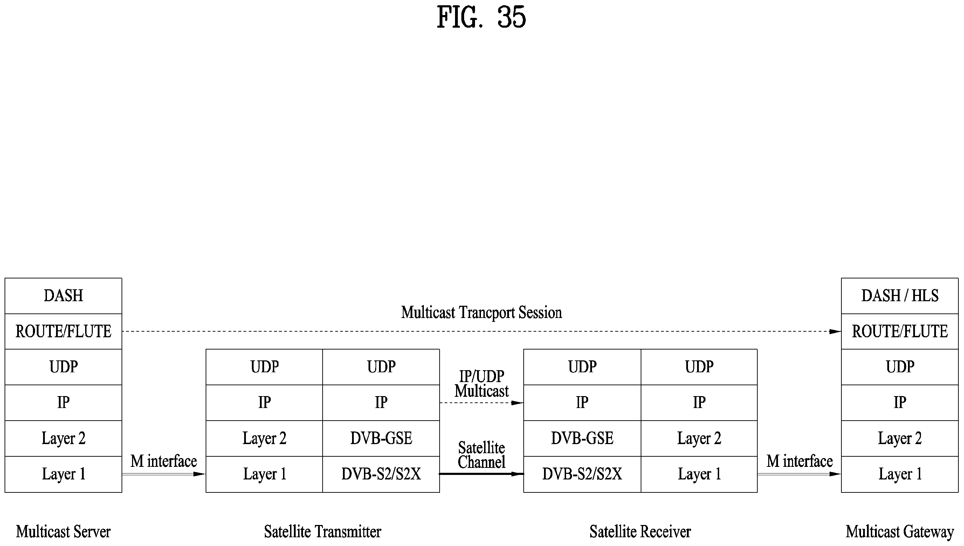

FIG. 35 illustrates an interface configuration according to embodiments.

The M interface according to the embodiment is configured as follows.

Based on the M interface including a unidirectional link, the method/apparatus according to the embodiments may perform unidirectional delivery. In this case, the unidirectional link may be configured with a satellite channel, the physical layer may be configured with DVB-S2 (Digital Video Broadcasting - Satellite - Second Generation) or DVB-S2X (DVB-S2 Extensions), and the data link layer may be configured with DVB-GSE (Digital Video Broadcasting-Generic Stream Encapsulation).

When the multicast server transmits a multicast transport session to the multicast gateway through the protocol defined in the M interface, the satellite transmitter receives the session and transmits the same to a satellite receiver on the satellite channel. The satellite receiver delivers the session to the multicast gateway according to the protocol defined in the M interface. When the multicast transport session is transmitted on the satellite channel, it may be multiplexed into single signaling. In order to de-multiplex the multicast transport session and pass the same to the multicast gateway, the multicast transport session may be mapped to IP multicast transmitted on the satellite channel. In this case, data link layer signaling may be used to map the multicast transport session.

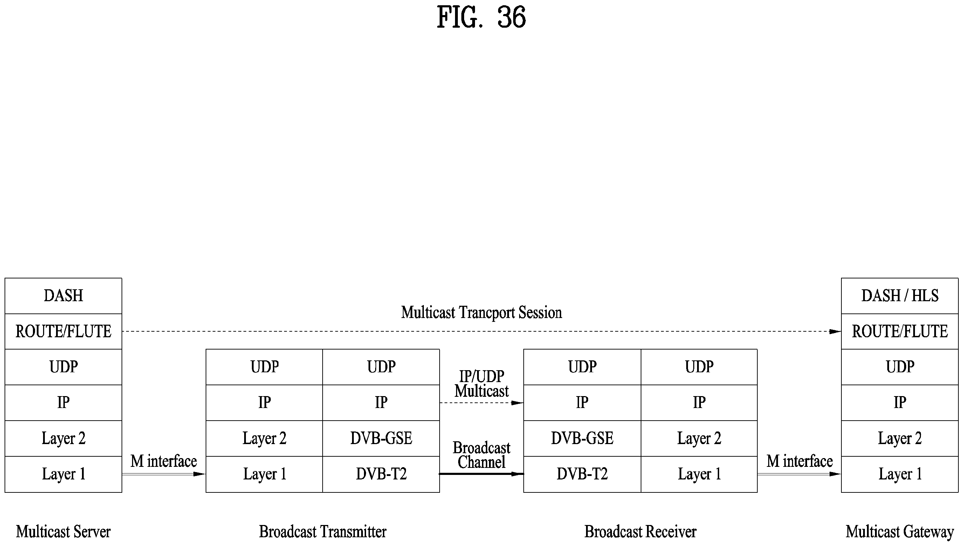

FIG. 36 illustrates an interface configuration according to embodiments.

Based on the M interface including a unidirectional link, the method/apparatus according to the embodiments may perform unidirectional delivery. In this case, the unidirectional link may be configured with a broadcast channel, the physical layer may be configured with DVB-T2 (DVB - Terrestrial 2), and the data link layer may be configured with DVB-GSE.

When the multicast server transmits a multicast transport session to the multicast gateway through the protocol defined in the M interface, the broadcast transmitter receives the session and transmits the same to a broadcast receiver on the broadcast channel. The broadcast receiver delivers the session to the multicast gateway according to the protocol defined in the M interface. When the multicast transport session is transmitted on the broadcast channel, it may be multiplexed into single signaling. In order to de-multiplex the multicast transport session and pass the same to the multicast gateway, the multicast transport session may be mapped to IP multicast transmitted on the broadcast channel. In this case, data link layer signaling may be used to map the multicast transport session.

A DVB-DASH based service according to ETSI TS 103 285 may be included in the DVB-I (Internet) service list according to the embodiments. The DVB-DASH based service of DVB-NIP (Native IP) may be carried using the DVB-MABR defined FLUTE/ROUTE protocol over the DVB broadcast network defined in ETSI TS 103 769.

Signaling and A/V services (using DVB-DASH ETSI TS 103 285) are carried on the broadcast RF channel via IP multicast. DVB-NIP IP multicast sessions are carried using the GSE-Lite profile as defined in clause D.2 of ETSI TS 102 606-1 or multi-protocol encapsulation as defined in ETSI EN 301 192 at the data link layer. DVB-S2X (ETSI 302 307-1, ETSI 302 307-2), DVB-S2 (ETSI 302 307-1) and DVB-T2 (ETSI TS 102 755) at the physical layer may also be used.

Based on the logical layer control structure for multicast transport session mapping according to the embodiments, the method/apparatus according to the embodiments may perform unidirectional delivery.

### GSE-LLC structure

In the configuration for the interface M according to the embodiments, DVB-GSE LLC (Logical Layer Control) is used as an embodiment of a method of using data link layer signaling to map a multicast transport session.

DVB-GSE LLC consists of Link Control Data (LCD) and Network Control Data (NCD).

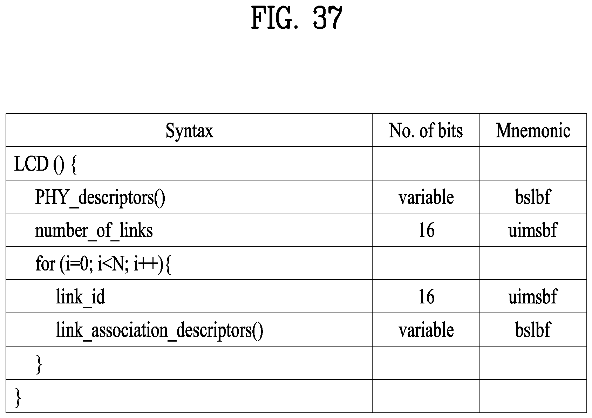

The syntax of the LCD may be configured as shown in FIG. 37.

That is, FIG. 37 represents a configuration of link control data (LCD) according to embodiments.

PHY_descriptors() - A descriptor for the modulation system of the physical layer.

number_of_links - Indicates the number of links or physical streams included in the modulation system of the physical layer.

link_id - An identifier for a physical link included in the modulation system of the physical layer.

link_association_descriptors() may be configured as described below.

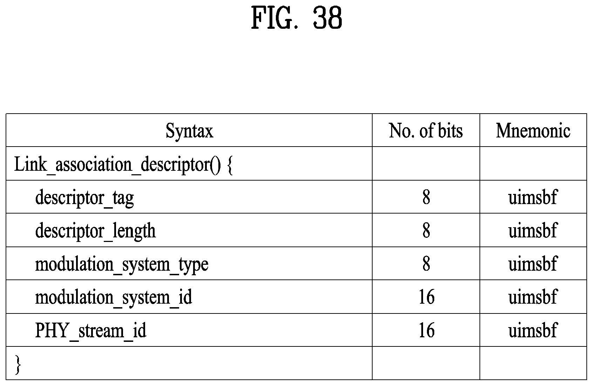

FIG. 38 specifies one of link_association_descriptors () included in LCD according to embodiments. The link_association_descriptor () of FIG. 38 is identified by a corresponding link_id included in LCD.

modulation_system_type - Indicates the type of the broadcast modulation system. For example, it may be encoded as follows.
0x00 - DVB-S2/S2X
0x01 - DVB-T2

modulation_system_id - A unique identifier for the modulation system.

PHY_stream_id - This may be encoded according to modulation_system_type as follows:
modulation_system_type = 0x00 - Input Stream Identifier (ISI) of DVB-S2/S2X
modulation_system_type = 0x01 - Physical layer pipe of DVB-T2

The NCD may be configured as described below.

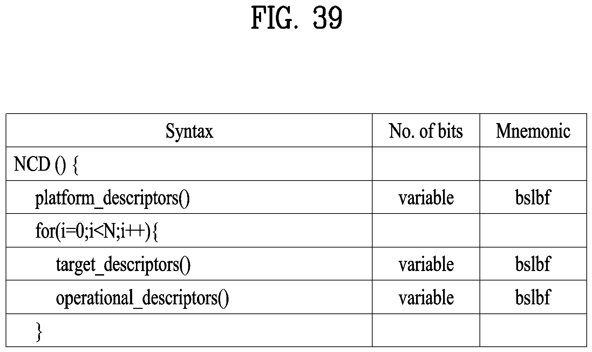

FIG. 39 illustrates network control data (NCD) according to embodiments.

In the NCD structure, platform_descriptor(), target_descriptor(), and operational_descriptor may be defined for each signaling purpose.

Regarding target_descriptors(), when the GSE has only IP address information, it may process multicast according to embodiments. Accordingly, target_descriptors( ) according to the embodiments may address an issue by including information for multicast identification.

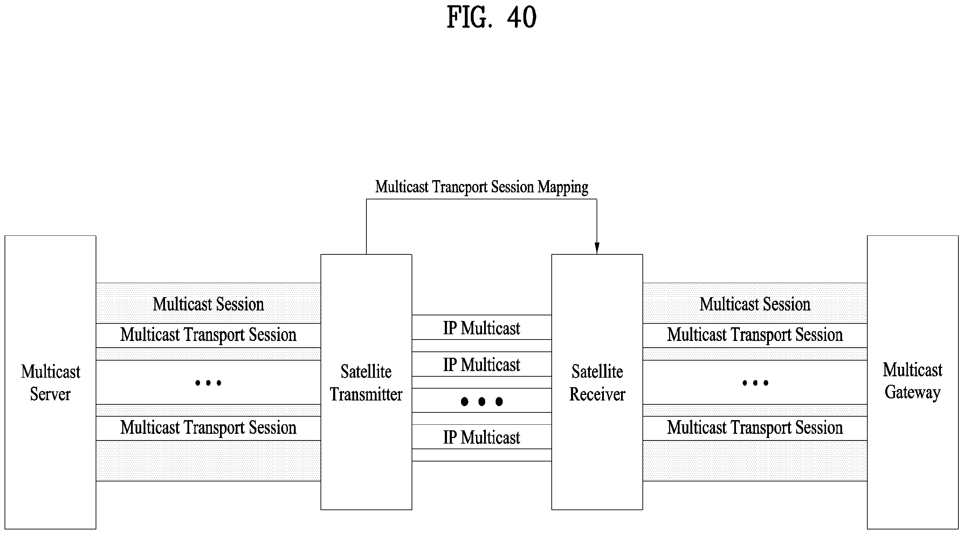

FIG. 40 illustrates a multicast transport session according to embodiments.

The method/apparatus according to the embodiments may perform transport session mapping based on a multicast transport session.

A multicast transport session transmitted from the multicast server may be defined as shown in FIG. 40.

The multicast transport session transmitted from the multicast server may be mapped to an IP multicast stream by a unidirectional delivery transmitter (e.g., satellite transmitter), and carry IP multicast stream information to a unidirectional delivery receiver (e.g., satellite receiver).

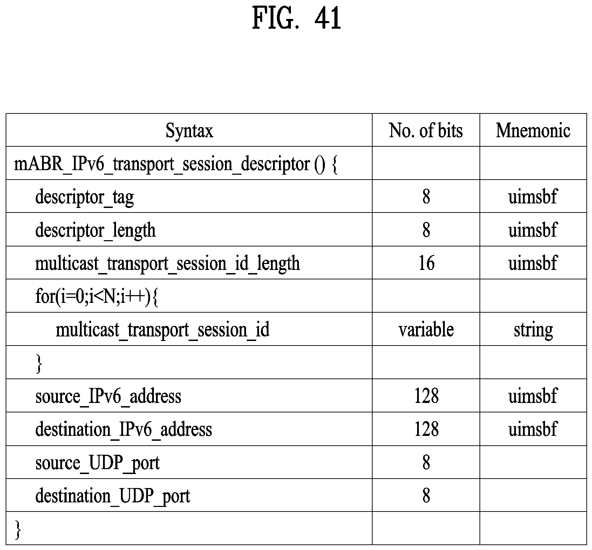

FIG. 41 illustrates a mABR IPv6 transport session descriptor according to embodiments.

When the method/apparatus according to the embodiments transmits a multicast transport session through IPv6, a transport session descriptor as shown in FIG. 41 may be included in the target descriptor of NCD.

descriptor_tag - Corresponds to the identifier for the descriptor.

descriptor_length - Indicates the length of the descriptor.

multicast_transport_session_id_length - Indicates the length of the following multicast_transport_session_id in bytes.

multicast_transport_session_id - A unique identifier for a multicast transport session. It has the same value as the id included in the multicast ABR session configuration.

source_IPv6_address - Indicates the source IP address for the current multicast transport session transmitted over IPv6.

destination_IPv6_address - Indicates the group (i.e., destination) IP address for the current multicast transport session transmitted over IPv6.

source_UDP_port - Indicates the source UDP port for the current multicast transport session.

destination_UDP_port - Indicates the destination UDP port for the current multicast transport session.

According to the embodiments, by additionally defining source_UDP_port and destination_UDP_port in the GSE-related descriptor (e.g., transport session descriptor), the method/device according to the embodiments may support multicast.

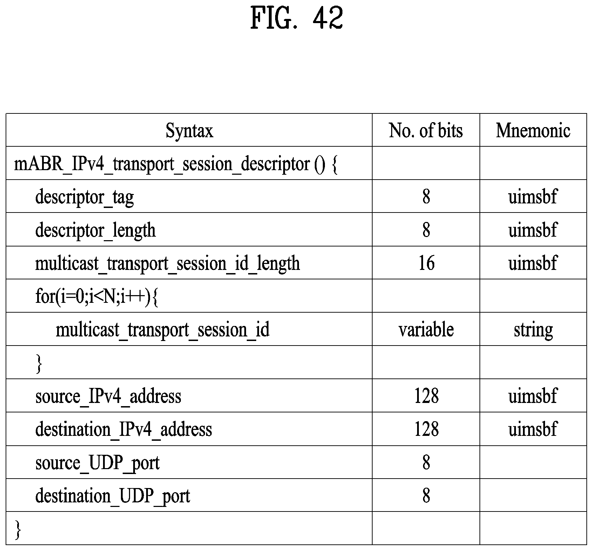

FIG. 42 illustrates a mABR IPv4 transport session descriptor according to embodiments.

The method/device according to the embodiments may include a transport session descriptor as shown in FIG. 42 in a target descriptor of NCD when a multicast transport session is transmitted over IPv4.

descriptor_tag - Corresponds to the identifier for the descriptor.

descriptor_length - Indicates the length of the descriptor.

multicast_transport_session_id_length - Indicates the length of the following multicast_transport_session_id in bytes.

multicast_transport_session_id - A unique identifier for a multicast transport session. It has the same value as the id included in the multicast ABR session configuration.

source_IPv6_address - Indicates the source IP address for the current multicast transport session transmitted over IPv4.

destination_IPv6_address - Indicates the group (i.e., destination) IP address for the current multicast transport session transmitted over IPv4.

source_UDP_port - Indicates the source UDP port for the current multicast transport session.

destination_UDP_port - Indicates the destination UDP port for the current multicast transport session.

When multiple multicast transport sessions are mapped to a single link, multiple mABR_IPv6_transport_session_descriptor () or mABR_IPv4_transport_session_descriptor () may be included in the NCD loop.

According to embodiments, by additionally defining source_UDP_port and destination_UDP_port in the GSE-related descriptor (e.g., the transport session descriptor of FIG. 41 or 42), the method/device according to the embodiments may support multicast.

The transport session descriptor of FIGS. 41 and/or 42 may be referred to as a multicast list descriptor.

The transport session descriptor (i.e., multicast list descriptor) of FIGS. 41 and/or 42 carries a list of multicasts delivered in the physical link. In one embodiment, this descriptor carries a list of IPv4 multicasts carried in the physical link and provides information for processing UDP/IPv4 packets carrying multicasts in the DVB-GSE layer. In addition, this descriptor carries a list of IPv6 multicasts delivered in the physical link and provides information for processing UDP/IPv6 packets carrying multicasts in the DVB-GSE layer.

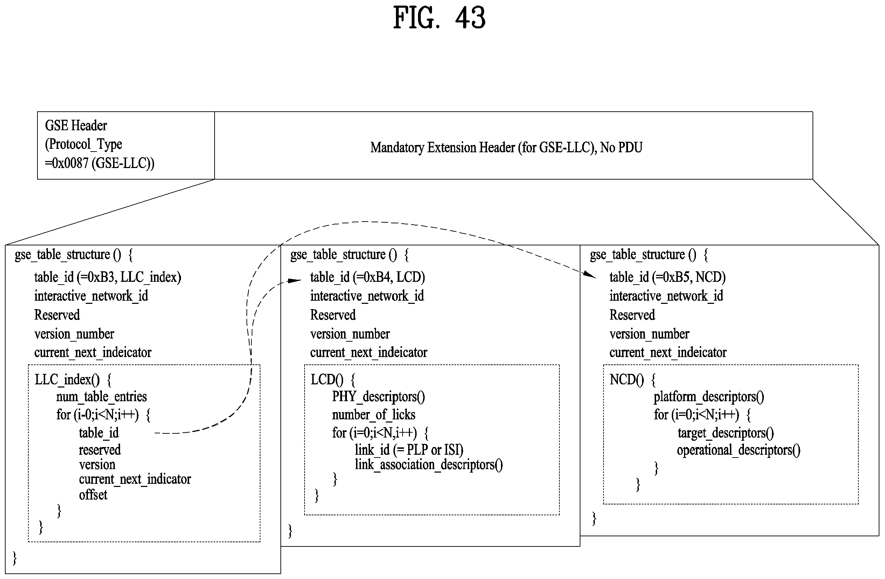

FIG. 43 illustrates an exemplary header structure of a GSE packet for transmitting GSE-LLC.

According to embodiments, GSE-LLC is signaling information of the data link layer, and is composed of LCD and NCD.

According to embodiments, after a mandatory extension header is configured in a GSE packet for transmission of GSE-LLC, the index data (LLC_index), LCD, and NCD are transmitted in a table structure (gse_table_structure()) through the mandatory extension header. In this case, protocol data unit (PDU) data is not present in the GSE packet.

In the present disclosure, the index data (LLC_index), LCD, and NCD in the table structure (gse_table_structure()) transmitted through the extended header of the GSE packet will be referred to as LLC data. According to an embodiment, the LLC data may be divided into an index part and a record part, and the record part may be further divided into a plurality of tables. Here, each table constituting the record part may have a GSE table structure or a general section table structure.

In this case, in an embodiment, the protocol_type field included in the GSE header is assigned 0x0087 to identify GSE-LLC.

Each gse_table_structure() may include a table_id field, an interactive_network_id field, a version_number field, and a current_next_indicator field.

According to embodiments, when the value of the table_id field is 0xB3, gse_table_structure() includes index data LLC_index. When the value is 0xB4, gse_table_structure() includes LCD. When the value is 0xB5, gse_table_structure() includes NCD.

The table_id field included in the index data LLC_index indicates LCD (e.g., 0xB4) or NCD (e.g., 0xB5).

According to the embodiments, for details of the information included in LCD() and NCD() carried in the extension header of the GSE packet as in FIG. 43, a description of which is omitted herein to avoid redundant description, refer to the descriptions of FIGS. 37 to 39. In order to map IP multicast transmitted through DVB GSE to a physical layer resource, and to transmit IP multicast list information to the reception device, a multicast list descriptor may be included in target_descriptors() of NCD() and GSE-LLC data may be transmitted.

In addition, the link_id field may be used in LCD() to identify a physical layer resource. The link_id field may be mapped to PLP_ID in the case of DVB T2 and may be mapped to ISI_ID in the case of DVB-S2/S2X.

The multicast list descriptor according to embodiments carries an IPv4 multicast list or an IPv6 multicast list carried on a physical link in interactive_network_id. This descriptor may include additional information for processing of a UDP/IPv4 packet or a UDP/IPv6 packet carrying multicast in the DVB-GSE layer. In the present disclosure, a UDP/IPv4 packet may be referred to as an IPv4 packet and a UDP/IPv6 packet may be referred to as an IPv6 packet.

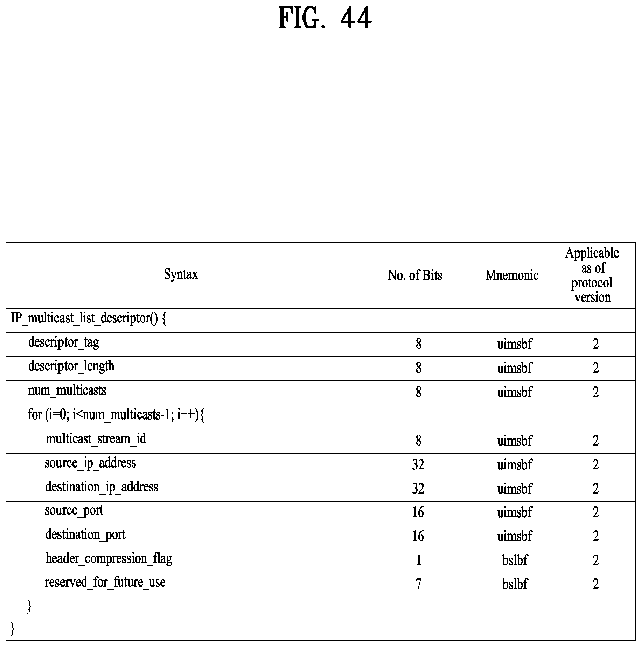

FIG. 44 shows an exemplary syntax structure of IP_multicast_list_descriptor() according to embodiments.

FIG. 44 shows an example of transmitting a multicast stream through IPv4.

According to embodiments, IP_multicast_list_descriptor() includes a num_multicasts field.

The num_multicasts field indicates the number of multicasts signaled in this descriptor.

According to the embodiments, IP_multicast_list_descriptor() includes an iteration statement that is iterated as many times as the value of the num_multicasts field. In this case, in an embodiment, i is initialized to 0, is incremented by 1 each time the iteration statement is executed. Also, the iteration statement is iterated until i becomes the value of the num_multicasts field. The iteration statement may include a multicast_stream_id field, a source_ip_address field, a destination_ip_address field, a source_port field, a destination_port field, and a header_compression_flag field.

The multicast_stream_id field uniquely identifies a multicast stream.

The source_ip_address field indicates a source IPv4 address of a UDP/IPv4 packet carrying a multicast stream identified by the multicast_stream_id field. That is, it indicates a source IPv4 address for the multicast stream identified by the multicast_stream_id field.

The destination_ip_address field indicates a destination IPv4 address of the UDP/IPv4 packet carrying the multicast stream identified by the multicast_stream_id field. That is, it indicates a destination IPv4 address for the multicast stream identified by the multicast_stream_id field.

The source_port field indicates a source UDP port number of the UDP/IPv4 packet carrying the multicast stream identified by the multicast_stream_id field. That is, it indicates a source UDP port number for the multicast stream identified by the multicast_stream_id field.

The destination_port field indicates a destination UDP port number of the UDP/IPv4 packet carrying the multicast stream identified by the multicast_stream_id field. That is, it indicates a destination UDP port number for the multicast stream identified by the multicast_stream_id field.

In other words, the multicast_stream_id field may be assigned an ID value for a multicast stream having a unique combination of the source IP address field, destination IP address field, source port number field, and destination port number field, which follow the multicast_stream_id field.

The header_compression_flag field indicates whether header compression is applied to the multicast stream (i.e., corresponding IP multicast or IP stream) identified by the multicast_stream_id field. For example, when the value of the header_compression_flag field is 0, it may indicate that header compression is not applied to the multicast stream (i.e., corresponding IP multicast or IP stream). When the value is 1, it may indicate that header compression is applied to the multicast stream (i.e., corresponding IP multicast or IP stream). In other words, when the value of the header_compression_flag field is 0, it indicates that the multicast stream is transmitted without header compression in the DVB-GSE layer. When the value of the header_compression_flag field is 1, it indicates that header compression is applied to the multicast stream in the DVB-GSE layer. In this case, signaling information (e.g., a Robust Header Compression-Unidirectional Mode (ROHC-U) descriptor) on header compression-related configuration parameters may be additionally transmitted. In other words, when the value of the header_compression_flag field is 1, the ROHC-U descriptor is signaled.

A detailed description of the header compression and the ROHC descriptor will be provided later.

The ROHC descriptor in the present disclosure may be referred to as a ROHC-U_multicast_descriptor or multicast_ROHC-U_descriptor or ROHC-U information.

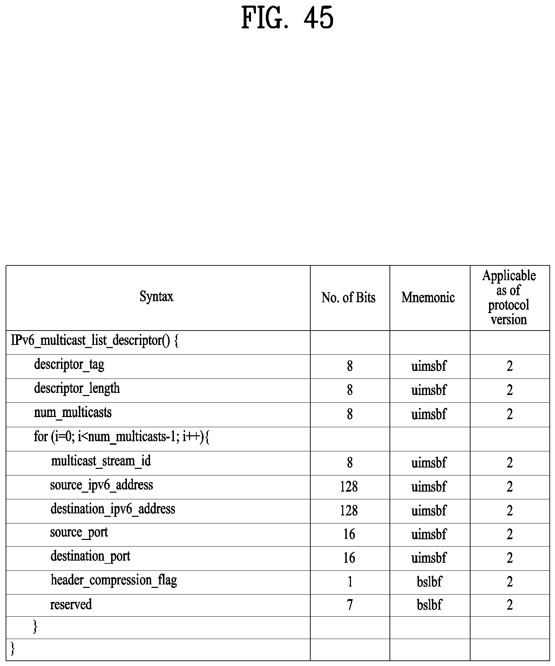

FIG. 45 illustrates an example of a syntax structure of IPv6_multicast_list_descriptor() according to embodiments.

FIG. 45 illustrates an example of transmitting a multicast stream through IPv6.

IPv6_multicast_list_descriptor() in FIG. 45 is the same as the descriptor in FIG. 44 except that a source_ipv6_address field, a destination_ipv6_address field, a source_port field, and a destination_port field indicate a source IP address, destination IP address, source UDP port number, and destination UDP port number of a UDP/IPv6 packet carrying a multicast stream identified by the multicast_stream_id field. Therefore, for details of each field of FIG. 45, a description of which is omitted herein, refer to the description of each field of FIG. 44.

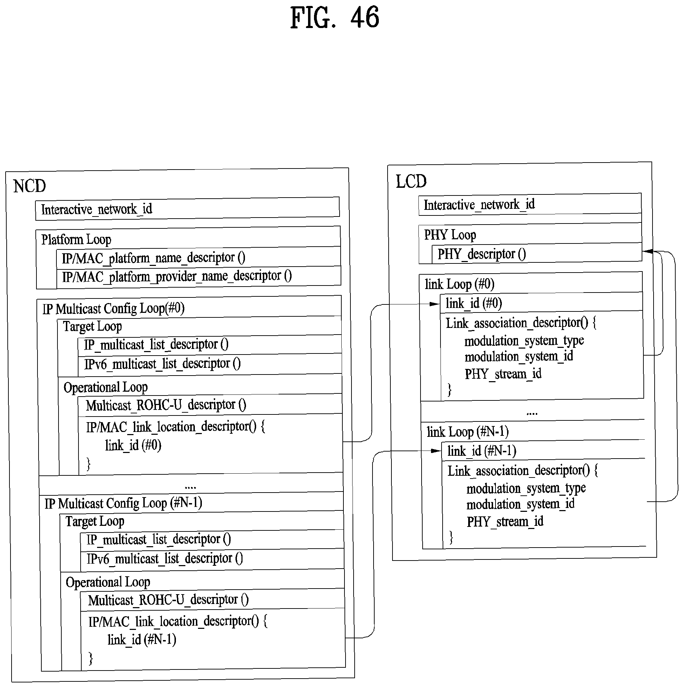

FIG. 46 illustrates another example of the NCD syntax structure and the LCD syntax structure according to embodiments.

In FIG. 46, the NCD includes an interactive_network_id field, a platform loop, and one or more IP multicast configuration loops.

A network may be identified through the interactive_network_id field.

According to embodiments, the platform loop may include IP/MAC_platform_name_descriptor() and IP/MAC_platform_provider_descriptor().

According to embodiments, each IP multicast configuration loop may include a target loop and an operational loop.

The target loop may include the IP Multicast List descriptor of FIG. 44 and the IPv6 Multicast List descriptor of FIG. 45.

The operational loop may include multicast_ROHC-U_descriptor(). The multicast_ROHC-U_descriptor() may include IP/MAC_link_location_descriptor(). The IP/MAC_link_location_descriptor() may include a link_id field.

The link_id field uniquely identifies a physical link in the interactive network identified by the interactive_network_id field. That is, the physical link may be identified through the link_id field of IP/MAC_link_location_descriptor().

That is, since the Multicast List descriptor in the target loop signals information on a plurality of IP/IPv6 multicast streams, and the IP/MAC_link_location_descriptor() in the operational loop signals the link_id field, information on a plurality of IP/IPv6 multicast streams is mapped to a link_id field.

The link_id field included in IP/MAC_link_location_descriptor() of the NCD is mapped to link_id having the same value in the link loop of the LCD. That is, the reference relationship between the NCD and the LCD may be indicated based on the link_id field.

The link loop of the LCD further includes Link_association_descriptor(). Link_association_descriptor() includes a modulation_system_type field, a modulation_system_id field, and a PHY_stream_id field. Accordingly, the link_id field of the LCD may be mapped to Link_association_descriptor() and identified by a value of the PHY_stream_id field of the physical layer.

For details of the fields in the LCD, a description of which is omitted herein to avoid redundant description, refer to the description of the fields of FIGS. 37 and 38.

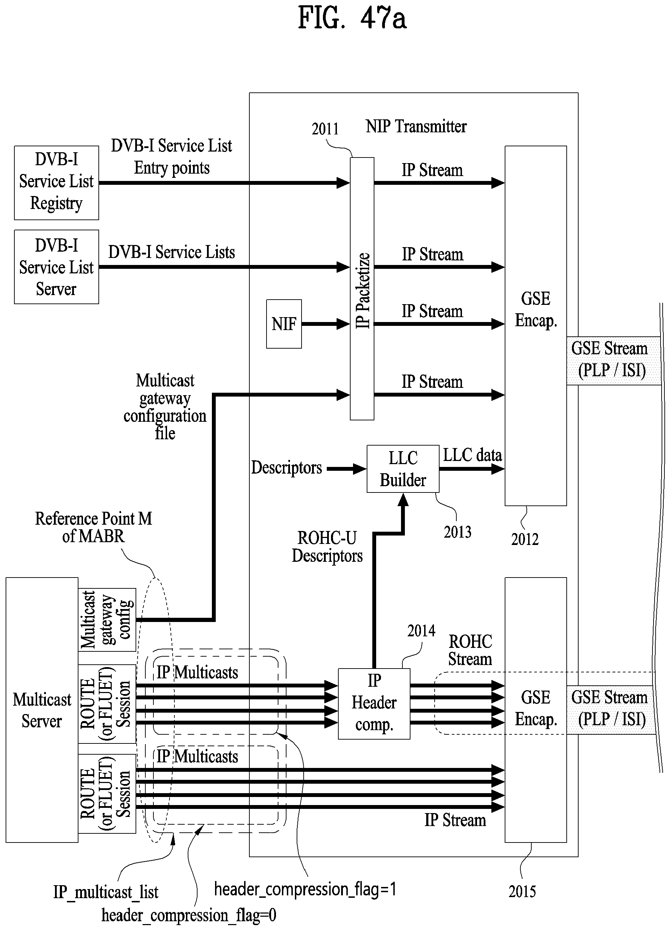

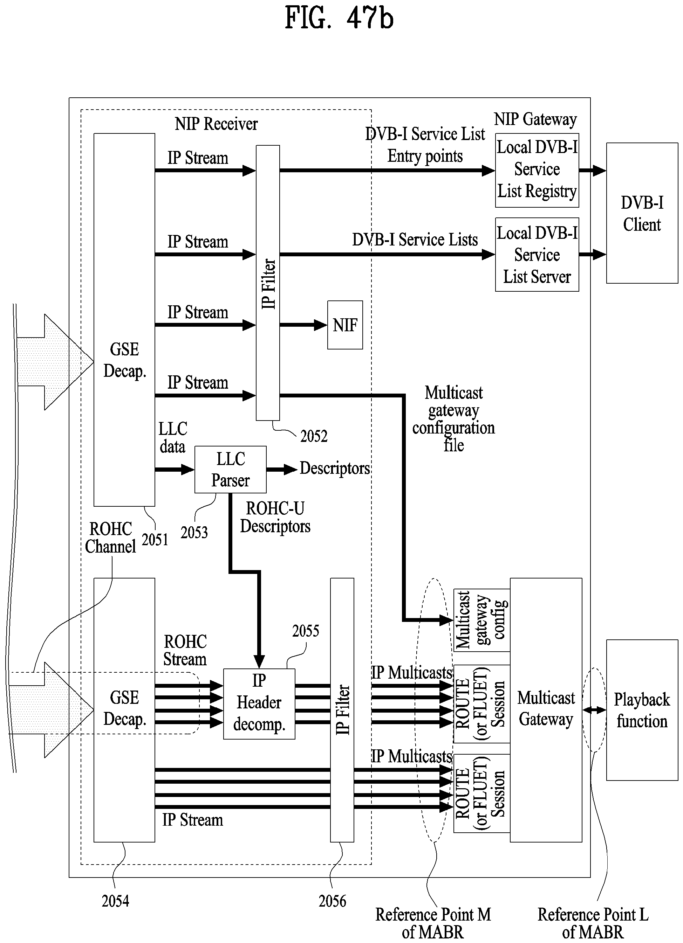

FIG. 47a and FIG. 47b are an exemplary block diagram illustrating a configuration of an entire system for multicast transmission and reception in a unidirectional delivery structure according to embodiments. The system of FIG. 47a and FIG. 47b may be referred to as a unidirectional delivery system for transmission/reception of multicast ABR content. The unidirectional delivery structure has the same meaning as the unidirectional delivery system. The multicast ABR contents in the present disclosure may be referred to as a multicast service data or a media object or media contents.

According to embodiments, FIG. 47a and FIG. 47b show a data flow for transmitting a GSE stream through a DVB-NIP-based transmitter (NIP transmitter) and receiving the GSE stream through a DVB-NIP-based receiver (NIP receiver).

In FIG. 47a and FIG. 47b, the DVB-I service list registry provides information (e.g., URL) on the DVB-I service list entry points to an IP packetizer 2011 in the NIP transmitter, and a DVB-I service list server provides information on the DVB-I service lists (or service list information) to the IP packetizer 2011 in the NIP transmitter.

The IP packetizer 2011 packetizes the information on DVB-I service list entry points into one or more IP packets, and outputs an IP stream including the one or more IP packets to a GSE encapsulator 2012.

The IP packetizer 2011 packetizes the information on the DVB-I service lists into one or more IP packets, and outputs an IP stream including the one or more IP packets to the GSE encapsulator 2012.

The IP packetizer 2011 packetizes a network information file (NIF) into one or more IP packets, and outputs an IP stream including the one or more IP packets to the GSE encapsulator 2012. The IP packetizer 2011 may packetize a service information file (SIF) into one or more IP packets and output an IP stream including the one or more IP packets to the GSE encapsulator 2012.

The IP packetizer 2011 packetizes a multicast gateway configuration file transmitted from the multicast server into one or more IP packets, and outputs an IP stream including the one or more IP packets to the GSE encapsulator 2012.

In an embodiment, each IP packet generated by the IP packetizer 2011 is a UDP/IP packet including a UDP header and an IP header.

The GSE encapsulator 2012 packetizes an input IP stream into GSE packets. In one embodiment, the IP streams are included in the payload of the GSE packets.

An LLC builder 2013 in the NIP transmitter receives descriptors included in the NCD and LCD and the ROHC-U descriptor, generates LLC data, and then outputs the data to the GSE encapsulator 2012.

The LLC data includes NCD and LCD.

According to embodiments, the LLC data generated by the LLC builder 2013 may have a table structure (gse_table_structure()) as shown in FIG. 43.

In this case, three table structures (gse_table_structure()) are created, and the table_id fields in the respective table structures (gse_table_structure()) indicate index data (e.g., 0xB3), LCD (e.g., 0xB4), and NCD (e.g., 0xB5), respectively.

In the present disclosure, the table structure (gse_table_structure()) including index data (LLC_index), the table structure (gse_table_structure()) including the LCD, and the table structure (gse_table_structure()) including the NCD may be referred to as LLC data.

According to embodiments, IP_multicast_list_descriptor() of FIG. 44 and IPv6_multicast_list_descriptor() of FIG. 45 are included in the target loop of the NCD.

The LLC data is included in the mandatory extension header of the GSE packet by the GSE encapsulator 2012 as shown in FIG. 43. In this case, the GSE packet has no PDU.

The GSE stream including the GSE packets generated by the GSE encapsulator 2012 is transmitted to a GSE decapsulator 2051 in the NIP receiver of the NIP gateway.

According to embodiments, the GSE stream may be transmitted through a terrestrial or satellite broadcasting system. In this case, for the terrestrial broadcast system, the GSE stream may be distinguished through a physical layer pipe (PLP) ID. For the satellite broadcasting system, the GSE stream may be distinguished through an input stream identifier (ISI).

That is, in the unidirectional delivery structure, in order to transmit information (e.g., URL) on DVB-I service list entry points provided by the DVB-I service list registry to a DVB-I client, the IP packetizer 2011 of the NIP transmitter may configure an IP stream including information on DVB-I service list entry points configured in the XML format, and the GSE encapsulator 2012 may configure a GSE stream including the IP stream and transmit the same to the NIP gateway. Then, the GSE decapsulator 2051 of the NIP gateway may extract the IP stream including the information on the DVB-I service list entry points from the received GSE stream and output the same to the IP filter 2052. The IP filter 2052 may extract the information on the DVB-I service list entry points from the IP stream and deliver the same to the DVB-I client. In this case, the NIP gateway may perform the function of a local DVB-I service list registry.

In addition, in the unidirectional delivery structure, in order to transmit information on DVB-I service lists provided from the DVB-I service list server to the DVB-I client, the IP packetizer 2011 of the NIP transmitter may configure an IP stream including information on the DVB-I service lists, and the GSE encapsulator 2012 may configure a GSE stream including the IP stream and transmit the same to the NIP gateway. Then, the GSE decapsulator 2051 of the NIP gateway may extract the IP stream including the information on the DVB-I service lists from the received GSE stream and output the same to the IP filter 2052. The IP filter 2052 may extract the information on the DVB-I service lists from the IP stream, and then deliver the same to the DVB-I client. In this case, the NIP gateway may perform the function of the local DVB-I service list server.

According to embodiments, the IP filter 2052 may extract an NIF and/or an SIF from the IP stream extracted by the GSE decapsulator 2051 and provide the same to a necessary block.

The multicast server may transmit multicast service data for a multicast service (e.g., media contents) and signaling information to the multicast gateway via an M interface.

Here, the data transmitted via the M interface may include one or more multicast sessions for transmission of multicast service data and a multicast gateway configuration session for transmission of multicast gateway configuration information as follows.

Each multicast session may include a plurality of multicast transport sessions. Each of the multicast transport sessions may be composed of a ROUTE session or a FLUTE session.

Each multicast transport session may be identified by an IP address, a UDP port, a transmission session ID (TSI), or the like. Each multicast transport session may be referred to as an IP multicast, a multicast stream, an IP multicast stream, or an IP stream.

In the unidirectional delivery structure, information related to the multicast gateway configuration session may be transmitted in an in-band multicast gateway configuration method.

According to embodiments, data constituting a multicast gateway configuration session may be a multicast gateway configuration file. As described above, the multicast gateway configuration file is configured as an IP stream through the IP packetizer 2011 and is configured as a GSE stream and transmitted to the NIP gateway through the GSE encapsulator 2012.

In addition, each multicast transport session transmitted from the multicast server through ROUTE or FLUTE may be composed of each IP stream. That is, the multicast transport session or the multicast gateway configuration session may each be composed of an IP stream.

According to embodiments, header compression may be selectively applied to each IP stream (i.e., IP multicast).

According to embodiments, one or more IP streams to which header compression is applied are header-compressed by a compressor 2014 by the ROHC scheme and then provided to a GSE encapsulator 2015, while one or more IP streams to which header compression is not applied are provided to the GSE encapsulator 2015.

According to embodiments, the header_compression_flag field may be used to signal whether the header is compressed on a per IP multicast basis. The header_compression_flag field is included in IP multicast list (e.g., the multicast loop of IP_multicast_list_descritptor() of FIG. 44 and the multicast loop of IPv6_multicast_list_descritptor() of FIG. 45).

That is, the header_compression_flag field indicates whether header compression is applied to the multicast stream (i.e., the corresponding IP multicast or IP stream) identified by the multicast_stream_id field. For example, when the value of the header_compression_flag field is 0, it may indicate that header compression is not applied to the multicast stream (i.e., the corresponding IP multicast or IP stream). When the value is 1, it may indicate that header compression is applied to the multicast stream (i.e., the corresponding IP multicast or IP stream).

Also, when the value of the header_compression_flag field is 1, signaling information (e.g., Robust Header Compression-Unidirectional Mode (ROHC-U) descriptor) about a configuration parameter related to header compression may be additionally transmitted. In the present disclosure, the ROHC-U descriptor may be referred to as ROHC-U_multicast_descriptor or multicast_ROHC-U_descriptor.

According to embodiments, the ROHC-U descriptor may be included in the LLC data through the LLC builder 2013 and the GSE encapsulator 2012 and then be encapsulated into at least one GSE packet and transmitted. That is, the present disclosure may provide transmission of an out-of-band (e.g., GSE-LLC) of the ROHC-U descriptor including configuration parameters and context information.

A detailed description of the information included in the ROHC-U descriptor will be provided later.

That is, in the unidirectional delivery structure, header compression may be selectively applied for each IP multicast (i.e., IP stream) including multicast service data for a multicast service and signaling information that is provided by the multicast server, and a GSE stream including at least one IP stream to which the header compression is applied and/or at least one IP stream to which the header compression is not applied may be configured and transmitted to the NIP gateway. In this case, each GSE stream may include a plurality of IP multicasts. In the case where ROHC-based header compression is applied to the IP stream, the ROHC stream generated by the header compression is included in the corresponding GSE stream. According to embodiments, the GSE stream may be transmitted via a terrestrial or satellite broadcasting system. In this case, for the terrestrial broadcast system, the GSE stream may be distinguished based on the PLP. For the satellite broadcasting system, the GSE stream may be distinguished based on the ISI. Then, the GSE decapsulator 2051 of the NIP gateway extracts the at least one IP stream to which the header compression is applied and/or the at least one IP stream to which the header compression is not applied from the received GSE stream. Then, the at least one IP stream to which the header compression is applied (i.e., ROHC stream) is output to a header decompressor 2055. The header decompressor 2055 headerdecompresses the header-compressed IP stream (i.e., ROHC stream) based on the ROHC-U descriptor provided from the LLC parser 2053, and then outputs the decompressed stream to an IP filter 2056. Also, the at least one IP stream to which the header compression is not applied and which is extracted from the GSE stream is output to the IP filter 2056. Here, whether the header compression is applied may be checked using the header_compression_flag field. According to embodiments, the LLC parser 2053 extracts LLC data from the GSE stream, extracts the header_compression_flag field from the LLC data. Then, when the value of the header_compression_flag field is 1, the parser extracts the ROHC-U descriptor from the LLC data and provides the same to the header decompressor 2055.

The IP filter 2056 extracts one or more multicast sessions and a multicast gateway configuration session from the input IP streams and outputs the same to the multicast gateway.

According to embodiments, the multicast gateway receives one or more multicast transport sessions packaged in IP multicast through a ROUTE session or a FLUTE session, and then provides the same to a playback function via an L interface through the HTTP(S) (HyperText Transfer Protocol)(S) scheme or the like.

When the multicast gateway is configured for multicast service in an ISP network, it may be configured in a router or a home gateway provided by an ISP operator. When the multicast gateway is configured for multicast service in a mobile network such as a 5G system, it may be configured in the mobile network. When the multicast gateway is configured for multicast service in a satellite broadcast network, it may be configured in a set-top box (STB) capable of receiving satellite broadcasts. When the multicast gateway is configured for multicast service in a terrestrial broadcast network, it may be configured in a broadcast receiver.

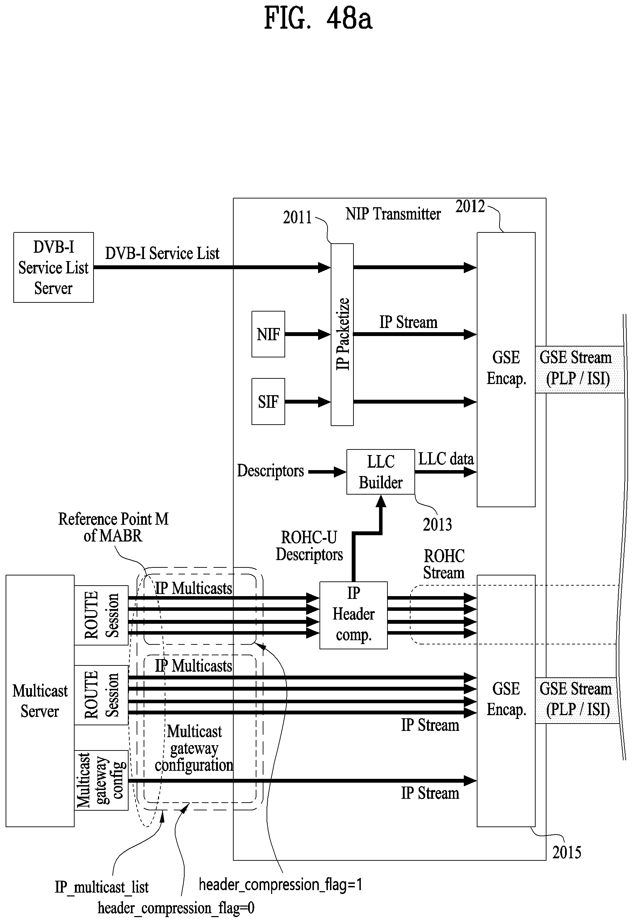

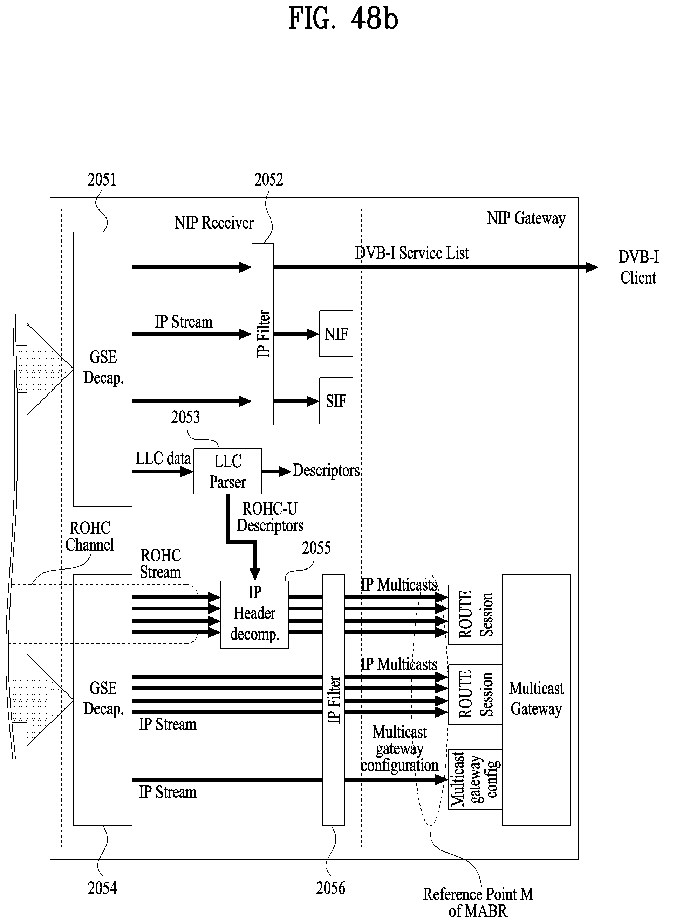

FIG. 48a and FIG. 48b are a block diagram illustrating a configuration of an entire system for multicast transmission/reception in a unidirectional delivery structure according to other embodiments. The system of FIG. 48a and FIG. 48b may be referred to as a unidirectional delivery system for transmission/reception of multicast service data (e.g., multicast ABR contents). The unidirectional delivery structure has the same meaning as the unidirectional delivery system.

According to embodiments, FIG. 48a and FIG. 48b show a data flow for transmitting a GSE stream through a DVB-NIP-based transmitter (NIP transmitter) and receiving the GSE stream through a DVB-NIP-based receiver (NIP receiver).

In FIG. 48a and FIG. 48b, the same reference numbers will be used for the same elements as those in FIG. 47a and FIG. 47b, and the redundant description thereof will be omitted.

In FIG. 48a and FIG. 48b, the IP stream including the multicast gateway configuration file provided from the multicast server is output to the GSE encapsulator 2015, and the IP filter 2056 of the NIP receiver extracts the multicast gateway configuration file from the IP stream, which is different from the configuration of FIG. 47a and FIG. 47b.

The operations of the transmission device and the reception device of FIG. 47a and FIG. 47b or FIG. 48a and FIG. 48b may define as follows.

The NIP transmitter may receive information about the DVB-I service list from the DVB-I service list server. In addition, it may encapsulate IP streams including IP packets containing multicast service data and multicast gateway configuration information into a GSE stream and transmit the same through a PLP. In addition, it may generate LLC data including descriptors for GSE-LLC and an ROHC-U descriptor, encapsulate the data into a GSE stream, and transmit the stream through the PLP. In an embodiment, a PLP for transmitting the GSE stream including the LLC data may be different from a PLP for transmitting a GSE stream including an IP stream. Accordingly, the GSE stream may be identified by a PLP ID.

The NIP transmitter may receive IP multicasts including multicast service data from the multicast server based on a ROUTE session or a FLUTE session, and may receive an IP stream including multicast gateway configuration information. According to embodiments, the NIP transmitter may generate an ROHC stream by performing IP header compression on a specific IP stream.

The NIP receiver may receive GSE streams and parse IP streams from the received GSE streams. In addition, it may deliver information on the DVB-I service list to the DVB-I client. The NIP receiver may extract IP multicasts including multicast service data and multicast gateway configurations by filtering the IP streams, and then deliver the same to the multicast gateway. Multicast configuration related operations may be processed based on a reference point M interface of MABR.

A GSE stream according to embodiments may be the same as a NIP stream or an MPE stream. The NIP stream is interpreted as a term referring to a stream including IP multicast data delivered by the DVB-NIP broadcast system.

Multicast service data transmitted over a broadcast channel is mainly generated by the multicast server, but may also be generated by a NIP signaling server related to each NIP stream. Every NIP stream may have only a single multicast server connected thereto. Each multicast server may create a multicast transport session composed of one or more multicast streams.

Next, ROHC-based header compression will be described.

The header compressor 2014 of the NIP transmitter may reduce the size of the header of IP packets in the input IP stream based on the ROHC scheme. Also, the header compressor 2014 may extract context information from the header-compressed IP packets and generate signaling information related to header compression. The header decompressor 2055 of the NIP receiver may reconstruct the original IP packets by restoring the headers the IR-DYN packets and compressed packets.

The ROHC stream from which the context information is extracted is encapsulated into one or more GSE packets by the GSE encapsulator 2015, and the ROHC-U descriptor including the context information is included in the LLC data by the LLC builder 2013. Then, it is encapsulated into at least one GSE packet by the GSE encapsulator 2012.

The GSE stream including the GSE packets generated by the GSE encapsulator 2012 is transmitted to the GSE decapsulator 2051 in the NIP receiver of the NIP gateway, and the GSE stream including the GSE packets generated by the GSE encapsulator 2015 are transmitted to the GSE decapsulator 2054 in the NIP receiver of the NIP gateway.

According to embodiments, the GSE stream may be transmitted through a terrestrial or satellite broadcast system. In this case, for the terrestrial broadcast system, the GSE stream may be distinguished through the PLP ID. For the satellite broadcast system, the GSE stream may be distinguished through the ISI. For example, in the terrestrial broadcast system, the PLP for transmitting GSE packets including the ROHC stream may be different from or the same as the PLP for transmitting GSE packets including the ROHC-U descriptor.

When the adaptation process is not performed, the ROHC stream output to the GSE encapsulator 2015 includes at least one IR packet, one or more IR-DYN packets, and compressed packets. In this case, the ROHC-U descriptor may include information (e.g., information related to header compression) other than the context information.

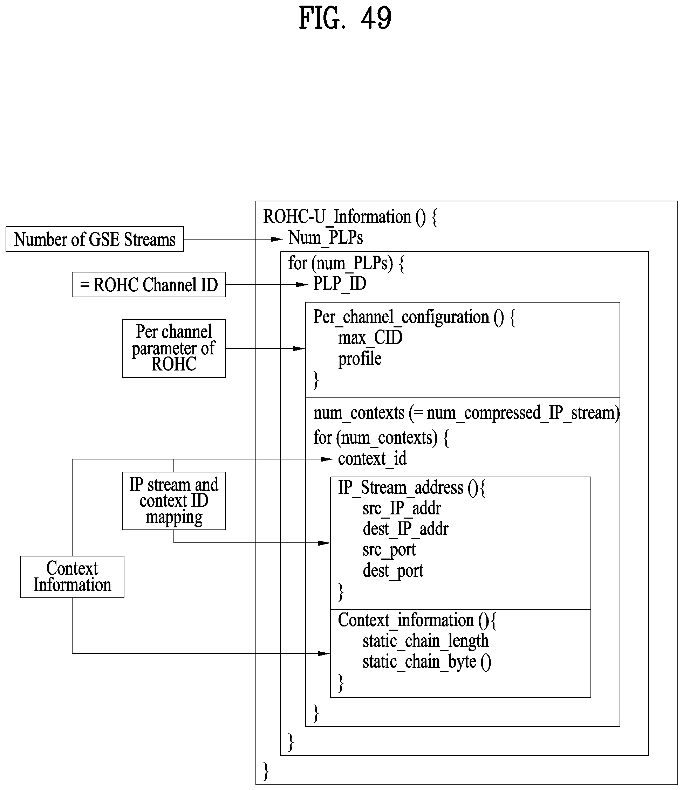

FIG. 49 shows an exemplary syntax structure of an ROHC-U descriptor (ROHC-U_information()) according to embodiments. According to embodiments, the ROHC-U descriptor may be referred to as ROHC-U information. FIG. 49 is an example for transmission of a GSE stream via a terrestrial broadcast system. When the GSE stream is transmitted via a satellite broadcast system, the ISI may be used in place of the PLP.

The ROHC-U descriptor of FIG. 49 may include a num_PLPs field.

The num_PLPs field indicates the number of PLPs signaled in this descriptor.

According to embodiments, the ROHC-U descriptor may include a first iteration statement that is iterated as many times as the value of the num_PLPs field.

The first iteration statement may include a PLP_ID field, per_channel_configuration(), and a num_contexts field.

The PLP_ID field identifies the PLP corresponding to the context(s) signaled in this iteration statement of the 'for' loop.

per_channel_configuration() may include a max_CID field and a profile field. embodiment, the header of each compressed packet (or compression packet) is composed of only 1 or 2-byte information.

According to embodiments, after the ROHC scheme-based header compression is performed, an adaptation process of extracting context information from an IR packet and/or an IR-DYN packet, and generating a ROHC-U descriptor including the extracted context information and information related to the header compression (e.g., configuration parameters) may be selectively performed.

According to embodiments, whether the adaptation process is performed may be signaled using separate flag information(e.g., adaptation_flag).

Next, a description of a case where the adaptation process is performed will be provided. The adaptation process may be performed by the header compressor 2014 or may be performed by a separate adaptation module.

In addition, the adaptation process provides out-of-band transmission of configuration parameters and context information between the compressor and the decompressor. That is, out-of-band transmission may be performed through GSE-LLC encapsulation of the ROHC-U descriptor. In other words, the adaptation function is used to reduce a decompression error and channel change delay, which result from loss of context information.

In the present disclosure, the static chain information extracted from an IR packet will be referred to as context information.

That is, an IR packet is detected from the ROHC stream generated by applying header compression to the IP stream, and context information (i.e., static chain information) is extracted from the header of the detected IR packet. In an embodiment, the IR packet from which the context information is extracted is transformed into an IR-DYN packet, and the transformed IR-DYN packet replaces the original IR packet and is inserted in the ROHC stream in the same order. According to an embodiment, the extracted context information is included in the ROHC-U descriptor.

The ROHC stream from which the context information is extracted includes IR-DYN packets and compressed packets.

The ROHC stream from which the context information is extracted is encapsulated into one or more GSE packets by the GSE encapsulator 2015, and the ROHC-U descriptor including the context information is included in the LLC data by the LLC builder 2013. Then, it is encapsulated into at least one GSE packet the GSE encapsulator 2012.

The GSE stream including the GSE packets generated by the GSE encapsulator 2012 is transmitted to the GSE decapsulator 2051 in the NIP receiver of the NIP gateway, and the GSE stream including the GSE packets generated by the GSE encapsulator 2015 are transmitted to the GSE decapsulator 2054 in the NIP receiver of the NIP gateway.

According to embodiments, the GSE stream may be transmitted through a terrestrial or satellite broadcast system. In this case, for the terrestrial broadcast system, the GSE stream may be distinguished through the PLP ID. For the satellite broadcast system, the GSE stream may be distinguished through the ISI. For example, in the terrestrial broadcast system, the PLP for transmitting GSE packets including the ROHC stream may be different from or the same as the PLP for transmitting GSE packets including the ROHC-U descriptor.

When the adaptation process is not performed, the ROHC stream output to the GSE encapsulator 2015 includes at least one IR packet, one or more IR-DYN packets, and compressed packets. In this case, the ROHC-U descriptor may include information (e.g., information related to header compression) other than the context information.

FIG. 49 shows an exemplary syntax structure of an ROHC-U descriptor (ROHC-U_information()) according to embodiments. According to embodiments, the ROHC-U descriptor may be referred to as ROHC-U information. FIG. 49 is an example for transmission of a GSE stream via a terrestrial broadcast system. When the GSE stream is transmitted via a satellite broadcast system, the ISI may be used in place of the PLP.

The ROHC-U descriptor of FIG. 49 may include a num_PLPs field.

The num_PLPs field indicates the number of PLPs signaled in this descriptor.

According to embodiments, the ROHC-U descriptor may include a first iteration statement that is iterated as many times as the value of the num_PLPs field.

The first iteration statement may include a PLP_ID field, per_channel_configuration(), and a num_contexts field.

The PLP_ID field identifies the PLP corresponding to the context(s) signaled in this iteration statement of the 'for' loop.

per_channel_configuration() may include a max_CID field and a profile field.

The max_CID field indicates the maximum value of a context ID used according to the PLP identified by the PLP_ID field.

The profile field indicates the range of a protocol (or layer) used to compress IP packets.

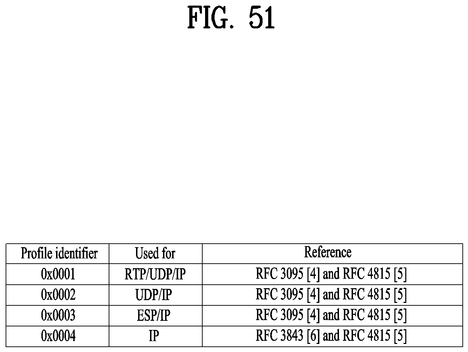

FIG. 51 is a table showing examples of ROHC profiles for DVB-GSE. In FIG. 51, according to an embodiment, the value of the profile field is 0x0001, it indicates ROHC-based compression up to RTP. The value of 0x0002 indicates ROHC-based compression up to UDP. The value of 0x0003 indicates ROHC-based compression up to ESP. The value of 0x0004 indicates ROHC-based compression up to IP.

The num_contexts field indicates the number of contexts carried by the PLP identified by the PLP_ID field (i.e., the number of compressed IP streams or the number of ROHC streams). The value of the num_contexts field cannot be greater than the value of the max_CID field.

According to embodiments, the ROHC-U descriptor may include a second iteration statement that is iterated as many times as the value of the num_contexts field.

The second iteration statement may include a context_id field, IP_stream_address(), and context_information(). According to embodiments, IP_stream_address() may be referred to as mapping information, and context_information() may be referred to as context information.

The context_id field indicates a context identity (CID) of a compressed IP stream (i.e., a ROHC stream).

The mapping information (IP_stream_address()) may include an src_IP_addr field, a dest_IP_addr field, an src_UDP_port field, and a dest_UDP_port field. The mapping information provides a mapping between an IP stream and a context ID.

The src_IP_addr field, dest_IP_addr field, src_UDP_port field, and dest_UDP_port field may indicate a source IP address, a destination IP address, a source UDP port number, and a destination UDP port number for a corresponding ROHC stream among the ROHC streams delivered through a PLP identified by the PLP_ID field.

The context information (context_information()) may include a static_chain_length field and a static_chain_byte() field. The context information is context information about the ROHC stream identified by the context_id field.

The static_chain_length field indicates the length of the following static_chain_byte () field.

The static_chain_byte () field may carry static information used to initialize the ROHC-U decompressor. The size and structure of the field depends on the context profile. The static_chain_byte () field may be defined as sub-header information of an IR packet.

According to embodiments, since a GSE stream is delivered to only one PLP, the number of PLPs identified by the num_PLPs field is equal to the number of GSE streams. Therefore, the value of the PLP_ID field may be used as the value for identifying the GSE stream and the ROHC channel.

Fields, elements, and attributes included in the above-described ROHC-U descriptor may be omitted or replaced with other fields, elements, and attributes, and additional fields, elements, and attributes may be added according to embodiments.

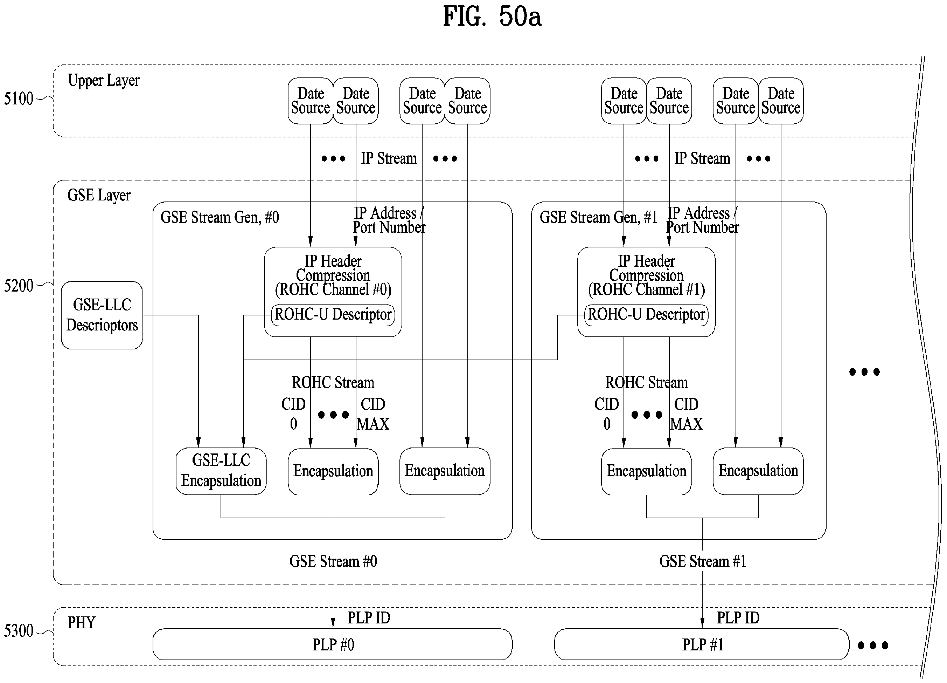

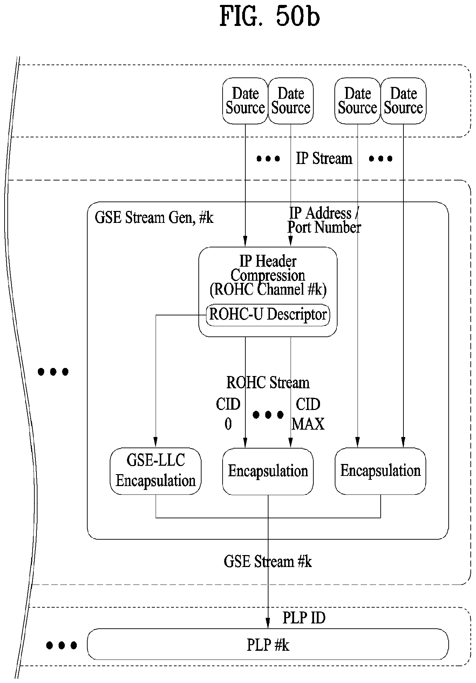

FIG. 50a and FIG. 50b show an exemplary configuration block diagram of a GSE layer system for transmission of GSE streams according to embodiments. The diagram of FIG. 50a and FIG. 50b is largely composed of an upper-layer block 5100, a GSE layer block 5200, and a physical layer block 5300.

According to an embodiment, each data source in the upper-layer block 5100 is a multicast identified by a multicast_stream_ID field. The data sources may include at least multicast service data and multicast gateway configuration information. In addition, each data source may be identified by a source IP address, a destination IP address, a source UDP port number, and a destination UDP number. In the present disclosure, multicast means sending data to multiple receivers at the same time over an IP network, and also means a set of data simultaneously sent to multiple receivers over the IP network.

In the present disclosure, multicast is also referred to as an IP multicast stream, an IP stream, an upper layer session, or a multicast transport session.

The GSE layer block 5200 receives one or more multicasts from the upper-layer block 5100 as input, generates one or more GSE streams, and then delivers the one or more GSE streams to the physical layer block 5300. The physical layer block 5300 transmits the one or more GSE streams via one or more PLPs. Each GSE stream includes one or more GSE packets.

In this case, a GSE stream is delivered to only one PLP. Therefore, in order to deliver a plurality of GSE streams, the GSE layer block 5200 must include a plurality of GSE stream generators, and the physical layer block 5300 must also be configured to process data of a plurality of PLPs. For example, in order to generate and deliver k GSE streams (where k is greater than or equal to 2), k GSE stream generators and k PLPs are required.

In other words, each GSE stream output from each GSE stream generator of the GSE layer block 5200 is delivered to its unique PLP. Accordingly, the PLP ID for identifying the PLP may be used as a GSE stream ID for identifying the corresponding GSE stream and a GSE stream generator ID for identifying the corresponding GSE stream generator.

In addition, in ROHC compression, the ROHC framework defines ROHC channels to identify a compressed packet flow. In an embodiment of the present disclosure, a single ROHC channel is configured in an GSE stream. Accordingly, the PLP ID for identifying the PLP may be mapped to the ROHC channel number for identifying the ROHC channel.

That is, the ROHC channel, the GSE stream, and the PLP may be mapped in a 1:1:1 correspondence manner. Accordingly, the PLP ID for identifying the PLP may be used as an identifier for identifying the ROHC channel and an identifier for identifying the GSE stream.

According to embodiments, each GSE stream generator includes an IP header compressor configured to output a ROHC stream and an encapsulation module configured to output a GSE stream.

Next, header compression will be described based on a first GSE stream generator (GSE stream generator #0).

The IP header compressor included in the first GSE stream generator may include a ROHC module and an adaptation module. The IP header compressor may correspond to the header compressor 2014 of FIG. 47a and FIG. 47b or FIG. 48a and FIG. 48b. The ROHC module of the IP header compressor receives IP packets in one or more multicasts and performs header compression. According to embodiments, the value of the header_compression_flag field corresponding to one or more multicasts input to the ROHC module is 1.

When the header compression is performed, ROHC packets corresponding to the IP packets prior to compression are generated. The ROHC packets include an IR packet, an IR-DYN packet, and compressed packets. A stream including the ROHC packets is referred to as a ROHC stream (or compressed IP stream).

Then, the adaptation module extracts context information (e.g., static chain information in the header of the IR packet) from the ROHC stream according to the adaptation flag information (adaptation_flag), generates a ROHC-U descriptor including the extracted context information and information related to header compression and outputs the descriptor to the GSE-LLC encapsulation module. The ROHC stream from which the context information is extracted is also output to the encapsulation module. That is, the context information (i.e., static chain information) is extracted from the header of the IR packet among the ROHC packets, and the IR packet from which the context information is extracted is transformed into an IR-DYN packet. Then, the transformed IR-DYN packet replaces the original IR packet and is output to the encapsulation module in the same order in the ROHC stream. That is, the ROHC stream output to the encapsulation module includes at least the IR-DYN packet generated by the header compression, the transformed IR-DYN packet, and the compressed packets.

According to an embodiment, the adaptation flag information (adaptation_flag) indicates whether the adaptation process is performed (i.e., whether context information is extracted). When the adaptation flag information (adaptation_flag) indicates skipping (or omitting) of the adaptation process, the process of extracting context information from the ROHC stream is skipped. In this case, the ROHC-U descriptor includes only information related to header compression. In this case, the ROHC stream output to the encapsulation module includes at least an IR packet, an IR-DYN packet, and compressed packets. According to embodiments, the adaptation flag information (adaptation_flag) may be signaled in the ROHC-U descriptor.

The GSL-LLC encapsulation module encapsulates GSL-LLC descriptors for NCD and LCD and the ROHC-U descriptor into at least one GSE packet. In the present disclosure, the GSL-LLC descriptors for NCD and LCD and the ROHC-U descriptor are referred to as LLC data. In this case, according to an embodiment, the LLC data including the ROHC-U descriptor is included in the mandatory extension header of the GSE packet.

The encapsulation module encapsulates the ROHC stream into one or more GSE packets.

In addition, the encapsulation module may generate one or more GSE packets including IP packets (i.e., header-uncompressed IP packets) in one or more multicasts. In this case, the value of the header_compression_flag field corresponding to one or more multicasts input to the encapsulation module is 0.

That is, the encapsulation module may include an encapsulator configured to generate one or more GSE packets including packets in the ROHC stream and an encapsulator including one or more GSE packets including IP packets that have not been passed through the IP header compressor, or may include at least one of the encapsulators.

In an embodiment, at least one GSE packet including the ROHC-U descriptor, one or more GSE packets including the ROHC stream, and/or one or more GSE packets including an IP stream that has not been passed through the IP header compressor may be output to one GSE stream.

The GSE stream is delivered to the receiver via a corresponding PLP in the present disclosure, signaling information is used in the same sense as signaling data.

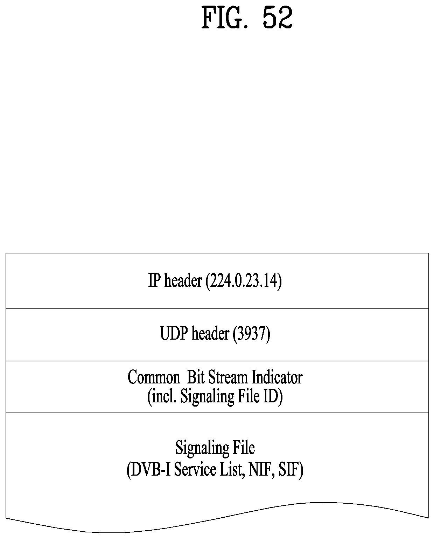

FIG. 52 illustrates an example of encapsulating signaling information into an IP packet according to embodiments. Here, according to an embodiment, the IP packet includes an IP header and a UDP header.

According to embodiments, in order to identify (or filter) the signaling information transmitted through a specific IP stream from among multiple IP streams received by the NIP gateway, the specific IP stream may include a fixed (or dedicated) IP address and a fixed (or dedicated) UDP port number. That is, the signaling information may be transmitted by the NIP transmitter as a payload of IP packets having a well-known IP address/UDP port number. In this case, the IP address may be "224.0.23.14" and the UDP port number may be "3937". In other words, the signaling information is encapsulated into IP packets having an IP address of "224.0.23.14" and a UDP port number of "3937" and transmitted.

According to embodiments, the signaling information may be referred to as an announcement channel and may carry information required for an Native IP system to operate. According to embodiments, the signaling information may carry a DVB-I service list, an NIF, and/or an SIF. Each of the DVB-I service list, NIF, and/or SIF included in the signaling information or carried via the signaling information may be provided in the form of a signaling table (or signaling file). The signaling information may further include information on DVB-I service list entry points and/or a multicast gateway configuration file, each of which is in the form of a signaling table (or file). The signaling information may further include the NCD, the LCD or the ROHC-U descriptor in the form of a signaling table (or file), respectively. Here, the signaling tables (or signaling files) included in the signaling information are merely an example for providing understanding of the present disclosure. The signaling tables (or signaling files) included in the signaling information are not limited to the above-described example.

That is, all IP packets including the service information have the same IP address (e.g., fixed IP address of "224.0.23.14") and UDP port number (e.g., fixed UDP port number of "3937"). For example, assuming that the service information includes a DVB-I service list, an NIF, and/or an SIF, all IP packets carrying the DVB-I service list, NIF, and/or SIF and have the same IP address and UDP port number.

Accordingly, there is a need for a method of identifying each signaling table included in the IP packets having an IP address of "224.0.23.14" and a UDP port number of "3937." avoid redundant description, refer to the description of the first GSE stream generator (GSE stream generator #0).

According to embodiments, LLC data may include one or more ROHC-U descriptors. For example, LLC data generated by the first GSE stream generator may include a first ROHC-U descriptor generated by the first GSE stream generator and a second ROHC-U descriptor generated by the second GSE stream generator. As another example, LLC data generated by the third GSE stream generator include a third ROHC-U descriptor generated by the third GSE stream generator and the LLC data are transmitted through the same PLP (PLP #k) together with the third ROHC channel.

That is, signaling information may be separately transmitted in order to transmit the IP multicast in the unidirectional delivery structure shown in FIG. 47a and FIG. 47b or FIG. 48a and FIG. 48b.

In this case, the signaling information may be transmitted through the same GSE stream as media contents or multicast service data. Alternatively, a table (or file) including signaling information may be transmitted through a GSE stream separated from the media contents in order to ensure robustness to the signaling information. In this case, the GSE stream may be identified using the PLP (or PLP ID) or the ISI depending on the transmission system.

Referring to FIG. 50a and FIG. 50b as an example, GSE stream #1 including a ROHC stream generated by the second GSE stream generator by header compression is transmitted through PLP#1, and GSE stream #0 including a ROHC-U descriptor including information related to the header compression and the context information extracted from the ROHC stream is transmitted through PLP#0. In this case, since the GSE stream is mapped to the PLP in a 1:1 correspondence manner, the PLP ID for identifying the PLP may be used as an identifier for identifying the GSE stream.

In FIG. 50a and FIG. 50b, all or at least one of the IP header compressors of the plurality of GSE stream generators may operate may operate, or none of the compressors may operate.

Next, IP encapsulation of signaling information will be described. In the present disclosure, signaling information is used in the same sense as signaling data.

FIG. 52 illustrates an example of encapsulating signaling information into an IP packet according to embodiments. Here, according to an embodiment, the IP packet includes an IP header and a UDP header.

According to embodiments, in order to identify (or filter) the signaling information transmitted through a specific IP stream from among multiple IP streams received by the NIP gateway, the specific IP stream may include a fixed (or dedicated) IP address and a fixed (or dedicated) UDP port number. That is, the signaling information may be transmitted by the NIP transmitter as a payload of IP packets having a well-known IP address/UDP port number. In this case, the IP address may be "224.0.23.14" and the UDP port number may be "3937". In other words, the signaling information is encapsulated into IP packets having an IP address of "224.0.23.14" and a UDP port number of "3937" and transmitted.

According to embodiments, the signaling information may be referred to as an announcement channel and may carry information required for an Native IP system to operate. According to embodiments, the signaling information may carry a DVB-I service list, an NIF, and/or an SIF. Each of the DVB-I service list, NIF, and/or SIF included in the signaling information or carried via the signaling information may be provided in the form of a signaling table (or signaling file). The signaling information may further include information on DVB-I service list entry points and/or a multicast gateway configuration file, each of which is in the form of a signaling table (or file). The signaling information may further include the NCD, the LCD or the ROHC-U descriptor in the form of a signaling table (or file), respectively. Here, the signaling tables (or signaling files) included in the signaling information are merely an example for providing understanding of the present disclosure. The signaling tables (or signaling files) included in the signaling information are not limited to the above-described example.

That is, all IP packets including the service information have the same IP address (e.g., fixed IP address of "224.0.23.14") and UDP port number (e.g., fixed UDP port number of "3937"). For example, assuming that the service information includes a DVB-I service list, an NIF, and/or an SIF, all IP packets carrying the DVB-I service list, NIF, and/or SIF and have the same IP address and UDP port number.

Accordingly, there is a need for a method of identifying each signaling table included in the IP packets having an IP address of "224.0.23.14" and a UDP port number of "3937."

In order to identify a signaling table included in an IP packet having the IP address "224.0.23.14" and the UDP port number "3937," a signaling header may be added to the IP packet having the IP address "224.0.23.14" and the UDP port number "3937." The signaling header includes a signaling file ID, etc . In the present disclosure, this signaling header will be referred to as a common bit stream indicator. That is, the header of the IP packet having the IP address "224.0.23.14" and the UDP port number "3937" includes an IP header, a UDP header, and a common bit stream indicator.

According to embodiments, the common bit stream indicator may include a table ID in place of the signaling file ID.

In addition, for quick identification of a signaling table (or signaling file) configured in IP packets, the common bit stream indicator may be configured in a binary form.

According to embodiments, an IPv6-based network may use an IP address of "FF0X:0:0:0:0:0:0:12D" for identification of signaling information.

In addition, each signaling table (or signaling file) may be configured as an XML (eXtensible Markup Language) file, and may be compressed for transmission efficiency. As a compression method, EXI (Efficient XML Interchange Format), gzip, zlib, or the like may be used. That is, the signaling information including one or more signaling tables (or signaling files) is directly included or compressed and included in the payload of an IP packet having a fixed (or dedicated) IP packet address and a fixed (or dedicated) UDP port number.

For simplicity, the common bit stream indicator may be referred to as a binary signaling header or a signaling header.

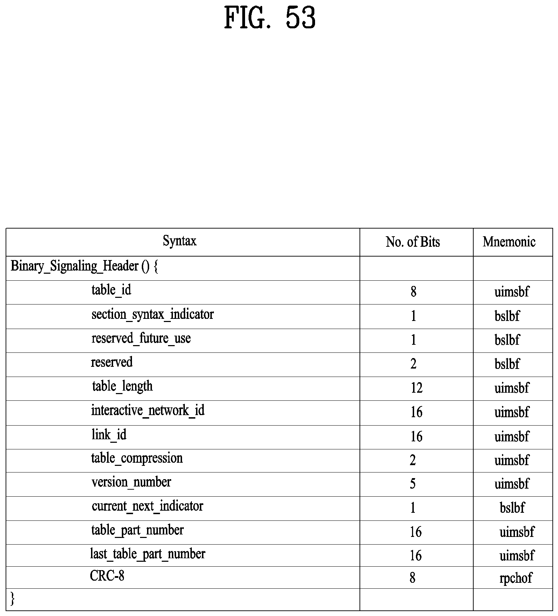

FIG. 53 shows an exemplary syntax structure of a binary signaling header (Binary_Signaling_Header()) according to embodiments.

In FIG. 53, the table_id field is a unique id value of a corresponding table. That is, the table_id field represents an identifier for identifying the type of the corresponding table (or the corresponding file).

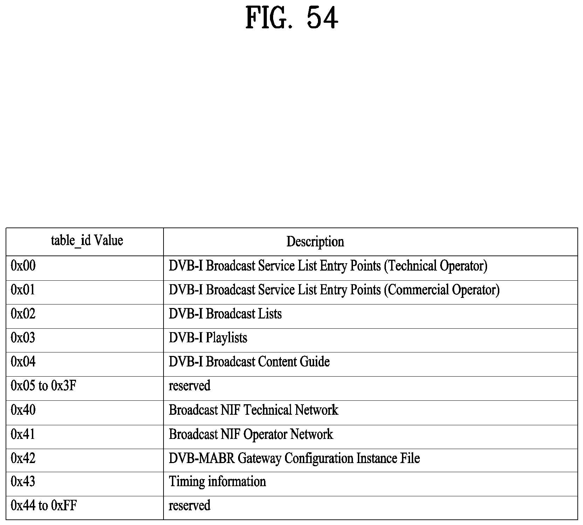

FIG. 54 is a table showing a definition of values allocated to the table_id field to identify a signaling table (or signaling file) directly included or compressed and included in the payload of a corresponding IP packet in the signaling header structure.

For example, when the value of the table_id field is 0x00, the table (or file) indicates DVB-I broadcast service list entry points (technical operator). When the value is 0x01, the table (or file) indicates the DVB-I broadcast service list entry points (commercial operator). Also, when the value is 0x02, the table (or file) indicates DVB-I broadcast lists. When the value is 0x03, the table (or file) indicates DVB-I playlists. In addition, when the value is 0x04, the table (or file) indicates a DVB-I broadcast content guide. When the value is 0x40, the table (or file) indicates a broadcast NIF technical network. In addition, when the value is 0x41, the table (or file) indicates broadcast NIF operator network. When the value is 0x42, the table (or file) indicates DVB-MABR gateway configuration instance file. When the value is 0x43, the table (or file) indicates timing information.

In FIG. 53, the section_syntax_indicator field is an indicator defining a section format of a table (or file) and always has a fixed value of "1."

The table_length field indicates the length of the table (or file), and specifies the length from a part fallowing the table_length field to the last part of the corresponding section in bytes.

The interactive_network_id field represents an identifier for a broadcast network for current transmission.

The link_id field has an id value of a link to which information described in the current table is applied. For example, in the case of a terrestrial broadcast system, the field may have the same value as the PLP ID. In the case of a satellite broadcast system, the field may have the same value as the ISI.

The table_compression field indicates how the table constituting the payload of the IP packet is compressed.

For example, among the values of the table_compression field: 00 indicates no compression, and 01 indicates compression in the efficient XML interchange (EXI) format. Also, 10 indicates compression in gzip [IETF RFC 1952], and 11 indicates compression in zlib {IETF RFC 1950]
The version_number field indicates the version of the table.

The current_next_indicator field indicates whether a section table is currently applicable. For example, when the value of the current_next_indicator field is 1, it indicates that the section table is valid. When the value is 0, it indicates that the section table to be transmitted next is valid.

The table_number field indicates a number of a table included in a table. "0" is assigned to the first section, the value increases sequentially.

The last_table_number field indicates the number of the last table.

Next, a multicast gateway configuration method in a unidirectional delivery environment will be described.

### In-band Multicast Gateway Configuration

According to embodiments, in order to transmit multicast service data(e.g., multicast ABR service data) through a unidirectional link, an in-band multicast gateway configuration based on a multicast ABR architecture may be first performed.

According to embodiments, the following operations may be performed in order to perform the in-band multicast gateway configuration.
1) The multicast server and the multicast gateway need to have common information about one or more configured multicast transport sessions. Upon receiving multicast service data from the multicast server in a unidirectional delivery environment, the multicast gateway may acquire information on a multicast transport session to be received through a multicast session element.
2) The multicast gateway may start receiving multicast service data (or referred to as a multicast transport object) from the multicast transport session before or after the playback function requests the presentation manifest via the L interface.
3) In order to acquire a multicast transport object through a specific multicast transport session within the currently configured multicast session, the multicast gateway subscribes to the IP multicast group indicated in the multicast transport endpoint address.

According to embodiments, a subscription procedure for a multicast transport session may be performed before the session is in an active state. In this case, when the subscribed multicast transport session is switched to the inactive state, the multicast gateway may unsubscribe from the session.

Next, a logical session will be described.

According to embodiments, when the multicast gateway configuration method is used, not only the multicast session but also a separate session different from the multicast session may be defined. To this end, the M Interface may configure the following logical session. According to embodiments, the logical session may include a service list transport session and/or a multicast gateway configuration session.

### Service List Transport Session

According to embodiments, service list information may be transmitted from a service list registry to an application based on the architecture shown in FIG. 47a and FIG. 47b or FIG. 48a and FIG. 48b. The service list information may include access information (e.g., URI, etc.) for a service.

According to embodiments, when a unidirectional link is included between the service list registry and the application, the multicast service may transmit the information to the multicast gateway via the M interface. In this case, the service list information may be delivered through a service list transport session.

### Multicast Gateway Configuration Session

According to embodiments, the multicast gateway configuration information provided from the multicast server is transmitted using an in-band configuration method. In the in-band configuration method, the multicast server may repeatedly transmit (carousel) the multicast gateway configuration instance document via the M interface.

According to other embodiments, the multicast gateway configuration information may be transmitted through a session logically or physically distinct from the multicast session transmitted via the M interface. Such a separate session may be referred to as a multicast gateway configuration transport session.

Through the multicast gateway configuration transport session, not only multicast gateway configuration information, but also a presentation manifest media object and an initialization segment media object may be transmitted. The presentation manifest media object may include MPD of MPEG-DASH or a master playlist of HLS.

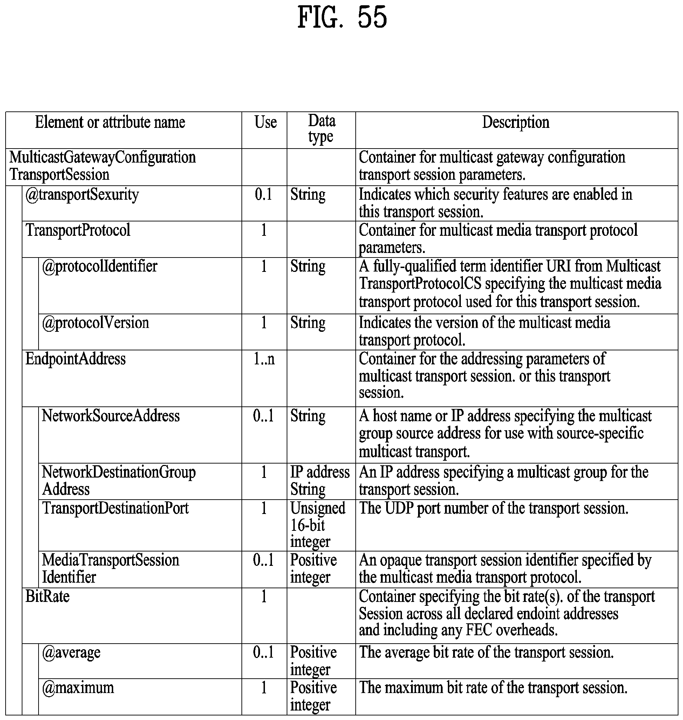

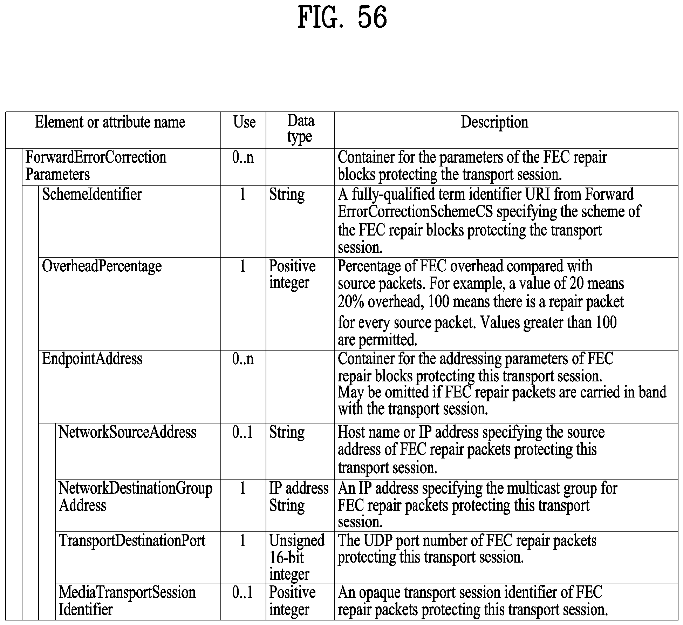

FIGS. 55 and 56 show an exemplary syntax structure of a multicast gateway configuration transport session according to embodiments. That is, multicastGatewayConfigurationTransportSession is a container for multicast gateway configuration transport session parameters. The multicastGatewayConfigurationTransportSession elements may be configured as shown in FIGS. 55 and 56.

According to embodiments, the multicastGatewayConfigurationTransportSession may include transport security information, transport protocol information, endpoint address information, bitrate information, and forward error correction (FEC) parameters.

In the element syntax of FIGS. 55 and 56, the elements "NetworkSourceAddress," "Network DestinationGroupAddress," and "TransportDestinationPort" included in the element "EndpointAddress" may be defined as a source IP address, destination (group) IP address, and a UDP port number by which the element "MulticastGatewayConfiguration TransportSession" is transported.

Next, the logical session configuration in the M interface will be described.

The aforementioned signaling table may be transported to the M interface of the multicastABR through a specific session.

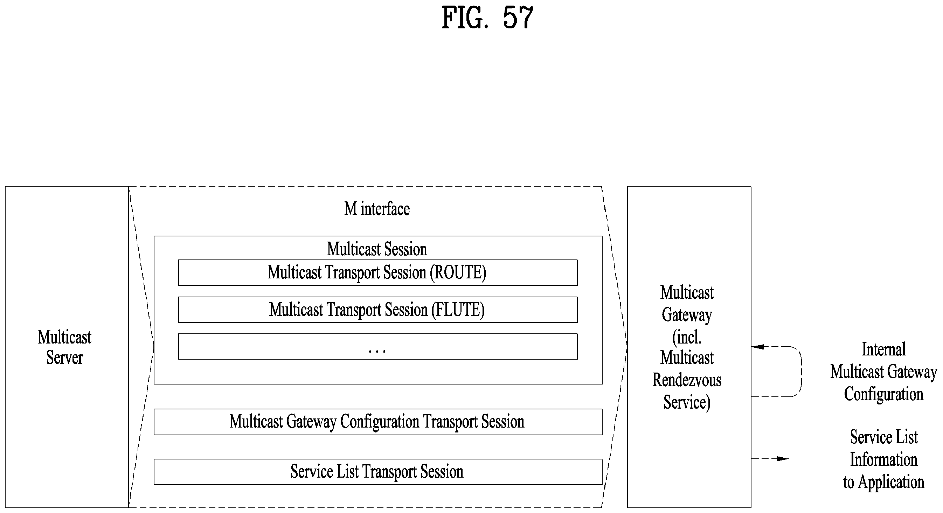

FIG. 57 is a diagram illustrating an exemplary logical session configuration in an M interface according to embodiments. That is, FIG. 57 illustrates an example in which a multicast session, a multicast gateway configuration transport session, and a service list transmission session are all included in one M interface.

FIG. 57 relates to an embodiment in a case where a multicast rendezvous service is included in the multicast gateway or is configured in the same device.

According to embodiments, the multicast server may configure not only a multicast session including a multicast transport session for transmitting a media object (or referred to as multicast IP content), but also a multicast gateway configuration transport session and a service list transmission session.

According to embodiments, the multicast gateway including the multicast rendezvous service may receive a media object and configuration information transmitted from the multicast server through all sessions.

In this case, the multicast gateway may complete the configuration through an internal operation of the multicast gateway based on the configuration information transmitted through the multicast gateway configuration transport session.

In addition, the multicast gateway may deliver service list information transmitted through the service list transmission session to an application that processes the corresponding data.

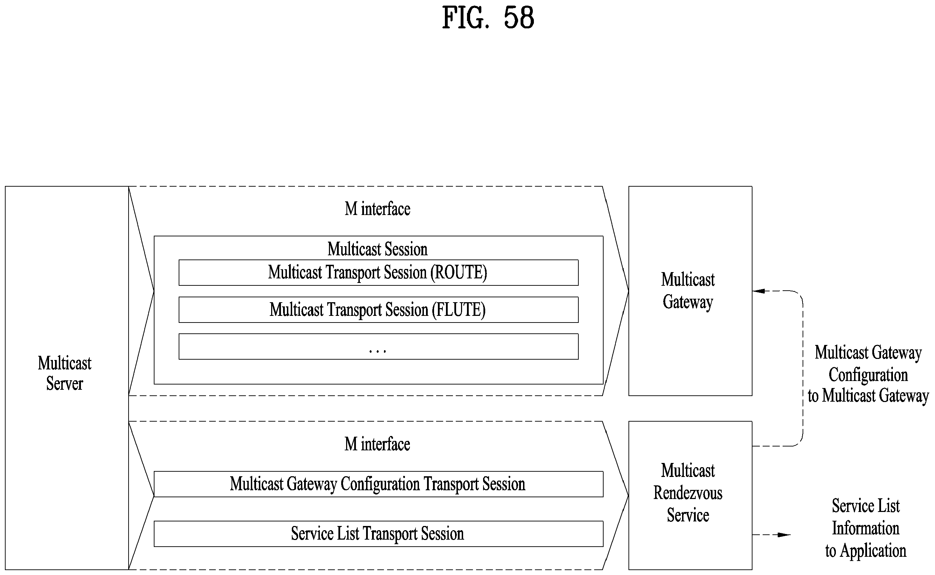

FIG. 58 is a diagram illustrating another exemplary logical session configuration in an M interface according to embodiments. That is, FIG. 58 illustrates an example in which a multicast session is included in one M interface, and a multicast gateway configuration transport session and a service list transmission session are included in another M interface.

FIG. 58 is an embodiment in a case where a multicast rendezvous service is included in a multicast gateway or is configured in the same device.

According to embodiments, the multicast server may configure not only a multicast session including a multicast transport session for transmitting a media object, but also a multicast gateway configuration transport session and a service list transport session.

According to embodiments, the multicast gateway receives a media object transmitted from the multicast server through a multicast transport session. In addition, the multicast rendezvous service may receive configuration information transmitted from the multicast server through a multicast gateway configuration transport session and deliver the same to the multicast gateway. Then, the multicast gateway may complete the configuration through an internal operation of the multicast gateway based on the configuration information.

In addition, the multicast rendezvous service may deliver service list information transmitted through the service list transmission session to an application that processes the corresponding data.

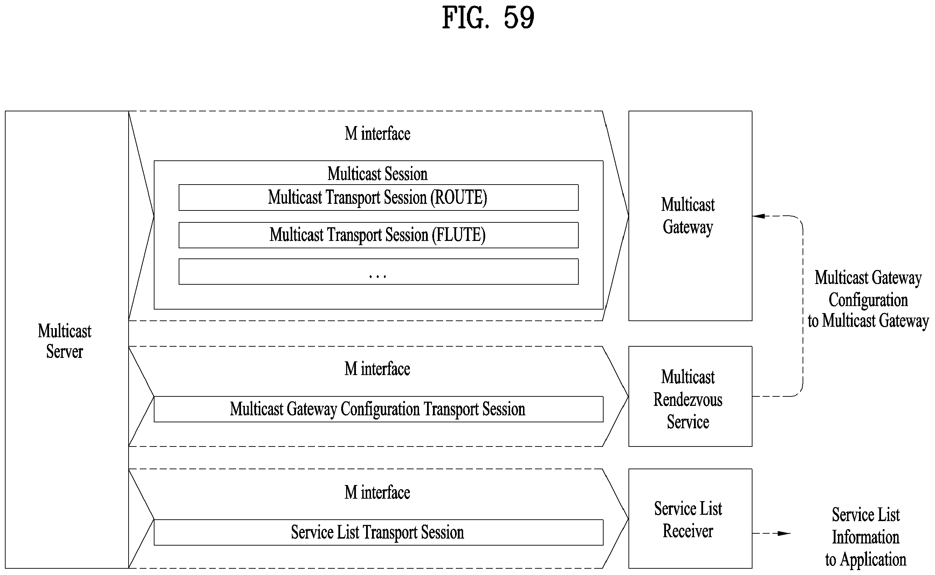

FIG. 59 is a diagram illustrating another exemplary logical session configuration in an M interface according to embodiments. That is, FIG. 59 illustrates an example in which a multicast session, a multicast gateway configuration transport session, and a service list transmission session are included in corresponding M interfaces, respectively.

FIG. 59 illustrates an embodiment in a case where a multicast rendezvous service is included in the multicast gateway or is configured in the same device.

According to embodiments, the multicast gateway receives a media object transmitted from the multicast server through a multicast transport session. In addition, the multicast rendezvous service may receive configuration information transmitted from the multicast server through a multicast gateway configuration transport session and deliver the same to the multicast gateway. Then, the multicast gateway may complete the configuration through an internal operation of the multicast gateway based on the configuration information.

In addition, the service list receiver may deliver service list information transmitted through the service list transmission session to an application that processes the corresponding data.

According to embodiments, the application controls a content playback function. For example, it may be an embedded control application (EPG application) of a TV or set-top box or a third-party application provided by a content provider. An interface used by an application to control content playback may be implemented as a separate API or the like according to each device. In addition, the interface used by the application to control content playback generally involves delivery of a reference point of the presentation manifest (e.g., URL of MPEG DASH MPD) for initiating playback of individual linear services. The application may interact with the service management subfunction of the multicast gateway to discover the presence of a linear service and to control reception of the service by the multicast gateway. Also, the application may discover the presence of a linear service through individual interaction with an application-specific service directory function.

The device according to the above-described embodiments may efficiently utilize various networks in broadcasting and multicast transmission based on operation/configuration and/or signaling information according to the embodiments.

Furthermore, the method/device according to the above-described embodiments may reduce the network load in various streaming sessions in connection with various networks and/or devices, thereby reducing the implementation cost and efficiently providing the ABR multicast service. In order to provide this effect, the architecture and flow according to the embodiments are required.

Operations according to the embodiments described in the present disclosure may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

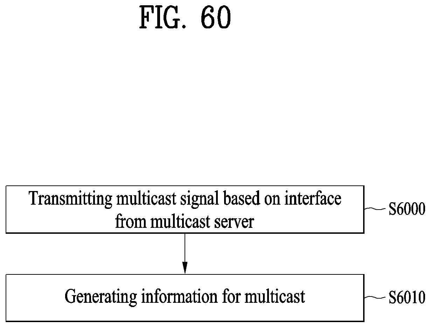

FIG. 60 illustrates a multicast transmission method according to embodiments.

S6000: The multicast transmission method according to the embodiments may include transmitting multicast service data from a multicast server based on an interface.

S6010: The multicast transmission method may further include generating information for multicast service data.

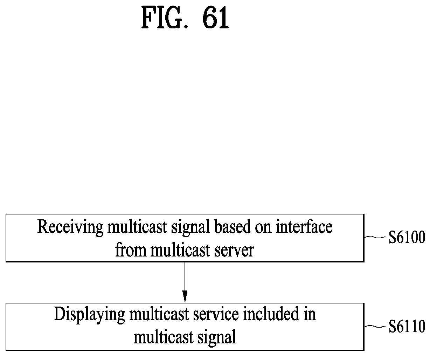

FIG. 61 illustrates a multicast reception method according to embodiments.

S6100: The multicast reception method according to the embodiments may include receiving multicast service data from a multicast server based on an interface.

S6110: The multicast reception method may further include playing a multicast service by processing multicast service data.

The multicast processing method according to FIGS. 60 and 61 may be performed based on the flowchart shown in FIG. 5 and information for multicast shown in FIGS. 6 and 7 in the multicast ABR structure shown in FIGS. 1 to 4.

The multicast processing method according to FIGS. 60 and 61 may process the multicast service data based on the 5G network shown in FIGS. 8 to 10.

The multicast processing method according to FIGS. 60 and 61 may process the multicast service data based on the plurality of networks illustrated in FIGS. 11 to 20.

The multicast processing method according to FIGS. 60 and 61 may process the multicast service data based on a plurality of networks in the protocol and structure shown in FIGS. 21 to 26.

The multicast processing method according to FIGS. 60 and 61 may generate and deliver information for a multicast service shown in FIGS. 27 to 30, and the receiver may receive and play the multicast service data based on the information for multicast.

The multicast processing method according to FIGS. 60 and 61 may generate, transmit, and process multicast service data in the system shown in FIGS. 31 and 32.

The multicast processing method according to FIGS. 60 and 61 may include an operation of mapping between a multicast transport session and a physical layer. In order to process a multicast signal through such inter-session mapping, mapping information for multicast is generated and transmitted and received based on FIGS. 33 to 42.

Referring to FIG. 34, interfaces according to the embodiments may constitute a DVB-NIP standard broadcast system. A multicast signal reception device including a multicast gateway configured to receive multicast service data based on the interface from the multicast server; and a content playback unit configured to play a multicast service by performing the multicast service data may receive multicast service data according to a native Internet protocol.

Referring to FIG. 35, the interface of the embodiments is configured according to the DVB-NIP protocol. The interface may include a protocol including a multicast transport session, a user datagram protocol/Internet protocol (UDP/IP), a generic stream encapsulation (GSE) layer, and a physical layer.

Referring to FIG. 41, 42, 44, or 45, embodiments may generate signaling information. The signaling information may be variously referred to as metadata, ABR transport session descriptor, IP multicast list descriptor, or the like. Logical layer control (LLC) information in the GSE layer may be transmitted. The LLC information may include a multicast list descriptor. The multicast list descriptor may include source IP address information, destination IP address information, source UDP port information, and destination UDP port information. The multicast list descriptor may further include a header_compression_flag for indicating whether the header compression is performed for each IP multicast.

Referring to FIG. 43, an LLC table for DVB-NIP may be defined. The reception device according to the embodiments may receive logical link control (LLC) data from the GSE layer, wherein the logical link control data may include network control data (NCD) and link control data (LCD). The LLC data may further include a ROHC-U descriptor. In addition, the NCD may include a multicast list descriptor for multicast, and the LCD may include a link identifier for the physical layer. Thus, mapping between sessions may be indicated and multicast service data may be received.

Referring to FIG. 50a and FIG. 50b, a GSE layer may be defined for DVB-NIP. In embodiments, header compression for an IP stream may be selectively performed in the GSE layer. Whether header compression is performed on a specific IP stream (or IP multicast) may be signaled using header_compression_flag information. According to an embodiment, the header_compression_flag information may be included in the multicast list descriptor. The header-compressed IP stream and/or the header-uncompressed IP stream in the GSE layer are encapsulated into a GSE stream and then transmitted through a specific PLP.

Referring to FIG. 47a and FIG. 47b or FIG. 48a and FIG. 48b, embodiments may include a parser configured to parse LLC data; and a decompressor configured to receive a robust header compression (ROHC) stream included in the GSE stream and perform header decompression.

Referring to FIGS. 52 to 54, according to embodiment, when signaling information including one or more signaling tables (or files) is transmitted in a specific IP stream, the signaling information is transmitted through an IP stream having a fixed (or dedicated) IP address and a fixed (or dedicated) UDP port number in order for the multicast gateway to identify the IP stream. In addition, according to an embodiment, in order to identify each signaling table in the signaling information, IP packets in the corresponding IP stream further include a signaling header, wherein the signaling header may include a table ID (or file ID). The signaling header is referred to as a common bit stream indicator or a binary signaling header.

A reception method according to embodiments may include receiving multicast service data from a multicast server based on an interface; and displaying a multicast service by processing the multicast service data.

A transmission method according to embodiments may include transmitting multicast service data from a multicast server based on an interface, wherein the interface may include a protocol including a multicast transport session, a User Datagram Protocol/Internet Protocol (UDP/IP), a Generic Stream Encapsulation (GSE) layer, and a physical layer; and generating a logical layer control (LLC) data in the GSE layer.

Accordingly, the issues related to absence of link technology between terrestrial broadcasting and satellite broadcasting, and absence of session information and interface configuration for multicast media transmission may be addressed. That is, to transmit a media object of DVB ABR multicast in a unidirectional delivery network such as a link between terrestrial broadcasting and satellite broadcasting defined in the DVB standard, an interface and signaling flow for interworking a multicast transport session with a broadcast stream may be provided.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications may be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if' and "when" are not limited to an optional case and are intended to be interpreted, when a specific condition is satisfied, to perform the related operation or interpret the related definition according to the specific condition.

Operations according to the embodiments described in the present disclosure may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

### [Mode for Disclosure]

As described above, related contents have been described in the best mode for carrying out the embodiments.

### [Industrial Applicability]

As described above, the embodiments may be fully or partially applied to the multicast transmission/reception device and system.

Thus, it is intended that the embodiments cover the modifications and variations of this disclosure provided they come within the scope of the appended claims

## Claims

1. A method of transmitting a multicast signal (S6000) in a multicast transmitting signal system, the method comprising:
performing header compression on an IP, Internet Protocol, stream made up of IP packets including multicast service data for a multicast service and outputting a header-compressed IP stream;
generating (S6010) first signaling information including information related to the header compression;
generating (S6010) second signaling information including information related to the multicast service;
**characterized in that** it further comprises:
encapsulating the header-compressed IP stream into a first GSE, Generic Stream Encapsulation, stream;
encapsulating the first signaling information and the second signaling information into a second GSE stream; and
transmitting the first GSE stream and the second GSE stream.

2. The method of claim 1, further comprising:
extracting context information from the header-compressed IP stream which is generated by performing the header compression on the IP stream,
wherein the first signaling information further includes the extracted context information.

3. The method of claim 2,
wherein the header-compressed IP stream includes at least one IR, Initialization and Refresh, packet, at least one IR-DYN, IR- Dynamic, packet, and compressed packets, and
wherein the context information is static chain information included in a header of the at least one IR packet.

4. The method of claim 2,
wherein the second signaling information includes the first signaling information, and
wherein the second signaling information further includes link control data and network control data.

5. The method of claim 4,
wherein the network control data includes at least identification information for identifying a multicast stream including the multicast service data, information for indicating whether the header compression is performed on the IP stream, and address and port information for identifying the IP stream.

6. The method of claim 1, further comprising:
generating third signaling information including information related to system operation,
wherein the third signaling information includes a plurality of signaling files, and
wherein the third signaling information is included in at least one IP packet having a fixed IP address and a fixed port number.

7. The method of claim 6,
wherein a header of the at least one IP packet including the third signaling information further includes a signaling header, and
wherein the signaling header includes information for identifying each of the plurality of signaling files.

8. The method of claim 1,
wherein the first GSE stream and the second GSE stream are transmitted through a different physical link.

9. A multicast transmitting signal system for transmitting a multicast signal, the multicast transmitting signal system comprising:
a header compressor (2014) configured to perform header compression on an IP, Internet Protocol, stream made up of IP packets including multicast service data for a multicast service and output a header-compressed IP stream;
a first generator configured to generate first signaling information including information related to the header compression;
a second generator configured to generate second signaling information including information related to the multicast service;
**characterized in that** it further comprises:
a first encapsulator (2015) configured to encapsulate the header-compressed IP stream into a first GSE, Generic Stream Encapsulation, stream;
a second encapsulator (2012) configured to encapsulate the first signaling information and the second signaling information into a second GSE stream; and
a transmitter configured to transmit the first GSE stream and the second GSE stream.

10. The multicast transmitting signal system of claim 9, further comprising:
a context information extractor configured to extract context information from the header-compressed IP stream which is generated by performing the header compression on the IP stream,
wherein the first signaling information further includes the extracted context information.

11. The multicast transmitting signal system of claim 10,
wherein the header-compressed IP stream includes at least one IR, Initialization and Refresh, packet, at least one IR-DYN, IR-Dynamic, packet, and compressed packets, and
wherein the context information is static chain information included in a header of the at least one IR packet.

12. The multicast transmitting signal system of claim 10,
wherein the second signaling information includes the first signaling information, and
wherein the second signaling information further includes link control data and network control data, and
wherein the network control data includes at least identification information for identifying a multicast stream including the multicast service data, information for indicating whether the header compression is performed on the IP stream, and address and port information for identifying the IP stream.

13. The multicast transmitting signal system of claim 9, further comprising:
a third generator configured to generate third signaling information including information related to system operation,
wherein the third signaling information includes a plurality of signaling files, and
wherein the third signaling information is included in at least one IP packet having a fixed IP address and a fixed port number.

14. The multicast transmitting signal system of claim 13,
wherein a header of the at least one IP packet including the third signaling information further includes a signaling header, and
wherein the signaling header includes information for identifying each of the plurality of signaling files.

## Patentansprüche

1. Verfahren zum Übertragen eines Multicast-Signals (S6000) in einem Multicast-Übertragungssignalsystem, wobei das Verfahren umfasst:
Durchführen einer Header-Komprimierung an einem Stream eines Internetprotokolls, IP, der aus IP-Paketen besteht, die Multicast-Dienstdaten für einen Multicast-Dienst enthalten, und einen header-komprimierten IP-Stream ausgeben;
Generieren (S6010) von ersten Signalisierungsinformationen, die Informationen in Bezug auf die Header-Komprimierung enthalten;
Generieren (S6010) von zweiten Signalisierungsinformationen, die Informationen in Bezug auf den Multicast-Dienst enthalten;
**dadurch gekennzeichnet, dass** es ferner umfasst:
Kapseln des header-komprimierten IP-Streams in einen ersten Stream einer Generic Stream Encapsulation, GSE;
Kapseln der ersten Signalisierungsinformationen und der zweiten Signalisierungsinformationen in einen zweiten GSE-Stream; und
Übertragen des ersten GSE-Streams und des zweiten GSE-Streams.

2. Verfahren nach Anspruch 1, ferner umfassend:
Extrahieren von Kontextinformationen aus dem header-komprimierten IP-Stream, die durch Durchführen der Header-Komprimierung auf dem IP-Stream generiert werden,
wobei die erste Signalisierungsinformationen ferner die extrahierten Kontextinformationen enthalten.

3. Verfahren nach Anspruch 2,
wobei der header-komprimierte IP-Stream mindestens ein Paket einer Initialisierung und Aktualisierung, IR, mindestens ein Paket einer IR-Dynamic, IR-DYN, und komprimierte Pakete enthält, und
wobei die Kontextinformationen statische Ketteninformationen sind, die in einem Header des mindestens einen IR-Pakets enthalten sind.

4. Verfahren nach Anspruch 2,
wobei die zweiten Signalisierungsinformationen die ersten Signalisierungsinformationen enthalten, und
wobei die zweiten Signalisierungsinformationen ferner Link-Steuerungsdaten und Netzwerksteuerungsdaten enthalten.

5. Verfahren nach Anspruch 4,
wobei die Netzwerksteuerungsdaten mindestens Identifikationsinformationen zum Identifizieren eines Multicast-Streams enthalten, der die Multicast-Dienstdaten enthält, Informationen zum Anzeigen, ob die Header-Komprimierung am IP-Stream durchgeführt wird, und Adress- und Port-Informationen zum Identifizieren des IP-Streams.

6. Verfahren nach Anspruch 1, ferner umfassend:
Generieren von dritten Signalisierungsinformationen, die Informationen in Bezug auf den Systembetrieb enthalten,
wobei die dritten Signalisierungsinformationen eine Vielzahl von Signalisierungsdateien enthalten, und
wobei die dritten Signalisierungsinformationen in mindestens einem IP-Paket enthalten sind, das eine feste IP-Adresse und eine feste Port-Nummer aufweist.

7. Verfahren nach Anspruch 6,
wobei ein Header des mindestens einen IP-Pakets, das die dritten Signalisierungsinformationen enthält, ferner einen Signalisierungs-Header enthält, und
wobei der Signalisierungs-Header Informationen zum Identifizieren jeder der Vielzahl von Signalisierungsdateien enthält.

8. Verfahren nach Anspruch 1,
wobei der erste GSE-Stream und der zweite GSE-Stream über einen unterschiedlichen physikalischen Link übertragen werden.

9. Multicast-Übertragungssignalsystem zum Übertragen eines Multicast-Signals, wobei das Multicast-Übertragungssignalsystem umfasst:
einen Header-Komprimierer (2014), der konfiguriert ist, um eine Header-Komprimierung durchzuführen an einem Stream eines Internetprotokolls, IP, der aus IP-Paketen besteht, die Multicast-Dienstdaten für einen Multicast-Dienst enthalten, und einen header-komprimierten IP-Stream auszugeben;
einen ersten Generator, der konfiguriert ist, um erste Signalisierungsinformationen zu generieren, die Informationen in Bezug auf die Header-Komprimierung enthalten;
einen zweiten Generator, der konfiguriert ist, um zweite Signalisierungsinformationen zu generieren, die Informationen in Bezug auf den Multicast-Dienst enthalten;
**dadurch gekennzeichnet, dass** es ferner umfasst:
einen ersten Kapseler (2015), der konfiguriert ist, um den header-komprimierten IP-Stream in einen ersten Stream einer Generic Stream Encapsulation, GSE, zu kapseln;
einen zweiten Kapseler (2012), der konfiguriert ist, um die ersten Signalisierungsinformationen und die zweiten Signalisierungsinformationen in einen zweiten GSE-Stream zu kapseln; und
einen Sender, der konfiguriert ist, um den ersten GSE-Stream und den zweiten GSE-Stream zu übertragen.

10. Multicast-Übertragungssignalsystem nach Anspruch 9, ferner umfassend:
einen Kontextinformationsextraktor, der konfiguriert ist, um Kontextinformationen aus dem header-komprimierten IP-Stream zu extrahieren, der durch Durchführen der Header-Komprimierung auf dem IP-Stream generiert wird,
wobei die ersten Signalisierungsinformationen ferner die extrahierten Kontextinformationen enthalten.

11. Multicast-Übertragungssignalsystem nach Anspruch 10,
wobei der header-komprimierte IP-Stream mindestens ein Paket einer Initialisierung und Aktualisierung, IR, mindestens ein Paket einer IR-Dynamic, IR-DYN, und komprimierte Pakete enthält, und
wobei die Kontextinformationen statische Ketteninformationen sind, die in einem Header des mindestens einen IR-Pakets enthalten sind.

12. Multicast-Übertragungssignalsystem nach Anspruch 10,
wobei die zweiten Signalisierungsinformationen die ersten Signalisierungsinformationen enthalten, und
wobei die zweiten Signalisierungsinformationen ferner Link-Steuerungsdaten und Netzwerksteuerungsdaten enthalten, und
wobei die Netzwerksteuerungsdaten mindestens Identifikationsinformationen zum Identifizieren eines Multicast-Streams enthalten, der die Multicast-Dienstdaten enthält, Informationen zum Anzeigen, ob die Header-Komprimierung am IP-Stream durchgeführt wird, und Adress- und Port-Informationen zum Identifizieren des IP-Streams.

13. Multicast-Übertragungssignalsystem nach Anspruch 9, ferner umfassend:
einen dritten Generator, der konfiguriert ist, um dritte Signalisierungsinformationen zu generieren, die Informationen in Bezug auf den Systembetrieb enthalten,
wobei die dritten Signalisierungsinformationen eine Vielzahl von Signalisierungsdateien enthalten, und
wobei die dritten Signalisierungsinformationen in mindestens einem IP-Paket enthalten sind, das eine feste IP-Adresse und eine feste Port-Nummer aufweist.

14. Multicast-Übertragungssignalsystem nach Anspruch 13,
wobei ein Header des mindestens einen IP-Pakets, das die dritten Signalisierungsinformationen enthält, ferner einen Signalisierungs-Header enthält, und
wobei der Signalisierungs-Header Informationen zum Identifizieren jeder der Vielzahl von Signalisierungsdateien enthält.

## Revendications

1. Procédé d'émission d'un signal de multidiffusion (S6000) dans un système de signal d'émission de multidiffusion, le procédé comprenant :
réaliser une compression d'en-tête sur un flux IP, protocole Internet, constitué de paquets IP comprenant des données de service de multidiffusion pour un service de multidiffusion et la sortie d'un flux IP à en-tête compressé ;
générer (S6010) des premières informations de signalisation comprenant des informations liées à la compression d'en-tête ;
générer (S6010) des deuxièmes informations de signalisation comprenant des informations liées au service de multidiffusion ;
**caractérisé en ce qu'**il comprend en outre :
encapsuler le flux IP à en-tête compressé dans un premier flux GSE, encapsulation de flux générique ;
encapsuler les premières informations de signalisation et les deuxièmes informations de signalisation dans un second flux GSE ; et
émettre le premier flux GSE et du second flux GSE.

2. Procédé selon la revendication 1, comprenant en outre :
extraire des informations de contexte du flux IP à en-tête compressé qui est généré en réalisant la compression d'en-tête sur le flux IP,
dans lequel les premières informations de signalisation comprennent en outre les informations de contexte extraites.

3. Procédé selon la revendication 2,
dans lequel le flux IP à en-tête compressé comprend au moins un paquet IR, initialisation et rafraîchissement, au moins un paquet IR-DYN, IR-dynamique, et des paquets compressés, et
dans lequel les informations de contexte sont des informations de chaîne statique comprises dans un en-tête de l'au moins un paquet IR.

4. Procédé selon la revendication 2,
dans lequel les deuxièmes informations de signalisation comprennent les premières informations de signalisation, et
dans lequel les deuxièmes informations de signalisation comprennent en outre des données de contrôle de liaison et des données de contrôle de réseau.

5. Procédé selon la revendication 4,
dans lequel les informations de contrôle de réseau comprennent au moins des informations d'identification pour identifier un flux de multidiffusion comprenant les données de service de multidiffusion, des informations pour indiquer si la compression d'en-tête est réalisée sur le flux IP, et des informations d'adresse et de port pour identifier le flux IP.

6. Procédé selon la revendication 1, comprenant en outre :
générer des troisièmes informations de signalisation comprenant des informations liées à une opération de système,
dans lequel les troisièmes informations de signalisation comprennent une pluralité de fichiers de signalisation, et
dans lequel les troisièmes informations de signalisation sont comprises dans au moins un paquet IP ayant une adresse IP fixe et un numéro de port fixe.

7. Procédé selon la revendication 6,
dans lequel un en-tête de l'au moins un paquet IP comprenant les troisièmes informations de signalisation comprend en outre un en-tête de signalisation, et
dans lequel l'en-tête de signalisation comprend des informations pour identifier chacun de la pluralité de fichiers de signalisation.

8. Procédé selon la revendication 1,
dans lequel le premier flux GSE et le second flux GSE sont émis par le biais d'une liaison physique différente.

9. Système de signal d'émission de multidiffusion pour émettre un signal de multidiffusion, le système de signal d'émission de multidiffusion comprenant :
un compresseur d'en-tête (2014) configuré pour réaliser une compression d'en-tête sur un flux IP, protocole Internet, constitué de paquets IP comprenant des données de service de multidiffusion pour un service de multidiffusion et sortir un flux IP à en-tête compressé ;
un premier générateur configuré pour générer des premières informations de signalisation comprenant des informations liées à la compression d'en-tête ;
un deuxième générateur configuré pour générer des deuxièmes informations de signalisation comprenant des informations liées au service de multidiffusion ;
**caractérisé en ce qu'**il comprend en outre :
un premier encapsulateur (2015) configuré pour encapsuler le flux IP à en-tête compressé dans un premier flux GSE, encapsulation de flux générique ;
un second encapsulateur (2012) configuré pour encapsuler les premières informations de signalisation et les deuxièmes informations de signalisation dans un second flux GSE ; et
un émetteur configuré pour émettre le premier flux GSE et le second flux GSE.

10. Système de signal d'émission de multidiffusion selon la revendication 9, comprenant en outre :
un extracteur d'informations de contexte configuré pour extraire des informations de contexte du flux IP à en-tête compressé qui est généré en réalisant la compression d'en-tête sur le flux IP,
dans lequel les premières informations de signalisation comprennent en outre les informations de contexte extraites.

11. Système de signal d'émission de multidiffusion selon la revendication 10,
dans lequel le flux IP à en-tête compressé comprend au moins un paquet IR, initialisation et rafraîchissement, au moins un paquet IR-DYN, IR dynamiques, et des paquets compressés, et
dans lequel les informations de contexte sont des informations de chaîne statique comprises dans un en-tête de l'au moins un paquet IR.

12. Système de signal d'émission de multidiffusion selon la revendication 10,
dans lequel les deuxièmes informations de signalisation comprennent les premières informations de signalisation, et
dans lequel les deuxièmes informations de signalisation comprennent en outre des données de contrôle de liaison et des données de contrôle de réseau, et
dans lequel les informations de contrôle de réseau comprennent au moins des informations d'identification pour identifier un flux de multidiffusion comprenant les données de service de multidiffusion, des informations pour indiquer si la compression d'en-tête est réalisée sur le flux IP, et des informations d'adresse et de port pour identifier le flux IP.

13. Système de signal d'émission de multidiffusion selon la revendication 9, comprenant en outre :
un troisième générateur configuré pour générer des troisièmes informations de signalisation comprenant des informations liées à une opération de système,
dans lequel les troisièmes informations de signalisation comprennent une pluralité de fichiers de signalisation, et
dans lequel les troisièmes informations de signalisation sont comprises dans au moins un paquet IP ayant une adresse IP fixe et un numéro de port fixe.

14. Système de signal d'émission de multidiffusion selon la revendication 13,
dans lequel un en-tête de l'au moins un paquet IP comprenant les troisièmes informations de signalisation comprend en outre un en-tête de signalisation, et
dans lequel l'en-tête de signalisation comprend des informations pour identifier chacun de la pluralité de fichiers de signalisation.
